# FASCICULE DE BREVET EUROPEEN

(11) **EP 1 313 641 B1**
(45) Date de publication et mention de la délivrance du brevet: **27.07.2005**
(21) Numéro de dépôt: 00969119.7
(22) Date de dépôt: 19.10.2000
(51) Int. Cl.: B62M 1/02

(54) **DISPOSITIF POUR PEDALIER**
KURBELARMANORDNUNG
PEDAL ASSEMBLY DEVICE

(30) Priorité: 25.10.1999 CA 2290097
(43) Date de publication de la demande: 28.05.2003
(73) Titulaire: Jacques, André, London SW7 4UB (GB)
(72) Inventeur: Jacques, André, London SW7 4UB (GB)
(86) Numéro de dépôt international: PCT/CA2000/001204
(87) Numéro de publication internationale: WO 2001/030640

(56) Documents cités:
- WO-A-98/05549
- BE-A- 398 350
- CH-A- 540 812
- FR-A- 896 837
- US-A- 4 909 526
- US-A- 5 662 006

## Description

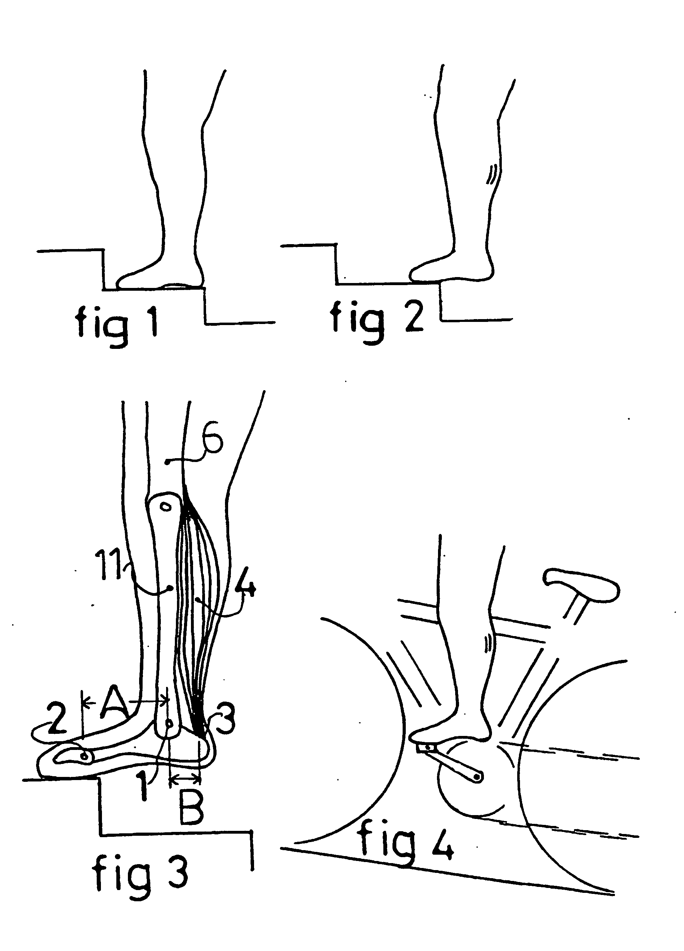

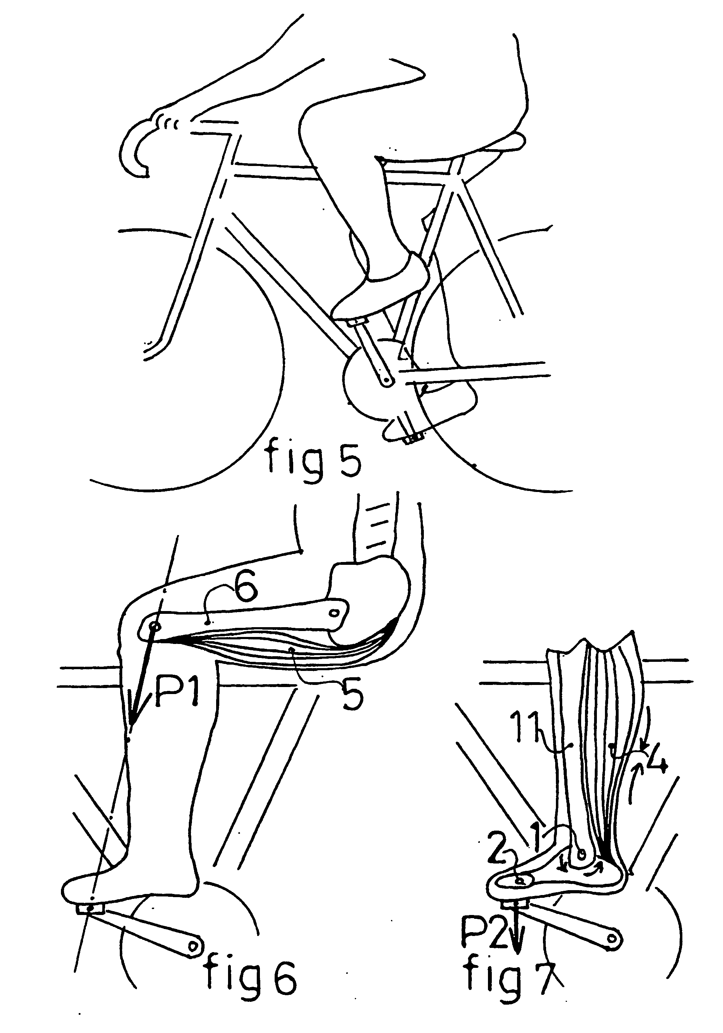

La fig 1 illustre la façon normale de monter un escalier: on pose le talon sur la marche. La fig 2 illustre la façon anormale de monter un escalier: on pose seulement le bout du pied sur la marche, le talon étant dans le vide, ce qui oblige le mollet à exercer une tension sur le talon égale à TROIS FOIS le poids de la personne (évidemment, dans le cas de la fig 1, le mollet ne force pas). Pourquoi TROIS FOIS, et non pas DEUX ou QUATRE fois? Voir la fig 3: le rapport A/B est de TROIS, où A est la distance entre l'articulation de l'orteil (2) et l'articulation de la cheville (1), et B est la distance entre (1) et le point d'attache(3) du mollet (4) sur l'os du talon(par l'intermédiaire du tendon d'Achille). Tentez cette expérience: supposons que vous ayez un escalier de 40 étages à monter; vous commencez par grimper les 40 étages en posant les talons sur les marches comme dans la fig 1: vous êtes fatigué, mais vous parvenez en haut. Le lendemain(pour avoir le temps de récupérer l'énergie perdue), essayez de monter ces 40 étages mais en montant comme dans la fig 2,c'est-à-dire sur le bout des pieds, ce qui vous oblige à forcer continuellement des mollets avec une intensité égale à TROIS FOIS votre poids. N.B.: faites-le dans les mêmes conditions d'expérimentation que le jour d'avant (il faut comparer des pommes avec des pommes), c'est-à-dire montez à la même vitesse que la veille et, entre deux étages, ne vous reposez pas en posant les talons par terre. Selon vous, combien d'étages pourrez vous monter, à dépense d'énergie égale avec le jour d'avant? La limite qu'il est humainement IMPOSSIBLE de dépasser est de VINGT étages (donc, LA MOITIÉ des 40 étages)! SI vous parvenez à monter jusqu'au vingtième étage en gardant les talons dans le vide, vous aurez dépensé BEAUCOUP PLUS d'énergie que le jour d'avant quand vous avez monté les 40 étages normallement; donc, vous depensez 2 FOIS PLUS d'énergie (au minimum) en montant avec les talons dans le vide qu'en montant normallement (les talons sur les marches). Regardez la fig 4: elle illustre le pied d'un cycliste MONTANT UNE CÔTE en pédalant en position DEBOUT. Cette position du pied sur la pédale est celle recommandée par les experts: l'articulation des orteils repose sur l'axe de la pédale, tandis que LE TALON EST DANS LE VIDE, ce qui oblige le mollet à forcer avec une intensité égale à TROIS FOIS le poids du cycliste, COMME DANS LE CAS DE LA FIG 2: ...monter une côte en pédalant debout est ANALOGUE au fait de monter un escalier les talons DANS LE VIDE: les figures 2 et 4 représentent UN MÊME PHÉNOMÈNE... En effet, le pied DESCENDS par rapport au cadre de la bicyclette, mais, comme la bicyclette MONTE la côte, le résultat net est que le pied MONTE par rapport À LA CÔTE. Pour DIVISER PAR DEUX (au minimum) la consommation d'énergie quand on monte une côte en pédalant debout, il suffit de REMPLACER LES PÉDALES par "quelque chose" qui SUPPORTE LES TALONS, de façon à éviter d'avoir à forcer avec les mollets, d'où une économie d'énergie sans perte de puissance propulsive! Il n'y a pas de perte de puissance car la pression utilisée est toujours égale AU POIDS du cycliste, peu importe que les talons soient supportés ou non; c'est similaire avec les fig 1 et 2:la pression sur la marche est toujours égale au poids de la personne qui monte, peu importe que le talon soit sur la marche ou dans le vide. Les explications qui vont maintenant suivre sont simplifiées au maximum; les explications scientifiques complexes ont été volontairement omises de façon à ce que le lecteur ne perde pas le fil conducteur du document. IMPORTANT: plus loin dans ce document, plusieurs MÉCANISMES sont décrits; certains d'entre eux ont plus de mérite créatif que d'autres; certains mécanismes ont des avantages que d'autres n'ont pas. Mais ces divers mécanismes ont un point commun: ils accomplissent tous LA MÊME FONCTION, soit permettre d'ÉVITER LA CONTRACTION DES MOLLETS en fournissant UN SUPPORT aux talons(directement ou indirectement. Mais l'importance de l'actuel document NE PROVIENT PAS de ces mécanismes; LA PIERRE ANGULAIRE qui soutient tout ce document, ce sont LES PREUVES (expérimentales et théoriques) que LA CONTRACTION DES MOLLETS NE PEUT PAS AUGMENTER LA PRESSION SUR LES PÉDALES et que, par conséquent, il suffit de remplacer les pédales par un mécanisme permettant d'éviter la contraction des mollets (en soutenant les talons), ce qui permets une très grande économie d'énergie SANS PERTE DE PRESSION de propulsion! L'invention est définie par un dispositif selon la revendication 1. Les revendications dépendantes 2 à 10 représentent des modes d'exécution préférés de l'invention.

L'inventeur a fait une DÉCOUVERTE SCIENTIFIQUE concernant le fonctionnement DE LA JAMBE quand on l'utilise pour appuyer surUNE PÉDALE: il a découvert que LE MONDE ENTIER a été induit en erreur par une ILLUSION D'OPTIQUE laissant croire(faussement) "que la contraction du mollet AUGMENTAIT la pression sur la pédale". C'EST CELA l'essentiel de l'actuel document et NON PAS les MÉCANISMES décrits à la fin; bien sur, ces mécanismes sont importants, mais uniquement dans la mesure où ils permettent d'utiliser efficacement le PRINCIPE de cette DÉCOUVERTE SCIENTIFIQUE. Ce sont LES PREUVES (experimentales ET théoriques) à l'effet que "la contraction du mollet NE PEUT PAS augmenter la pression sur la pédale" qui donnent une valeur PROUVÉE SCIENTIFIQUEMENT à ces mécanismes.
Le véritable role du mollet.
Nous avons déjà démontré que le mollet est INUTILE dans le cas de la position de pédalage DEBOUT, grâce à la comparaison ESCALIER/CYCLISTE EN CÔTE que vous avez lu au début; nous allons bientôt PROUVER que le mollet est également INUTILE dans la position ASSIS. Donc, LE MOLLET est TOTALEMENT INUTILE dans le cyclisme "à pédales" puisque sa contraction NE PEUT PAS augmenter la pression sur la pédale et, en plus, le mollet est NUISIBLE car il consomme une grande quantité d'énergie inutilement.Le mollet est inutile et nuisible dans LE CAS PARTICULIER des PÉDALES; mais dans d'autres situations où IL N'Y A PAS USAGE DE PÉDALES, le mollet est INDISPENSABLE: se tenir debout sans bouger, marcher, courir. Le mollet est indispensable pour GARDER L'ÉQUILIBRE quand on se tient DEBOUT sans bouger: sans lui, NOUS TOMBERIONS PAR EN AVANT. En effet, quand on se tient debout et immobile, aussitôt que notre corps penche UN PEU vers l'avant, nos mollets se contractent UN PEU (et pendant une fraction de seconde seulement) en tirant LÉGÈREMENT sur les talons pour REDRESSER notre corps. Ce processus À PEINE PERCEPTIBLE se poursuit continuellement; C'EST CELA le VRAI rôle du mollet et ce processus requiert TRÈS PEU d'énergie car le talon TOUCHE LE SOL: c'est pour cela qu'on peut se tenir debout et immobile pendant très longtemps SANS S'ÉPUISER. Dans le cas de LA MARCHE, le mollet sert à DEUX usages:
- comme dans le cas de l'immobilité debout, le mollet dépense UN PEU d'énergie pour NOUS MAINTENIR EN ÉQUILIBRE,
- dans la marche, le mollet exerce aussi une LÉGÈRE force PROPULSIVE vers l'avant pour nous permettre D'AVANCER.
Quand on marche, le talon NE TOUCHE PAS au sol LA MOITIÉ du temps (la jambe à l'arrière) et c'est pendant que le talon ne touche PAS le sol que le mollet force et exerce sa force propulsive vers l'avant (toujours la jambe arrièe); mais, POINT TRÈS IMPORTANT, quand le mollet de la jambe arrière force parce que le talon est en l'air, 90% du poids du corps est supporté PAR L'AUTRE JAMBE (la jambe en avant) dont le talon TOUCHE LE SOL ! Donc, la force de contraction du mollet requise pour nous faire avancer quand on marche EST TRÈS FAIBLE. En effet, on peut marcher plusieurs kilomètres SANS S'ÉPUISER à condition que LE TALON du pied en avant TOUCHE LE SOL à chaque pas. Pour vous en convaincre, tentez de parcourir plusieurs kilomètres en marchant, mais en ne mettant JAMAIS les talons par terre (en marchant continuellement sur le bout des pieds) : vous allez être COMPLÈTEMENT ÉPUISÉ au bout de quelques centaines de mètres seulement! (situation analogue au fait de monter 30 étages les talons SUR les marches versus TRÈS PEU d'étages les talons
DANS LE VIDE). Donc, dans l'immobilité debout et dans la marche, la contraction du mollet est INDISPENSABLE et elle est UTILE puisqu'elle remplit une fonction précise: nous permettre de GARDER L'ÉQUILIBRE et nous faire AVANCER. Donc, l'énergie dépensée PAR LE MOLLET quand on se tient debout ou qu'on marche est BIEN UTILISÉE à remplir un rôle UTILE et la quantité d'énergie dépensée est FAIBLE, CONTRAIREMENT AUX PÉDALES où la contraction du mollet ne remplit AUCUN rôle utile et dépense une TRÈS GRANDE quantité d'énergie! Dans la course à pied, l'effort demandé aux mollets est plus grand que dans la marche, mais cet effort est UTILE car il permets D'AUGMENTER notre vitesse(par rapport à la marche); dans les marathons, le coureur prends BIEN SOIN de poser le talon PAR TERRE (de la jambe AVANT qui supporte 90% du poids), ce qui fait que la contraction du mollet de la jambe qui propulse vers l'avant (la jambe ARRIÈRE) est DE BEAUCOUP inférieure à 3 FOIS LE POIDS du coureur (car la jambe ARRIÈRE supporte SEULEMENT 10% du poids du coureur: donc le mollet supporte 30% du poids du coureur versus 300%-soit 10 FOIS PLUS-quand on monte un escalier les talons dans le vide ou qu'on pédale debout car alors le mollet supporte 3 FOIS LE POIDS du coureur). Donc, dans la course, TOUTE l'énergie dépensée par le mollet est BIEN utilisée à remplir une fonction UTILE : nous permettre de nous déplacer PLUS VITE que dans la marche et la quantité d'énergie dépensée par les mollets est DIX FOIS plus petite que dans le pédalage DEBOUT (le mollet ne remplissant AUCUN rôle UTILE dans le cas de la pédale). Donc, quand on se tient debout immobile, le VRAI rôle du mollet est de nous éviter de tomber; quand on marche, le mollet dépense UN PEU PLUS d'énergie et celle-ci est BIEN employée puisqu'ON AVANCE; quand on court, le mollet dépense UN PEU PLUS d'énergie que dans la marche, mais celle-ci est BIEN employée puisqu'on avance PLUS VITE que dans la marche. PAR CONTRE, quand on monte un escalier les talons DANS LE VIDE ou qu'on pédale DEBOUT, le mollet accomplit un rôle INUTILE et NUISIBLE, inutile parce qu'il n'aide pas à monter l'escalier ou la côte plus plus vite, et nuisible parce qu'il consomme LA MOITIÉ (ou plus) de l'énergie sans raison : du pur gaspillage... CONCLUSION : le mollet n'est pas conçu pour exercer des efforts CONSIDÉRABLES (comme supporter 3 FOIS le poids) et pendant de LONGUES périodes de temps, surtout quand ça n'a AUCUNE utilité! BIO-mécaniquement, le molest visiblement conçu pour exercer de FAIBLES efforts pendant de COURTES périodes de temps, comme dans l'immobilité debout, la marche et la course.
Aspect SÉCURITAIRE :
contrairement aux pédales, les pieds NE PEUVENT PAS glisser avec cette invention; quand on passe dans un trou ou sur une bosse (même petite) avec un vélo À PÉDALES, nos pieds ont tendance à glisser et cela risque de nous faire perdre l'équilibre; l'invention proposée remplace les pédales par des plateformes qui supportent TOUT LE PIED, ce qui donne une très grande sécurité: les pieds NE PEUVENT PAS glisser bien qu'ils ne soient PAS attachés; ces plateformes sont munies de GUIDES DE POSITIONNEMENT du pied qui garantissent que le pied est automatiquement CORRECTEMENT placé; comme ces guides sont placés sur UN SEUL CÔTÉ de la plateforme, il est facile de poser RAPIDEMENT le pied par terre en cas d'arrêt brusque, et le repositionnement CORRECT du pied pour repartir est tout aussi rapide, tout cela se faisant sans avoir besoin DE REGARDER, ce qui accroît encore plus la securité.
Remarque: nous avons ici un problème de vocabulaire. En effet, le mot PÉDALER s'applique spécifiquement aux pédales elles mêmes; si ON ENLÈVE les pédales et on les remplace par ce qu'on appelle PLATEFORMES dans ce document, il faudrait logiquement employer un mot autre que "pédaler":le mot "plateformer" est ridicule. Pour le moment, pour régler temporairement le problème, nous allons continuer d'utiliser le mot PLATEFORME pour désigner "cette chose" qui remplace les pédales, et nous allons continuer d'utiliser le mot PÉDALER pour désigner l'utilisation des plateformes, faute de mieux, en attendant que les linguistes règlent ce problème.

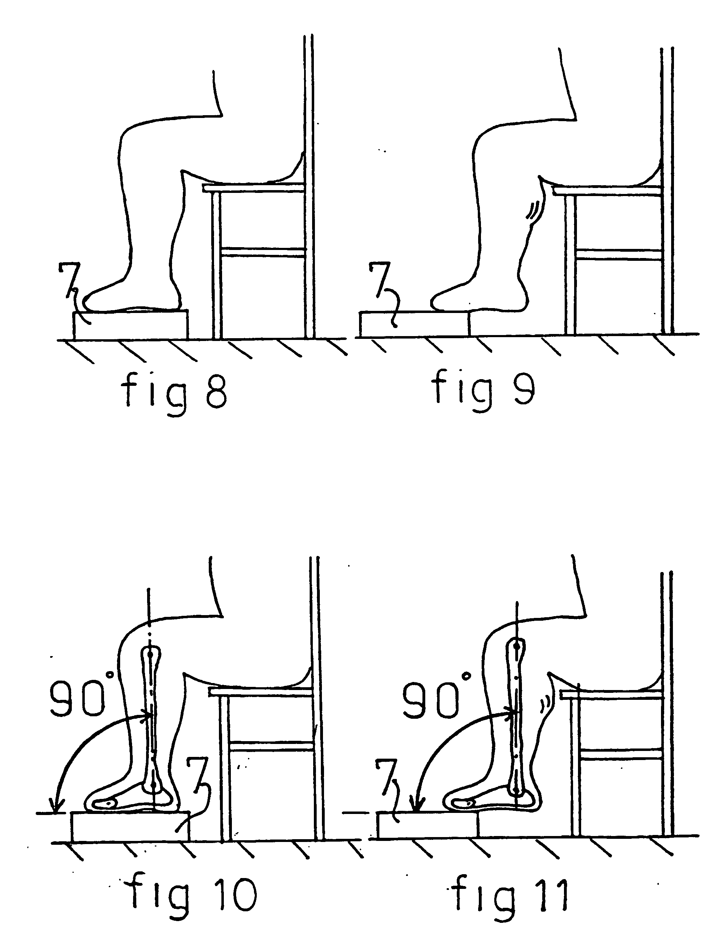

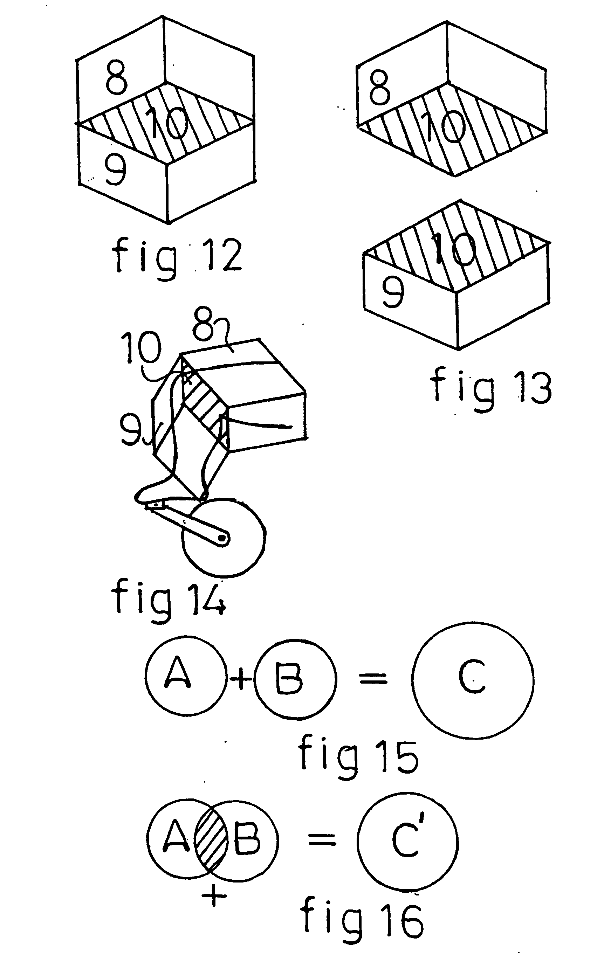

La fig 5 représente une jambe qui appuie sur une pédale en position assis. Ce dessin est-il NORMAL ? Bien sur que OUI: la position du pied sur la pédale est celle recommandée par les experts, l'articulation des orteils reposant sur l'axe de la pédale, le talon étant DANS LE VIDE. Si on demande à tout le monde(les experts, l'homme de la rue, les coureurs...) QUELS MUSCLES produisent la pression sur la pédale, TOUS vont finir par répondre LA MÊME CHOSE après réflexion, et vont dire CECI: "...la pression sur la pédale provient de DEUX sources, la première étant LA CUISSE et la deuxième étant LE MOLLET, ces deux forces S'ADDITIONNANT...". Un EXPERT va apporter plus de précisions et dire ceci (voir les figures 6 et 7) : "...la pression sur la pédale est constituée de DEUX forces qui S'ADDITIONNENT; la première provient de la contraction des muscles DE LA CUISSE (5, fig 6) qui poussent l'os de la cuisse (6) vers le bas, ce qui produit une première pression (P1) sur la pédale. La DEUXIÈME force sur la pédale (P2, fig 7) provient de la contraction DU MOLLET (4) qui tire le talon VERS LE HAUT, ce qui a tendance à faire tourner le pied autour de LA CHEVILLE (1), cela produisant un déplacement VERS LE BAS de l'articulation des orteils (2), ce qui produit une DEUXIÈME pression (P2) sur la pédale. La pression TOTALE sur la pédale est LA SOMME de la pression provenant DE LA CUISSE (P1) lus la pression provenant DU MOLLET (P2)..." Remarque: les muscles illustrés (5, fig 6 et 4, fig 7) sont SYMBOLIQUES seulement; ce n'est pas la structure réelle des muscles qui est illustrée. Par exemple, le mollet(4, fig 7)est constitué des deux jumeaux et du soléaire (non illustrés); quant au "muscle" (5, fig 6), il SYMBOLISE la poussée vers le bas de la cuisse; en réalité, la poussée vers le bas de la cuisse est causée par DEUX muscles: LE GRAND FESSIER qui, en se contractant, pousse directement l'os de la cuisse vers le bas, et LE QUADRICEPS qui produit l'extension de la jambe: comme le pied doit demeurer sur la pédale, cette extension de la jambe produit un déplacement vers le bas de la cuisse car la pédale descends évidemment. Donc, ces deux muscles(fessier et quadriceps) produisent un déplacement vers le bas de la cuisse, et c'est cela qui est SYMBOLISÉ par le muscle 5, fig 6. En ce qui concerne le présent document, nous n'avons pas à nous préoccuper de la structure musculaire RÉELLE car nous faisons une étude purement MÉCANIQUE de la jambe: nous étudions 3 segments articulés (le pied, l'os de la jambe, et l'os de la cuisse réunis ensemble par des points de rotation (les articulations de la cheville et du genou), en nous concentrant SUR UN DÉTAIL PRÉCIS, soit d'étudier le rôle jouée par LE MOLLET d'un point de vue purement MÉCANIQUE.
Définition de L'ILLUSION D'OPTIQUE DE LA JAMBE.
Cette ILLUSION D'OPTIQUE est représentée par la fig 7: ce qu'on VISUALISE sur la fig 7 N'EST PAS VRAI: en réalité, la pression P2 est de ZÉRO car LE MOLLET, en se contractant, NE PEUT PAS exercer de pression sur la pédale! La TOTALITÉ de la pression sur la pédale provient UNIQUEMENT de LA CUISSE (la force P1 sur la fig 6)! C'est L'UTILISATION de la pédale qui OBLIGE le mollet à se contracter, puisque le talon est DANS LE VIDE (non-supporté). Comme la contraction du mollet NE PEUT PAS augmenter la pression sur la pédale (comme nous allons le prouver), cette contraction du mollet est une PERTE PURE d'énergie; l'invention proposée ici ÉLIMINE cette perte d'énergie en fournissant un support au talon, SANS PERTE DE PRESSION pour la propulsion puisque la TOTALITÉ de cette pression provient UNIQUEMENT de la cuisse! Il y a une grande similitude entre la position de pédalage DEBOUT et la position ASSIS; debout, la contraction du mollet est de 3 fois LE POIDS du cycliste tandis que, assis, la contraction du mollet est de 3 fois LA PRESSION VERS LE BAS exercée PAR LA CUISSE : la seule différence entre les deux positions réside dans L'INTENSITÉ des forces en jeu. Exprimée en mots, L'ILLUSION D'OPTIQUE est "...le fait de croire que la contraction du mollet tire le talon VERS LE HAUT, ce qui fait TOURNER le pied autour de la cheville, ce qui produit un déplacement VERS LE BAS du bout du pied, ce qui AUGMENTE LA PRESSION SUR LA PÉDALE...".
Preuves EXPÉRIMENTALES de l'existence de l'illusion d'optique de la jambe et du gaspillage d'énergie qu'elle provoque. (Plus loin, des preuves THÉORIQUES seront données, ce qui éliminera définitivement tout doute de votre esprit.)
Tout ce qu'il faut comme matériel, c'est une chaise droite et un simple pèse-personne modèle portatif (ceux qu'on utilise habituellement pour connaître notre poids). Assoyez-vous et posez UN SEUL pied (le droit par exemple) sur le pèse-personne(7,fig 8)); laissez le pied gauche par terre à côté du pèse-personne. NE TRICHEZ PAS: n'essayez pas de vous crér des points d'appui avec vos mains (comme tirer sur les bras de la chaise) et n'essayez pas d'appuyer avec votre corps en vous penchant vers l'avant: restez droit sur la chaise et appuyez AVEC LA JAMBE SEULEMENT. Il est important que vous ne souleviez pas le pied gauche: il doit rester par terre (nous sommes instinctivement portés à soulever le pied gauche SANS Y PENSER: cela fausse les résultats). Répétez l'expérience PLUSIEURS FOIS pour vous assurer d'obtenir des résultats corrects. Nous allons effectuer deux tests (fig 8 et 9). Fig 8: dans le premier test, le talon doit être SUR le pèse -personne(7) de façon à ÉVITER la contraction du mollet. Vous avez compris l'astuce utilisée: grâce au pèse-personne, on peut MESURER la pression exercée par la jambe! Donc, ici,le pèse -personne joue le rôle d'un prototype de l'invention puisque le talon est supporté.
Fig 9: dans le deuxièe test, on place seulement LE BOUT DU PIED sur le pèse-personne(7), le talon étant DANS LE VIDE, ce qui OBLIGE le mollet à se contracter. Ici, le pèse-personne joue le rôle d'une PÉDALE conventionnelle, avec l'avantage qu'on peut MESURER la pression obtenue! Grâce à ces deux tests simples, on peut MESURER LA DIFFÉRENCE entre la pédale ordinaire et l'invention proposée. Ne vous contentez pas de LIRE l'expérience: EFFECTUEZ ces deux tests; ainsi vous pourrez vérifier PHYSIQUEMENT que cette ILLUSION D'OPTIQUE est une RÉALITE PHYSIQUE ! Vous allez être surpris des résultats.

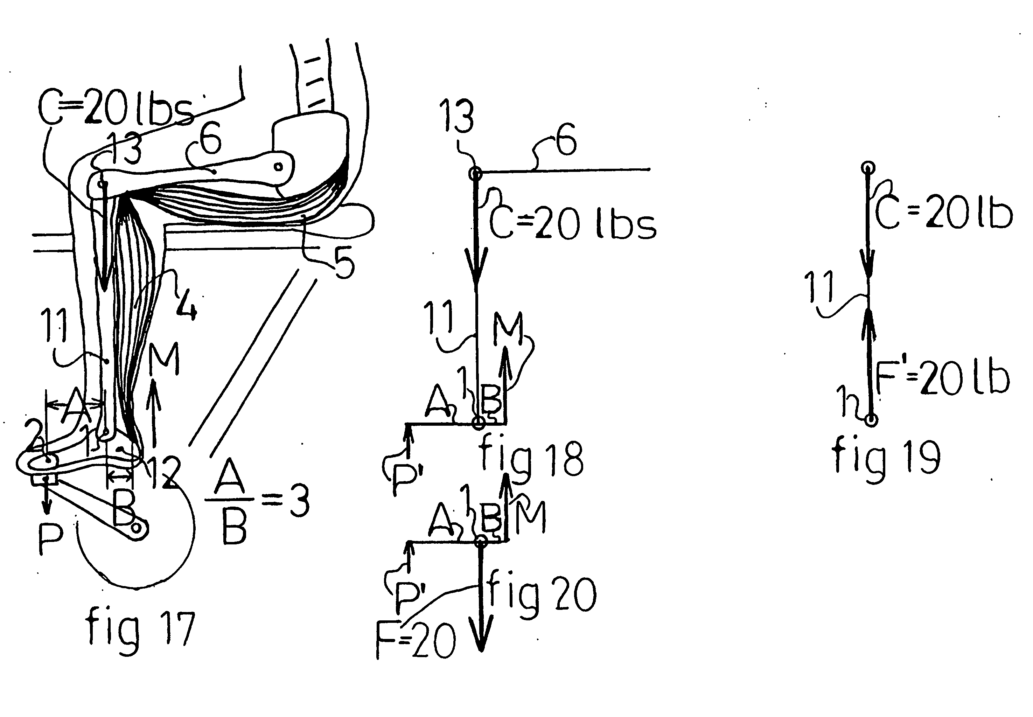

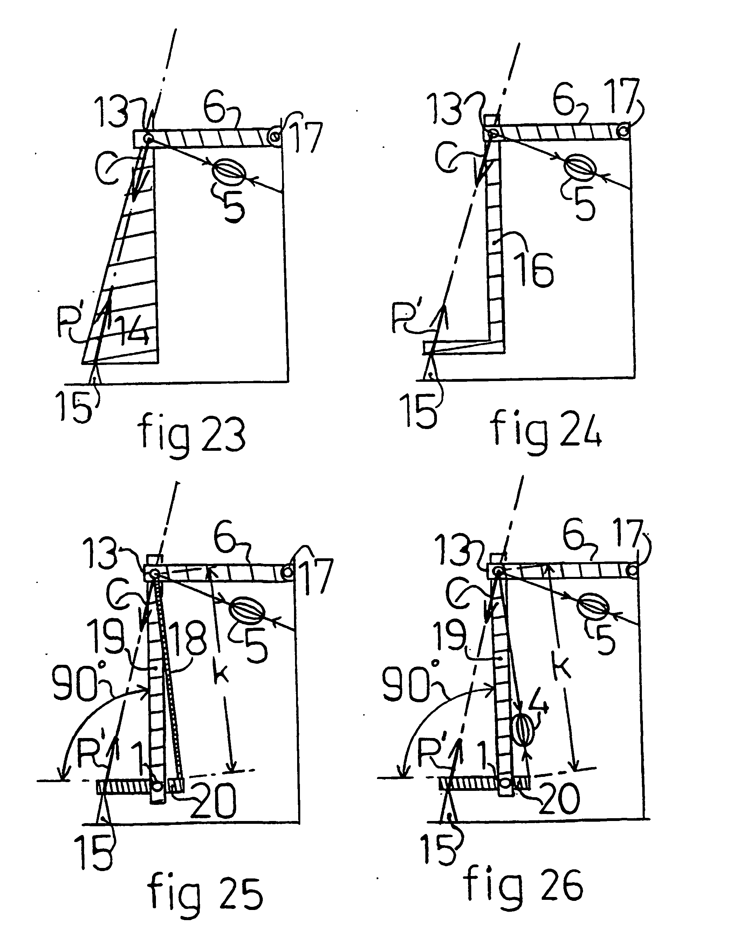

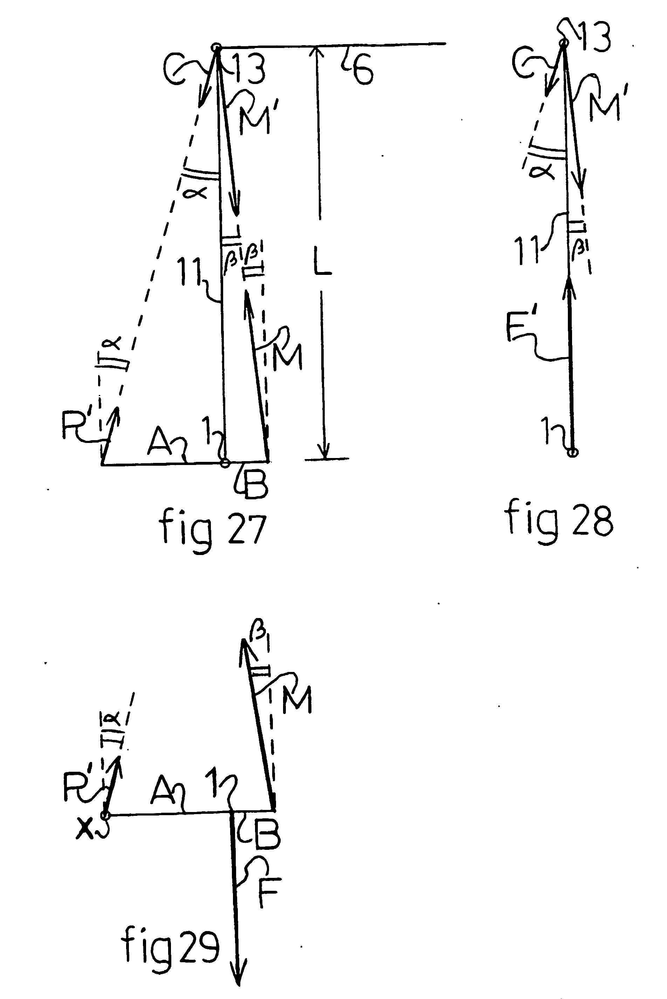

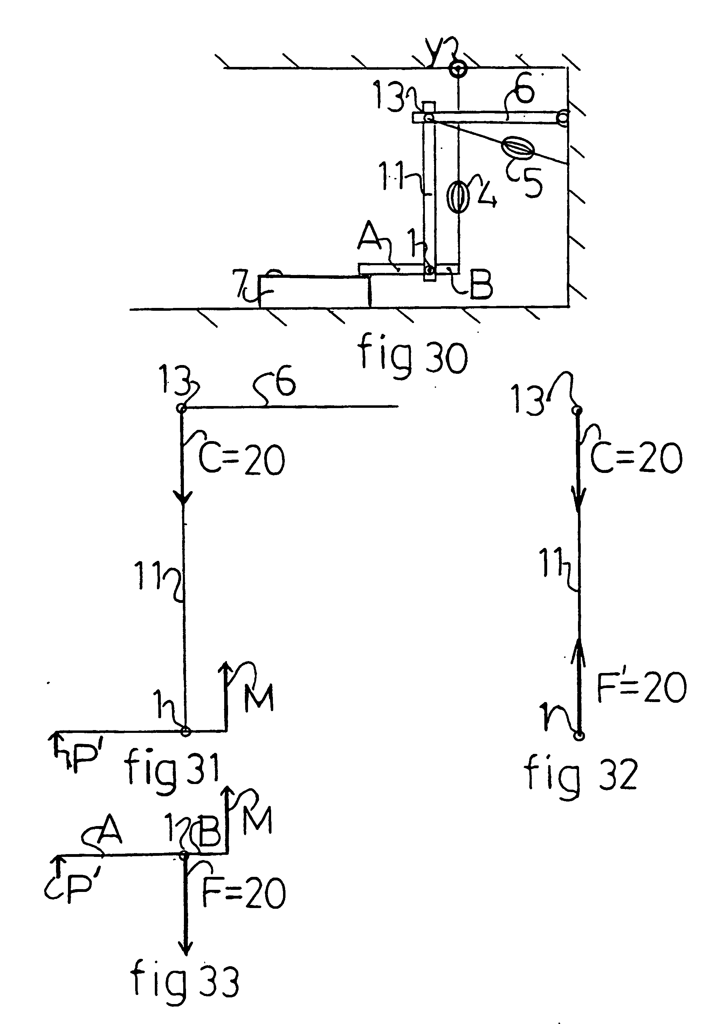

Les deux tests (fig 8 et 9) consistent à appuyer DE TOUTES VOS FORCES sur le pèse-personne (7) AVEC LA JAMBE SEULEMENT et de NOTER LA PRESSION obtenue. Ceci est important: n'essayez pas de donner un coup fort (rapide et brusque) vers le bas avec votre jambe; il faut plutôt appuyer LENTEMENT et GRADUELLEMENT pour faire augmenter la pression doucement jusqu'à sa valeur MAXIMUM, et noter le résultat obtenu. La seule différence entre les deux tests, c'est que le mollet ne force PAS DU TOUT dans le 1er test(fig 8: c'est l'invention) et qu'il force BEAUCOUP dans le 2ième test (fig 9: la pédale). Évidemment, LA CUISSE force avec LA MÊME INTENSITÉ dans les deux tests puisque vous appuyez DE TOUTES VOS FORCES avec votre cuisse. AVANT d'effectuer les deux tests, notez bien: SI ceci EST VRAI, c'est-à-dire que
"...la pression sur la pédale provient de DEUX sources, la première étant LA CUISSE et la deuxième étant LE MOLLET, ces deux forces S'ADDITIONNANT..."
alors, dans ce cas, en effectuant les deux tests, vous devriez normallement obtenir une pression PLUS GRANDE dans le DEUXIÈME test (fig 9) que dans le premier test (fig 8)parce que la cuisse ET le mollet forcent TOUS DEUX dans le deuxième test tandis que la cuisse SEULEMENT force dans le premier test. Comme la cuisse force avec LA MÊME intensité dans les deux tests (car on force AU MAXIMUM), alors, il faudrait OBLIGATOIREMENT que la pression dans le DEUXIÈME test soit PLUS GRANDE que la pression obtenue dans la premier test parce que, dans le deuxième test, la pression du mollet S'ADDITIONNE à celle de la cuisse. C'est ce que NOS YEUX semblent nous indiquer.Meme moi, QUI SUIS POURTANT L'INVENTEUR, avait de la difficulté À CROIRE ce qu'indiquait l'échelle graduée du pèse-personne, LE CONTRAIRE EXACT de ce que je croyais être vrai VISUELLEMENT. J'AI ALORS ÉTÉ OBLIGÉ D'ADMETTRE QUE J'ÉTAIS TROMPÉ PAR UNE ILLUSION D'OPTIQUE, que ce que JE VOYAIS avec mes yeux était FAUX ! Mais il restait à COMPRENDRE le phénomène et tenter de L'EXPLIQUER en termes SIMPLES. L'inventeur a effectué ces deux tests des dizaines de fois et il a TOUJOURS obtenu EXACTEMENT le même resultat, soit 54 livres de pression dans CHACUN des deux tests: la pression obtenue est EXACTEMENT la même, PEU IMPORTE que le mollet FORCE (fig 9) ou NE FORCE PAS (fig 8)! Il y a UNE SEULE conclusion possible: la contraction du mollet dans le DEUXIÈME test (fig 9) N'AUGMENTE PAS la pression sur le pèse-personne (donc LA PÉDALE)! Donc, quand on pédale ASSIS avec un vélo à pédales conventionnel, LA TOTALITÉ de la pression sur la pédale provient UNIQUEMENT de la contraction des muscles DE LA CUISSE: la contraction forcée DU MOLLET est une PERTE PURE d'énergie, et cette perte est ÉNORME, comme les deux prochains tests vont le démontrer !
- CONCLUSION :: la fig 7 represente une ILLUSION D'OPTIQUE! La pression P2 est de ZERO : cette pression N'EXISTE PAS, c'est une ILLUSION!
IMPORTANT : ce N'EST PAS un hasard si la pression est EXACTEMENT la même (54 livres) dans les DEUX tests, à la livre près! Cela PROUVE que LA TOTALITÉ de la pression provient UNIQUEMENT de LA CUISSE; en effet, si on force AU MAXIMUM de LA CUISSE dans CHACUN des deux tests alors, forcément, L'INTENSITÉ de la force est LA MÊME dans chaque test (le MAXIMUM du premier test est ÉGAL au MAXIMUM du deuxième test,évidemment). Dans le cas personnel de l'inventeur, ce MAXIMUM est de 54 livres; mais ce chiffre peut varier selon la condition physique particulière de la personne effectuant les tests. Mais une chose est CERTAINE: si vous obtenez disons 38 livres dans le premier test, vous devriez obtenir EXACTEMENT 38 livres dans le deuxième test À CONDITION d'effectuer CORRECTEMENT les deux tests (sans vous créer des points d'appui avec vos bras, en n'appuyant pas avec votre corps en vous penchant vers l'avant et, SURTOUT, en laissant le pied gauche PAR TERRE. Nous allons maintenant faire DEUX AUTRES expériences similaires pour vérifier EXPÉRIMENTALEMENT qu'il y a bel et bien DIVISION PAR DEUX (environ) de la consommation d'énergie en position ASSIS, cela SANS PERTE DE PRESSION pour la propulsion (i.e. À PUISSANCE ÉGALE avec un vélo à pédales ordinaire), quand on remplace les pédales par cette invention. Vous allez vivre PHYSIQUEMENT cette différence qui est ÉNORME. Ces deux tests ressemblent beaucoup aux deux tests précédents sauf qu'il faut les effectuer avec plus de précautions pour ne pas fausser les résultats. Prenez les mêmes précautions que dans les deux tests précédents: ne vous créez pas de point d'appui avec vos bras, ne vous penchez pas vers l'avant pour appuyer avec votre corps et, surtout, laissez le pied gauche PAR TERRE (nous sommes instinctivement portés à le soulever sans nous en rendre compte, ce qui fausse les résultats). Il faut prendre la précaution additionnelle suivante: dans les deux tests, il est INDISPENSABLE que la jambe soit PERPENDICULAIRE (90 degrés)au pèse-persone(7) comme illustré par les fig 10 et 11. Si pèse-personne a tendance à glisser vers l'avant, mettez un objet lourd devant. Dans ces deux tests, il s'agit d'obtenir GRADUELLEMENT la pression MAXIMUM comme dans les deux tests précédents, mais le but visé est DE MAINTENIR cette pression maximum LE PLUS LONGTEMPS POSSIBLE et de noter votre NIVEAU DE FATIGUE quand vous avez le talon SUR le pèse-personne (fig 10: c'est l'invention ) COMPARÉ À votre niveau de fatigue quand le talon est DANS LE VIDE (fig 11: la pédale ordinaire). Vous devez gardez la pression maximum CONSTANTE pendant tout le temps du test: si par exemple vous avez obtenu 38 livres dans les deux tests précédents, vous devrez MAINTENIR ce 38 livres tout le temps du test, sans jamais que la pression descende SOUS ce chiffre de 38 livres. Répétez ces tests plusieurs fois pour être certain des résultats. Ces deux tests de consommation d'énergie (par mesure du NIVEAU DE FATIGUE) vont vous donner des résultats ressemblant à ceci:
PREMIER TEST (talon SUR le pèse-personne, fig 10) : ici, le mollet NE CONSOMME PAS d'énergie car il ne se contracte pas, ce qui est l'équivalent de l'invention. Résultat obtenu par l'inventeur:
   a) il a pu MAINTENIR pendant 90 secondes une pression MAXIMUM de 54 livres,
   b) au bout de 45 secondes environ apres le début du test, il commence à ressentir une légère douleur musculaire à la cuisse,
   c) 90 secondes après le début du test, cette douleur musculaire devient difficile à supporter
   d)l'inventeur arrête le test, mais il note que son rythme cardiaque N'A PAS augmenté de façon appréciable et il n'est PAS essouflé; SEULE LA DOULEUR à la cuisse l'a conduit à arrêter le test, ET NON PAS LA FATIGUE due à une grande consommation d'énergie: sans cette douleur, l'inventeur aurait pu MAINTENIR la pression MAXIMUM de 54 livres PLUS LONGTEMPS que 90 secondes...
DEUXIÈME TEST (talon DANS LE VIDE, fig 11) : ici, le mollet DOIT se contracter avec une intensité de 3 FOIS 54 livres, soit 162 livres; le mollet depense ÉNORMEMENT d'énergie. Ce test est l'équivalent de LA PÉDALE HABITUELLE.
Résultat obtenu par l'inventeur:
a) dans LES PREMIÈRES SECONDES du test, l'inventeur réalise tout de suite qu'il est TRÈS difficile D'ATTEINDRE la pression MAXIMUM de 54 livres (ce qui a été TRÈS FACILE dans le premier test!),
b) au bout d'environ 30 secondes après avoir réussi à ATTEINDRE et MAINTENIR ce 54 livres, l'inventeur constate une grande raideur DU MOLLET: il commence à ressentir une douleur au TENDON D'ACHILLE (qui relie le mollet au talon),
c) 45 secondes après avoir réussi à ATTEINDRE et MAINTENIR ce 54 livres, la douleur À LA CUISSE s'ajoute à celle du tendon d'Achille; l'inventeur réalise que son rythme cardiaque commence a augmenter DE FAÇON NOTABLE et que sa respiration devient plus rapide; la jambe au complet COMMENCE A TREMBLER,
d) au bout de 60 secondes après avoir réussi a ATTEINDRE et MAINTENIR ce 54 livres, l'inventeur est TOTALEMENT INCAPABLE de MAINTENIR la pression MAXIMUM de 54 livres: la pression BAISSE RAPIDEMENT...
LA COMPARAISON ENTRE LES RÉSULTATS DE CES 2 TESTS permets d'affirmer sans risque d'erreur que la consommation d'énergie est DEUX FOIS plus grande (environ) dans le deuxième test que dans le premier test, le 2ième test étant LA PÉDALE et le premier test étant l'invention proposée. DONC, quand on utilise l'invention en position ASSIS, il y a DIVISION PAR DEUX (environ) de la consommation d'énergie comparé au vélo à pédales, SANS PERTE DE PUISSANCE (car la pression obtenue est LA MÊME dans les deux tests, soit 54 livres)!
Analyse THÉORIQUE du fonctionnement de la jambe PARTICULIER de la PÉDALE.
Ici, nous allons simplifier au maximum les choses en SCHÉMATISANT la cuisse, la jambe, le pied et la pédale. Dans tous les exemples donnés (pour TOUT le document), nous allons supposer que LA CUISSE exerce une force VERS LE BAS constante de 20 livres : c'est l'hypothèse de départ. Volontairement, nous utilisons toujours la position de manivelle telle que la cuisse et la jambe sont perpendiculaires l'un à l'autre, cette position particulière étant celle qui SIMPLIFIE le plus les démonstrations. Le but visé ici est de SIMPLIFIER les choses AU MAXIMUM car nous voulons expliquer des PRINCIPES de base. N'importe quel scientifique va comprendre aisément que ce qui est vrai pour un angle de 90 degrés entre la cuisse et la jambe est également vrai pour TOUTES les autres positions de manivelle (il est inutile de démontrer ce qui est ÉVIDENT pour un savant). Pour cette démonstration, nous allons utiliser les fig 17, 18, 19 et 20 seulement. Quand vous regardez la fig 17, que visualisez-vous? Vous commencez parvoir une cuisse (5) qui, en forçant, pousse l'os de la cuisse(6) VERS LE BAS; gràce à l'articulation du genou (13), vous visualisez que cette force (C=20 lbs) produite par la cuisse est transmise vers le bas LE LONG DE L'OS DE LA JAMBE (11) jusque sur la cheville (1) pour en faire UN POINT D'APPUI en la maintenant en place; ce POINT D'APPUI(1) permets AU MOLLET(4), en se contractant, de tirer l'os du talon (12) VERS LE HAUT, ce qui a tendance à faire TOURNER le pied autour de la cheville (1), ce qui pousse l'articulation des orteils (2) VERS LE BAS, ce qui crée finalement la pression sur la pédale(P)! VOILÀ ce que tout le monde VISUALISE, et cela SEMBLE bien être véridique! Supposons donc que cela soit vrai, et calculons la pression sur pédale ainsi créée par la contraction DU MOLLET. La fig 18 reprends la fig 17 en la schématisant: les os sont représentés par des lignes doites et les muscles ne sont pas symbolisés. Les fig 19 et 20 représentent les résultats de nos "visualisations" ci-haut mentionnées. La fig 19 ISOLE la jambe et la fig 20 ISOLE le pied. La force de traction du mollet sur le talon est désignée par M, la pression DE l'articulation des orteils(2) SUR la pedale est désignée par P (fig 17). La RÉACTION de P est P', qui est la poussée DE la pédale SUR l'articulation des orteils;
P est donc dirigée VERS LE BAS et P' VERS LE HAUT. On a A/B=3 (aucune unité de mesure n'est utilisée car seul le RATIO de A sur B nous intéresse); sur les fig 18 et 19, la force C de 20 livres est la pression (dirigée vers le bas) DE l'os de la cuisse (6) SUR l'articulation du genou (13); sur la fig 20, la force F=20 livres est la poussée de 20 livres DE l'os de la jambe (11) SUR la cheville (1); sur la fig 19 la force F' de 20 livres est LA RÉACTION de la force F, soit la poussée DE la cheville (1) SUR l'os de la jambe (11).
Sur la fig 18, les forces F et F' NE SONT PAS illustrées car elles s'annulent l'une l'autre. Fig 20: il doit y avoir équilibre de TRANSLATION et de ROTATION par rapport à la cheville (1).
TRANSLATION : M + P' = F = 20 livres
ROTATION : M.B = P'.A ; comme B=1 et A=3, nous obtenons M=15 livres et P'=5 livres. Vérifions à nouveau ces résultats, mais par rapport aux deux autres points de référence, soit a) le talon et b) l'axe de la pédale.
a) par rapport au talon:
   TRANSLATION : M + P' = F = 20 livres
   ROTATION : P'.(A + B) = F.B ; comme B=1 et A=3, nous obtenons encore M=15 livres et P'=5 livres comme ci-haut.
b) par rapport à l'axe de la pédale:
   TRANSLATION : M + P' = F = 20 livres
   ROTATION : M.(A + B) = F.A ; comme B=1 et A=3, nous obtenons encore M=15 livres et P'=5 livres comme dans les deux exemples ci-haut.
DONC, en plus de sembler être vrai VISUELLEMENT, cela semble AUSSI être vrai EN THÉORIE comme nous venons de le démontrer! Donc, il y a une ERREUR à quelque part dans ces 3 démonstrations théoriques puisque nous avons prouvé EXPÉRIMENTALEMENT le contraire grâce aux deux premières expériences avec le pèse personne! Cette erreur est la DEUXIÈME erreur contenue dans l'interprétation DU MONDE ENTIER. RÉSUMONS :
l'interpretation DU MONDE ENTIER est
"...la pression sur la pédale provient de DEUX sources, la première étant LA CUISSE, et la deuxième étant LE MOLLET, ces deux forces S'ADDITIONNANT...". Dans cette interprétation DU MONDE ENTIER, il y a 2 erreurs : la PREMIÈRE erreur est de donner une DOUBLE usage à la force dirigée vers le bas provenant de la cuisse, c'est-à-dire prétendre que cette force sert EN MÊME TEMPS
1-à appuyer sur la pédale ET
2-à faire de la cheville un point d'appui (ce qui permets AU MOLLET d'exercer LUI AUSSI une force sur la pédale). Nous avons expliqué qu'un DOUBLE usage est impossible, puisqu'UNE FORCE DONNÉE ne peut avoir QU'UN SEUL usage. Identification de la DEUXIÈME erreur dans l'interprétation DU MONDE ENTIER.

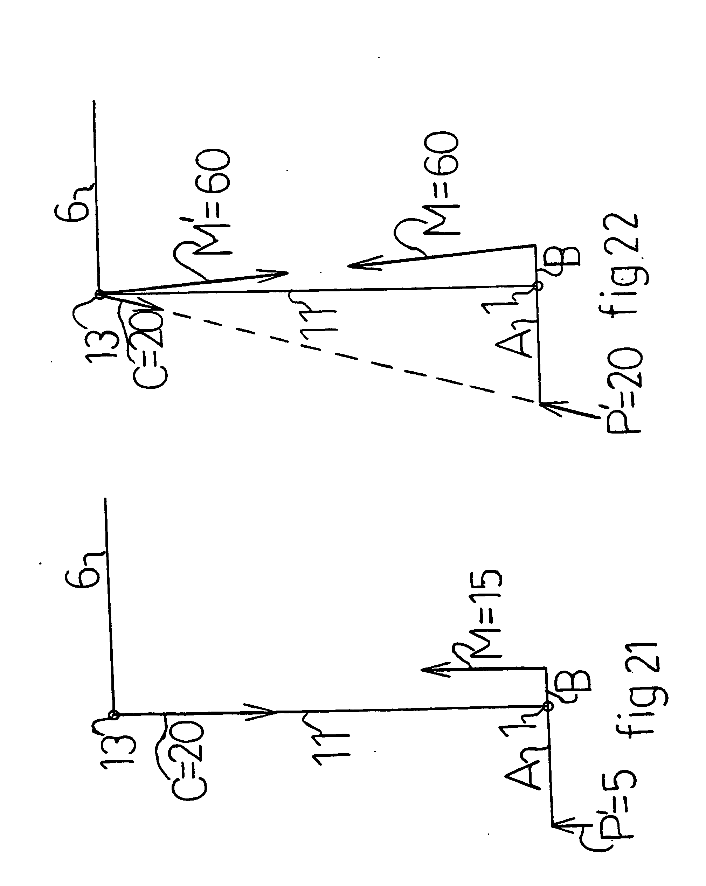

La fig 21 est une reprise de la fig 18 avec les valeurs numériques P'=5 livres et M=15 livres telles que calculées; évidemment, la 2ième erreur est présente. La fig 22 est la fig 21 CORRIGÉE pour tenir compte de la 2ième erreur et ainsi représenter LA RÉALITÉ! Voici la DEUXIÈME erreur contenue dans la fig 21 : UNE FORCE A ÉTÉ TOTALEMENT OUBLIÉE, et c'est LA FORCE M' DIRIGÉE VERS LE BAS QUI PART DU GENOU (cette force est illustrée sur la fig 22)! Un muscle comme LE MOLLET est attaché aux DEUX extrémités :
1-Il y a le point d'attache DU BAS du mollet qui le relie au talon par le tendon d'Achille: le mollet, en se contractant, tire le talon VERS LE HAUT (c'est la force M).
2-Il y a le point d'attache DU HAUT du mollet qui le relie AU GENOU: le mollet, en se contractant, tire le genou VERS LE BAS (c'est la force oubliee M').
QUESTION FONDAMENTALE ENTRE TOUTES:
POURQUOI, dans nos 3 calculs précédents, avons nous COMPLÈTEMENT OUBLIÉ le point d'attache
DU HAUT du mollet (la force M' dirigée VERS LE BAS)?
En effet, si quelqu'un aurait déjà découvert cette DEUXIÈME erreur, la pédale aurait été abandonnee DEPUIS LONGTEMPS et REMPLACÉE par l'invention proposée ici: il n'y aurait plus AUCUN vélo À PEDALES sur les routes! Comme il y a SEULEMENT des vélos À PÉDALES sur les routes, on est bien OBLIGÉ de conclure que personne n'a découvert cette DEUXIÈME erreur...
INCROYABLE MAIS VRAI ! Cela donne une idée de la PUISSANCE de L'ILLUSION D'OPTIQUE que ce document explique!
La réponse à cette simple question est L'ÉPINE DORSALE de tout ce document. Quand nous REGARDONS une jambe appuyer sur une pédale, nous avons tendance à visualiser SEULEMENT les forces qui tendent à créer UN MOUVEMENT, un déplacement perceptible VISUELLEMENT. Si une force donnée ne crée PAS de mouvement perceptible VISUELLEMENT, notre esprit IGNORE cette force et c'est exactement ce qui se produit dans le cas de la force M' pointant VERS LE BAS et qui part DU GENOU (fig 22): la force M' ne crée aucun MOUVEMENT perceptible VISUELLEMENT et NOS YEUX L'IGNORENT TOTALEMENT... Quand vous REGARDEZ la fig 17, vous percevez VISUELLEMENT que la contraction de la cuisse (5) tends À DÉPLACER l'os de la cuisse(6) vers le bas: donc vous percevez VISUELLEMENT la contraction des muscles de la cuisse. Vous percevez VISUELLEMENT la traction du mollet sur LE TALON car elle tends À DÉPLACER le talon VERS LE HAUT (encore DU MOUVEMENT). De même, nous percevons VISUELLEMENT la pression du bout du pied sur la pédale pour 2 raisons:
a) la traction du mollet sur le talon tends à FAIRE TOURNER le pied autour de la cheville (1), ce qui tends À DÉPLACER l'articulation des orteils (2) VERS LE BAS;
b) la pression de l'articulation des orteils (2) sur la pédale tends À DÉPLACER la pédale VERS LE BAS, ce qui fait AVANCER la bicyclette.
Les expressions "DÉPLACER", "FAIRE TOURNER" que nous venons d'utiliser abondamment sont synonymes DE MOUVEMENT: nos yeux percoivent SEULEMENT les forces tendant à créer DU MOUVEMENT! VOICI LA RÉPONSE À NOTRE QUESTION FONDAMENTALE: la traction DU HAUT du mollet sur LE GENOU(M' fig 22) ne crée AUCUN MOUVEMENT perceptible VISUELLEMENT; nous ne percevons pas VISUELLEMENT cette force M': NOS YEUX L'IGNORENT TOTALEMENT! (fig 22): les forces M et M' S'ANNULENT mutuellement, ce qui fait que la force C(=20 lbs) provenant DE LA CUISSE a une ligne d'action DIRIGÉE DIRECTEMENT sur l'axe de la pédale. Donc,la TOTALITÉ de la pression sur la pédale provient UNIQUEMENT de la CUISSE, la contraction DU MOLLET ne produisant AUCUNE pression ADDITIONNELLE sur la pédale. Voici maintenent l'explication claire de L'ILLUSION D'OPTIQUE : si NOS YEUX ne perçoivent PAS la force M', alors on croit faussement que la force M (que l'on percoit visuellement)permets D'AUGMENTER la pression sur la pédale en faisant tourner le pied autour de la cheville: c'est le mystère de L'ILLUSION D'OPTIQUE, causé par la DEUXIÈME erreur dans l'interpretation DU MONDE ENTIER, cette deuxième erreur consistant à NE PAS percevoir visuellement la force M'; cette DEUXIÈME erreur nous porte à croire (faussement) que la force C(=20 lbs) provenant de la cuisse a une LIGNE D'ACTION dirigée DIRECTEMENT le long de l'os de la jambe pour faire de la cheville (1) UN POINT D'APPUI permettant la contraction du mollet! Si on AJOUTE la PREMIÈRE erreur à ce (faux) raisonnement (qui est de donner un DOUBLE usage à la force C), on obtient exactement l'interprétation que LE MONDE ENTIER fait du pédalage, interprétation qui est évidemment fausse et qui se détaille ainsi:
"...la pression vers le bas provenant de la cuisse (C=20 lbs) sert à DEUX usages:
1-CRÉER UNE PRESSION de 20 lbs sur la pédale, ET
2-faire de la cheville UN POINT D'APPUI, ce qui permets AU MOLLET d'exercer une pression ADDITIONNELLE sur la pédale en faisant tourner le pied autour de la cheville,
la pression TOTALE sur la pédale étant égale À LA SOMME de la pression provenant de la cuisse PLUS celle provenant du mollet." Cela est évidemment FAUX , comme nous l'avons clairement démontré. LE MYSTÈRE EST RÉSOLU !
Voir la fig 22 : vous avez compris que LA CLÉ DU MYSTÈRE consistait à découvrir que, VISUELLEMENT, on IGNORE TOTALEMENT la force M' (la traction DU mollet SUR le genou) car cette force ne produit aucun MOUVEMENT perceptible VISUELLEMENT. Cela étant clair, nous allons SUPPOSER une chose ABSURDE: que le point d'attache DU HAUT du mollet est situé À L'EXTÉRIEUR de la jambe, LE BAS du mollet restant attaché au talon! Voir fig 30 , qui est simplement une reprise de la fig 26, SAUF QUE le point d'attache DU HAUT du mollet est le point (y) situe AU PLAFOND (fig 30) tandis que ce point d'attache est le genou (13) dans le cas de la fig 26. La fig 31 est une schématisation de la fig 30. (7) est le pèse-personne sur lequel appui le bout du pied. La fig 32 isole la jambe (11), et la fig 33 isole le pied. Fig 33: F est la pression DE l'os de la jambe SUR la cheville (1) et F' (fig 32) est la RÉACTION de F, soit la pression DE la cheville SUR l'os de la jambe. Les forces F et F' ne sont PAS illustrées sur la fig 31 car elles s'annulent mutuellement. LE POINT IMPORTANT est le suivant: la force de traction DU mollet SUR le genou (M', fig22) N'EST PAS illustrée sur les fig 31 et 32 à cause de notre hypothèse ABSURDE: le point d'attache de M' est situé AU PLAFOND (y, fig 30).
REMARQUEZ CECI: les fig 31, 32 et 33 sont EXACTEMENT LES MÊMES que les fig 18, 19 et 20, ces 3 dernières ayant servi à faire les calculs (c'était l'illusion d'optique); ces calculs ont été effectués; nous n'avons donc pas besoin de refaire ces calculs. CECI EST IMPORTANT: SI le haut du mollet était attaché À L'EXTÉRIEUR de la jambe (au plafond), alors les calculs effectués seraient EXACTS, ne contiendraient aucune erreur!
Mais comme le mollet N'EST PAS attaché À L'EXTÉRIEUR de la jambe (étant relié au genou, évidemment), on est forcé de conclure que c'est LE CONTRAIRE qui est vrai !
Vous devriez être convaincu à ce stade-ci, après toutes les preuves EXPÉRIMENTALES et THÉORIQUES qui ont été données.

### La LOI UNIVERSELLE DES PÉDALIERS !

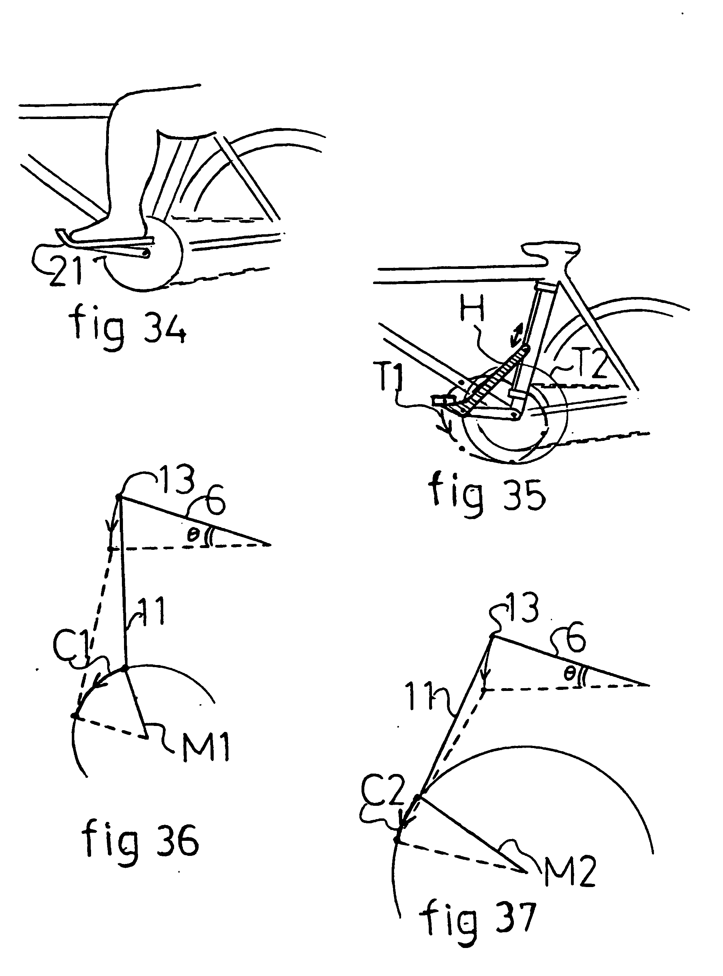

La loi universelle des PEDALIERS que nous allons maintenant expliquer est beaucoup plus générale et permets de comprendre une autre ERREUR GRAVE qui à cours actuellement en cyclisme, et qui brouille complètement les cartes, à savoir que le PÉDALIER est souvent associé (à tord) à un MOTEUR alor que c'est simplement une TRANSMISSION ! Et nous allons voir que cela a de graves conséquences. Cette LOI UNIVERSELLE DES PÉDALIERS est associée à une DEUXIÈME illusion d'optique ! Actuellement, il y a DEUX illusions d'optique qui tiennent le cyclisme en esclavage; vous connaissez la première, qui concerne LE MOLLET. La DEUXIÈME est l'illusion d'optique DU PÉDALIER qui concerne le cyclisme EN GÉNÉRAL et vient AMPLIFIER l'effet dévastateur de l'illusion d'optique DU MOLLET, car ces deux illusions sont DÉPENDANTES l'une de l'autre et S'AMPLIFIENT MUTUELLEMENT en spirale inflationniste, ce qui bloque complètement la VRAI comprehension de ce signifie VRAIMENT le mot PÉDALER! En effet, nous allons voir que, en considérant la jambe AVEC le pédalier, la PREMIÈRE illusion fait faussement croire que le mollet, en se contractant, AUGMENTE la pression sur la pédale et la DEUXIÈME illusion fait faussement croire que la PUISSANCE de la bicyclette est AUGMENTÉE parce que le nouveau PÉDALIER possède une manivelle ALLONGÉE: cette deuxième illusion consiste à NE PAS visualiser que, si on allonge la manivelle, le DÉPLACEMENT de l'axe de la pédale est PLUS COURT, ce qui ANNULE l'effet de son allongement : la PUISSANCE de la bicyclette reste LA MÊME ! C'est ce que nous allons maintenant démontrer. ATTENDEZ VOUS À DE FORTES SURPRISES...La fig 35 est tirée du brevet JENTSCHMANN DE, A, 3,241,142(1983).La vérité est que LE PÉDALIER est une partie de la TRANSMISSION ; le pédalier ne peut remplir qu'UN SEUL rôle, soit de TRANSMETTRE à la roue l'énergie reçue DU MOTEUR, qui est HUMAIN. Le pédalier est simplement UN INTERMÉDIAIRE qui TRANSFÈRE l'énergie REÇUE DU moteur humain À la roue arrière. Que le pédalier soit rond, carré, ovale, à déplacement vertical, à allongement de manivelle...tout ce que vous voudrez,il peut TRANSMETTRE à la roue SEULEMENT l'énergie qu'il REÇOIT du moteur! "C'EST ÉVIDENT" direz-vous;
ET BIEN NON! Ce N'EST PAS évident, et en voici la preuve, qui va vous surprendre au plus haut point! Fig 35 : la pédale est fixée à un bout d'une pièce rigide en forme de L (la pièce H); l'autre bout de cette pièce en forme de L glisse dans une fente le long du tube vertical du cadre du vélo. Le résultat est que l'axe de la pédale suit une trajectoire (T1) ayant la forme d'un 0 (un peu comme un oeuf ou une sorte d'ellipse), tandis qu'avec un pédalier circulaire habituel (donc à manivelle de longueur fixe), la trajectoire est un CERCLE (T2). Le but VISUEL évident de ce mécanisme est d'ALLONGER la longueur EFFECTIVE de la manivelle pendant la phase la plus efficace du cycle de pédalage (quand le pied descends par l'avant) et de RACCOURCIR la manivelle quand le pied remonte par l'arrière. Le "raisonnement" suivi par cet inventeur est simple: si la manivelle est effectivement PLUS LONGUE quand le pied descends par l'avant, alors L'EFFET DE LEVIER est AUGMENTÉ, ce qui devrait AUGMENTER la PUISSANCE par rapport au pédalier circulaire ("l'effet de levier" est la LONGUEUR de la manivelle MULTIPLIÉ par la FORCE perpendiculaire à cette manivelle). IL EST EXACT de dire que l'effet de levier est augmenté, mais il est FAUX de dire que la PUISSANCE AUGMENTE parce que nos YEUX oublient de VOIR autre chose: on ne perçoit pas VISUELLEMENT que, si on ALLONGE la manivelle, alors le DÉPLACEMENT de l'axe de la pédale est PLUS COURT, ce qui ANNULE l'effet de l'allongement de la manivelle:
le TRAVAIL fourni NE VARIE PAS et, donc, la PUISSANCE ne varie pas (le TRAVAIL étant le produit d'une FORCE par un DÉPLACEMENT dans la direction de cette force), en prenant une base de comparaison identique,c'est-a-dire que le travail fourni PAR LA JAMBE ne varie pas. Encore une fois, le pédalier est la TRANSMISSION. Si le MOTEUR (la jambe) FOURNI à la transmission (le pédalier) une certaine quantité de TRAVAIL (d'énergie) dans un certain intervalle de temps (donc une certaine PUISSANCE),
LA SEULE CHOSE que la TRANSMISSION (le pédalier) peut faire, c'est de TRANSMETTRE cette puissance à la roue arrière; le pédalier n'est pas une SOURCE d'énergie: seul LE MOTEUR (la jambe) FOURNI de l'énergie. Le fait D'ALLONGER la manivelle NE FERA PAS VARIER la PUISSANCE fournie PAR la jambe parce qu'une TRANSMISSION ne peut pas AJOUTER de puissance. Si vous voulez AUGMENTER la puissance de votre automobile, il vous faudra AUGMENTER la puissance DU MOTEUR: MODIFIER la TRANSMISSION ne va rien changer! Dans le cas PARTICULIER d'un moteur HUMAIN:
a)il peut être possible d'AUGMENTER la PUISSANCE si la MODIFICATION apportée à la TRANSMISSION (le pédalier) permets d'utiliser de NOUVEAUX muscles qui n'étaient PAS utilisés AVANT la MODIFICATION de la transmission. Il est évident que ni le mécanisme de la fig 34 ni celui de la fig 35 ne permettent d'utiliser de NOUVEAUX muscles, comparé au pédalier circulaire habituel: ces mécanismes ne permettent donc pas une AUGMENTATION de puissance;
b)par contre, il est possible d'augmenter LE RENDEMENT ÉNERGITIQUE du moteur HUMAIN si ON DÉCOUVRE qu'un muscle donné (le mollet) ne fournit AUCUN TRAVAIL (il n'augmente pas la pression sur la pedale) et, donc, il dépense de l'énergie INUTILEMENT en se contractant: il suffit D'ÉLIMINER L'USAGE de ce muscle inutile (CE QUE FAIT le mécanisme de la fig 34, et ce que NE FAIT PAS celui de la fig 35 car le talon demeure dans le vide), ce qui AUGMENTE le RENDEMENT ÉNERGITIQUE du moteur humain. C'est l'équivalent de diminuer la consommation d'essence d'un moteur (en éliminant une fuite par exemple) qui developpe une puissance donnée: la puissance demeure la même, mais LE RENDEMENT ÉNERGITIQUE augmente.
Nous allons maintenant expliquer tout cela VISUELLEMENT, en expliquant L'ILLUSION D'OPTIQUE DU PÉDALIER. TOUTE l'énergie de propulsion ne peut venir que DU MOTEUR, et le pédalier ne fait que TRANSMETTRE l'énergie QU'IL REÇOIT de ce moteur, donc de la jambe. Or, nous avons amplement prouvé que LE MOLLET est INUTILE: donc, la TOTALITÉ de l'énergie de propulsion ne peut provenir QUE DE LA CUISSE. La fig 36 schematise une jambe appuyant sur un pédalier circulaire possédant une manivelle de longueur M1: la cuisse(6) (le seul moteur, le mollet étant inutile) pousse vers le bas en décrivant l'angle q, passant DE la position en ligne pleine À la position en ligne hachurée. LA SEULE chose qui change sur la fig 37, c'est LA LONGUEUR de la manivelle qui passe à M2. La force de poussée vers le bas DE LA CUISSE (6) est supposée LA MÊME dans les deux figures 36 et 37, et l'angle q est LE MÊME aussi; donc, LE TRAVAIL (ou l'énergie) FOURNIE PAR la cuisse (LE SEUL moteur, le mollet etant inutile) est EXACTEMENT LE MÊME dans les deux figures. Donc, chacun des deux pédaliers RECOIT exactement LA MÊME quantité de TRAVAIL (ou d'énergie): chacun de ces deux pédaliers est une TRANSMISSION, et ne fait que TRANSMETTRE a la roue arrière l'énergie QU'IL RECOIT de la cuisse, qui est LA MÊME dans les deux cas, par hypothèse. Remarquez vous quelque chose de spécial? Qu'est-ce qui fait AVANCER la bicyclette? Le DÉPLACAMENT de l'axe de la pédale: si la pédale ne bouge pas, la bicyclette n'avance pas! VISUALISEZ-VOUS que le DÉPLACEMENT de l'axe de la pédale EST PLUS GRAND dans le cas de la fig 36 (l'arc C1) que dans le cas de la fig 37 (l'arc C2) pour UN MÊME TRAVAIL fourni par le moteur (la cuisse seule)? Le fait D'ALLONGER la manivelle DIMINUE le DÉPLACEMENT de la pédale! (L'ALLONGEMENT de la manivelle sur la fig 37 a été énormement exagéré pour qu'on puisse bien VISUALISER la différence de longueur entre les arcs de cercle C1 et C2). IL EST EXACT de dire que L'EFFET DE LEVIER (la force sur la pédale multiplié par la longueur de la manivelle) est PLUS GRAND dans le cas de la fig 37, mais cet effet EST ANNULÉ par un déplacement PLUS COURT de l'axe de la pédale, de telle sorte que le travail FOURNI À la roue arrière par les deux pédaliers est EXACTEMENT LE MÊME. Et il faut forcément qu'il en soit ainsi car les deux pédaliers (qui sont deux TRANSMISSIONS) recoivent EXACTEMENT la même quantite d'énergie (de travail) de LA CUISSE (qui est le seul moteur, le mollet étant inutile) par hypothèse (l'angle θ et la poussée vers le bas de la cuisse étant les mêmes dans les deux figures). Donc, PEU IMPORTE LA LONGUEUR DE LA MANIVELLE, le travail FOURNI À la roue arrière NE VARIE PAS, et ce travail FOURNI À la roue arriere est TOUJOURS ÉGAL au travail que le pédalier RECOIT DU MOTEUR (la cuisse seule) (en ignorant les pertes par friction: ici, on discute de THÉORIE, évidemment). C'EST LOGIQUE ET INCONTOURNABLE...
LOI UNIVERSELLE DES PÉDALIERS :
"Un pédalier n'est pas UN MOTEUR: un pédalier est.une partie de LA TRANSMISSION, un INTERMÉDIAIRE entre le MOTEUR (la cuisse, qui FOURNIT l'énergie) et la roue arrière (qui RECOIT cette énergie): le pédalier ne peut pas AJOUTER de l'énergie PAR LUI-MÊME. En conséquence, l'énergie FOURNIE PAR la moteur (la cuisse seule) est toujours ÉGALE à l'énergie RECUE PAR la roue arrière (en oubliant les pertes par friction), et cela PEU IMPORTE LA CONCEPTION TECHNIQUE DU PÉDALIER (la transmission) qui est seulement un intermédiaire qui TRANSFÈRE l'énergie DU moteur À la roue arrière. Donc, pour apporter une RÉELLE amélioration, une MODIFICATION à un pedalier doit obligatoirement MODIFIER DIRECTEMENT l'usage DES MUSCLES DU MOTEUR , soit:
- en permettant l'usage de muscles qui n'étaient PAS ou PEU utilisés AVANT la modification du pédalier, ce qui corresponds à une augmentation de PUISSANCE disponible,
- en ÉLIMINANT l'usage de muscles dont le rendement énergitique est FAIBLE ou NUL (comme dans le cas du mollet, qui NE PEUT PAS contribuer a la pression sur la pedale).
Peu importe son apparence VISUELLE, si ce pédalier NE MODIFIE PAS directement L'USAGE des muscles du moteur, IL EST INUTILE " Cette LOI UNIVERSELLE DES PEDALIERS est extremement pratique car elle permets, AU PREMIER COUP D'OEIL, de dire si un nouveau pédalier apporte une RÉELLE amélioration, sans avoir à faire d'analyse technique poussée! Cette LOI s'applique à TOUS les organes DE LA TRANSMISSION, le pédalier n'étant QU'UNE PARTIE de cette dernière.

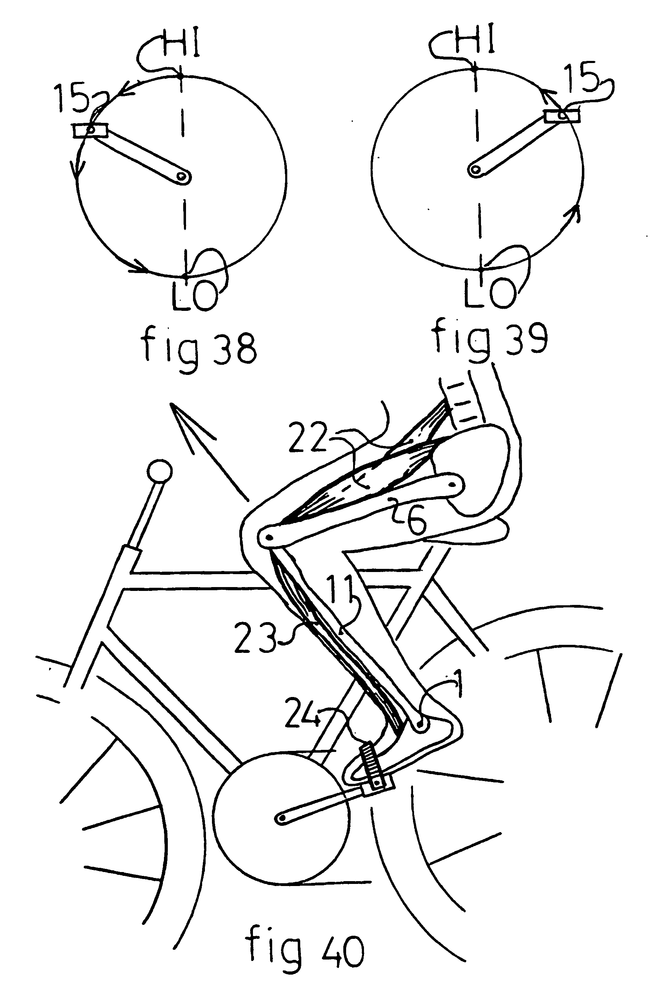

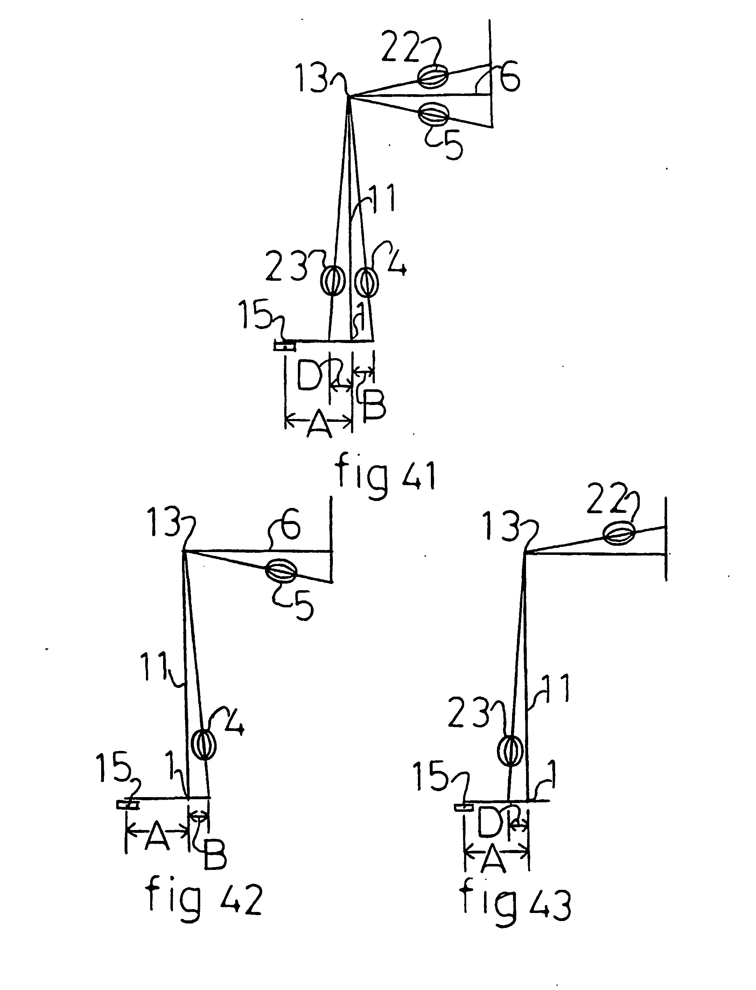

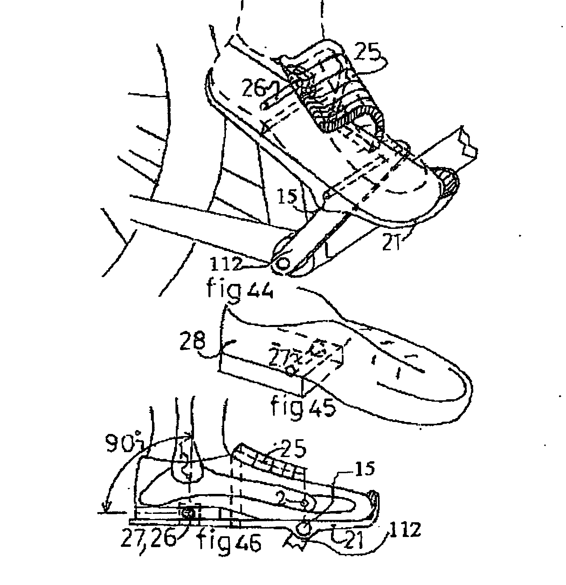

La fig 38 symbolise la phase DESCENDANTE pour un pédalier circulaire habituel: la pédale(15) est POUSSÉE VERS LE BAS passant Du point mort du haut (HI) AU point mort du bas(LO); c'est cette phase DESCENDANTE qui a étée notre sujet depuis le début de l'actuel document, et nous avons tiré la conclusion qu'il fallait remplacer la pédale par une plateforme supportant le talon de facon à éviter la contraction du mollet, ce qui permets de DOUBLER le rendement énergitique. La fig 39 symbolise la phase ASCENDANTE du cycle, quand la pédale(15) passe DU point mort du bas (LO) AU point mort du haut (HI); cette phase peut être active SEULEMENT si le bout du pied est ATTACHÉ à la pédale, évidemment. Voir la fig 40; cette figure illustre la jambe d'un cycliste dont le bout du pied (l'articulation des orteils sur l'axe de la pédale) est attaché à la pédale par une courroie(24), ce qui lui permets de TIRER la pédale VERS LE HAUT, cette force propulsive S'AJOUTANT à la poussée VERS LE BAS de l'autre jambe: les DEUX jambes servent donc à la propulsion SIMULTANEMENT. Pendant cette phase ASCENDANTE (fig 40), les deux principaux muscles utilisés sont:
1-le JAMBIER ANTÉRIEUR schématisé par l'item (23), qui est le fléchisseur du pied ou, si vous préférez, le muscle qui sert À RELEVER le bout du pied; c'est le muscle ANTAGONISTE du mollet (4, fig 41): le mollet (4) et le jambier antérieur(23) remplissent des rôles CONTRAIRES, le mollet servant à pousser le bout du pied vers LE BAS et le jambier antérieur servant à le déplacer vers LE HAUT.
2-le PSOAS-ILIAQUE symbolisé par l'item (22) fig 40 est celui qui sert à RELEVER la cuisse; c'est le muscle ANTAGONISTE des muscles fessiers (5, fig 41): les fessiers (5) et le psoas-iliaque(22) remplissent des rôles CONTRAIRES, les fessiers servant à pousser la cuisse vers LE BAS et le psoas-iliaque servant à déplacer la cuisse vers LE HAUT.
Le psoas-iliaque (22) est un muscle puissant en deux portions, l'une née de la face antérieure de la collone vertébrale (paroi postérieure de l'abdomen), l'autre de la partie antérieure du bassin (aile iliaque) avec tendon commun sur le femur (l'os de la cuisse); un résultat INTERESSANT est le suivant: SI on utilise le psoas-iliaque AU MAXIMUM pour TIRER LA PÉDALE VERS LE HAUT (fig.40), cela a tendance à renforcir les muscles abdominaux, donc DIMINUER LE TOUR DE TAILLE! Toutefois, il y a une ÉNORME DIFFICULTÉ avec le concept classique de la fig 40, c'est-à-dire avec l'emploi d'une courroie pour attacher le pied à la pédale et, pour bien comprendre le problème, il faut se rappeler nos conclusions concernant la phase DESCENDANTE (le rôle INUTILE du mollet) et comprendre que, pour la phase ASCENDANTE, le jambier antérieur (23) est TOTALEMENT INUTILE pour AUGMENTER la traction VERS LE HAUT sur la pédale, la TOTALITÉ de cette TRACTION VERS LE HAUT ne pouvant provenir QUE DU PSOAS ILIAQUE (22). La fig 42 symbolise une jambe appuyant sur une pédale pendant la phase DESCENDANTE, seuls les muscles utilisés pendant cette premiere partie du cycle étant symbolisés (le mollet 4 et les fessiers 5); on a aussi A/B =3 (comme sur la fig 17). La fig 43 symbolise une jambe tirant la pédale vers le haut pendant la phase ASCENDANTE, grâce à la courroie (24), seuls les muscles utilisés pendant cette deuxième partie du cycle étant symbolisés (le jambier antérieur 23 et le psoas-iliaque 22); on a aussi A/D =3, A étant la distance entre le point de rotation de la cheville (1) et l'axe de la pédale, et D étant la distance entre la cheville (1) et le point d'attache moyen du tendon du jambier antérieur (23) sur l'os du pied. La fig 41 est simplement une combinaison des fig 42 et 43. CECI EST IMPORTANT:
- dans le cas de la fig 42, nous avons amplement prouvé:
   i) que le mollet (4) était INUTILE pour AUGMENTER la pression sur la pédale et, donc, dépensait de l'énergie inutilement; nous avons résolu ce problème de perte d'énergie en remplacant la pédale par une plateforme soutenant le talon de façon à éliminer l'usage du mollet
   ii)que LA TOTALITÉ de la pression sur la pédale ne provient QUE DE LA CUISSE (5)
- dans le cas de la fig 43, la situation est ABSOLUMENT SIMILAIRE, mais INVERSÉE
   i) le jambier antérieur (23) est INUTILE pour AUGMENTER la traction VERS LE HAUT sur la pédale et, donc, DÉPENSE DE L'ÉNERGIE INUTILEMENT.
   ii)la TOTALITÉ de la traction vers le haut sur la pédale ne peut provenir QUE DU PSOAS-ILIAQUE (22).
Nous ne donnerons pas cette preuve dans le cas de la fig 43 puisque cette preuve a DÉJÀ été faite, mais INVERSÉE (celle du mollet, fig 42); un peu de réflexion va suffire à vous faire comprendre que les fig 42 et 43 représentent EXACTEMENT le même phénomène, mais INVERSÉ. Si nous referions LA MÊME démonstration INVERSEE à partir de la fig 43, nous parlerions de L'ILLUSION D'OPTIQUE du JAMBIER ANTÉRIEUR (23) au lieu de l'ILLUSION D'OPTIQUE du MOLLET etc. Il est inutile de refaire une telle démonstration, et ce serait trop long. Remarquez ceci: le rapport des distances A/D=3 de la fig 43 est LE MÊME que le rapport des distances A/B=3 de la fig 42, ce qui veut dire que le jambier antérieur (23) dépense INUTILEMENT la MOITIÉ (environ) du total de l'énergie pendant la phase ASCENDANTE, tout comme le mollet (4) de la fig 42 dépense INUTILEMENT la MOITIÉ (environ) du total de l'énergie pendant la phase DESCENDANTE. Dans le cas de la fig 42, la plateforme soutenant le talon est LA SOLUTION pour éliminer la perte d'énergie du mollet. Nous allons voir plus loin UN MIRACLE se produire: nous allons voir qu'il est possible, grâce à une LÉGÈRE MODIFICATION apportée à notre plateforme, D'ÉLIMINER L'USAGE DU JAMBIER ANTERIEUR, ce qui permets de DOUBLER le rendement énergitique de la phase ASCENDANTE et, en même temps, DE DOUBLER LA PUISSANCE disponible car LES DEUX jambes travaillent EN MÊME TEMPS. Avant de procéder à cette explication technique, il faut mentionner ceci: la tension MAXIMALE que le JAMBIER ANTÉRIEUR (23) peut supporter est TRÈS FAIBLE, compare AU MOLLET.
Le mollet peut aisément supporter TROIS FOIS votre poids (donc des CENTAINES de livres) tandis que le jambier antérieur a BEAUCOUP DE DIFFICULTÉ à supporter une tension de 30 ou 40 livres; pour vous en convaincre, tentez de soulever un poids de 40 livres avec le bout du pied: TRÈS DIFFICILE. Une conclusion EXTRÊMEMENT INTÉRESSANTE est la suivante: le PSOAS-ILIAQUE (22), le muscle qui sert à relever la cuisse est TRÈS PUISSANT. Or, le fait que le JAMBIER ANTÉRIEUR (23) ne peut supporter qu'une tension maximale FAIBLE (disons 30 livres) apporte UNE LIMITATION à la force MAXIMALE vers le haut que le PSOAS-ILIAQUE peut exercer! En clair, l'USAGE du jambier antérieur (dans le cas de la courroie, fig 40) EMPÊCHE le psoas-iliaque d'être utilisé À SA PLEINE PUISSANCE, et cela, EN PLUS de la perte inutile d'énergie créée par l'usage du jambier antérieur lui-meme! COMPRENEZ BIEN CECI: dans le cas de la fig 42, si la poussée vers le bas de la cuisse (5) est de 100 livres, le mollet DOIT supporter une tension de 300 livres et le mollet EST CAPABLE de supporter une telle tension. Dans le cas de la fig 43, si le jambier antérieur(23) peut supporter une tension MAXIMUM de 30 livres, cela LIMITE À 10 LIVRES la tension que le psoas-iliaque(22) peut exercer, ce qui est INSIGNIFIANT: le psoas-iliaque POURRAIT exercer une tension de plusieurs centaines de livres s'il n'y avait pas cette limitation IMPOSÉE PAR l'usage du jambier antérieur(23). Et c'est EXACTEMENT ce que fera la modification de notre plateforme: ÉLIMINER L'USAGE du jambier anterieur, ce qui permettra d'utiliser AU MAXIMUM le psoas-iliaque. La modification à notre plateforme, que nous expliquerons bientôt, permettra donc:
1-de DOUBLER le RENDEMENT ÉNERGITIQUE de la phase ASCENDANTE, en ÉLIMINANT L'USAGE du jambier antérieur(23),
2-cette élimination de l'usage du jambier antérieur(23) permettra d'utiliser le PSOAS-ILIAQUE (22) à sa PUISSANCE MAXIMUM (ce qui n'etait PAS LE CAS avec la courroie de la fig 40).
Voir fig 44,45,46. Il faut tout d'abord préciser que l'ARRIÈRE de la plateforme (21) suit une trajectoire PRÉETERMINÉE dans l'espace, cette trajectoire étant définie PAR le(s) mécanisme(s) (car il y a PLUSIEURS mécanismes possibles) qui soutient (nent) l'arrière de la plateforme; il y a aussi des mécanismes où la plateforme est soutenue et guidée PAR L'AVANT. Sur la fig 44, aucun mécanisme particulier n'est illustré pour simplifier le dessin. C'est le pied DROIT qui est illustré. Sur la plateforme (21) de la fig 44, 2 pièces ont été ajoutées:
1-un petit essieu (26) est fixé à l'horizontale sur le côté de la plateforme, cet essieu pouvant être enlevé par le cycliste s'il ne veux pas utiliser la chaussure spéciale requise.
   Cette chaussure, comme le montre la figure 45, dispose D'UN TROU dans le talon(27), l'ouverture de ce trou étant agrandie en entonnoir pour faciliter l'insertion de l'essieu (26) sans avoir à regarder (habitude qui s'acquiert avec la pratique).
   Le dessin de la coupe du pied (fig 46) fait clairement comprendre que l'axe de rotation de la cheville (1) doit être sur la même ligne d'action que l'axe de l'essieu (26), c'est-à-dire à la verticale par rapport à la surface de la plateforme(l'angle de 90 degrés illustré); il est évident que, dans ce cas, l'effort de contraction demandé au jambier antérieur (23) est (presque) TOTALEMENT ÉLIMINÉ pendant la phase ASCENDANTE, quand le psoas-iliaque (22) TIRE la plateforme VERS LE HAUT ! Si on utilise cet essieu (26) en combinaison avec la chaussure spéciale (28) disposant d'un trou (27) où l'essieu pénètre, alors, dans ce cas, ON N'A PAS BESOIN de la pièce 25.
2-Cette pièce(25) peut s'enlever si le cycliste désire utiliser seulement l'essieu (26) et la chaussure spéciale (28). Cette pièce (25) est fixée sur le côté de la plateforme (21), et vient recouvrir l'intersection du pied et de la jambe tel qu'illustré; elle est bien rembourrée (pour le confort) et permets de MAINTENIR la TOTALITÉ du pied EN CONTACT avec la plateforme (21), ce qui permets D'ÉVITER la CONTRACTION du jambier antérieur(23) pendant la phase ASCENDANTE quand le psoas-iliaque(22) TIRE la plateforme (21) VERS LE HAUT.
   A noter que la pièce (25) recouvre seulement le côté GAUCHE et le dessus du pied (près de la jambe): le côté droit est OUVERT, ce qui permets l'insertion facile du pied, sans avoir à regarder (avec un peu de pratique), et le pied est TOUJOURS correctement positionné, AUTOMATIQUEMENT!
Sur terrain plat, la force MOYENNE exercée par le psoas-iliaque est FAIBLE, pour une LONGUE randonnée (on ne veut pas s'épuiser) ce qui permets d'utiliser ces 2 mécanismes EN TOUT CONFORT.

### DESCRIPTION DES MÉCANISMES.

La série de mécanismes que nous allons maintenant décrire sont forts différents les uns des autres, mais ils accomplissent tous LES MÊMES FONCTIONS, soit :
- éliminer l'usage du MOLLET (4, fig 42) et/ou
- éliminer l'usage du JAMBIER ANTÉRIEUR (23, fig 43), ce qui permets l'usage MAXIMUM du PSOAS-ILIAQUE (22, fig 43).

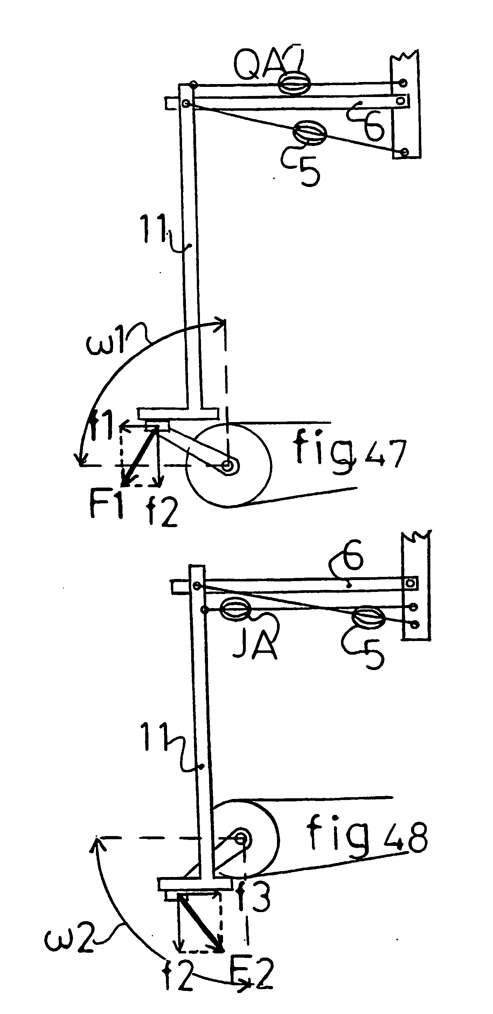

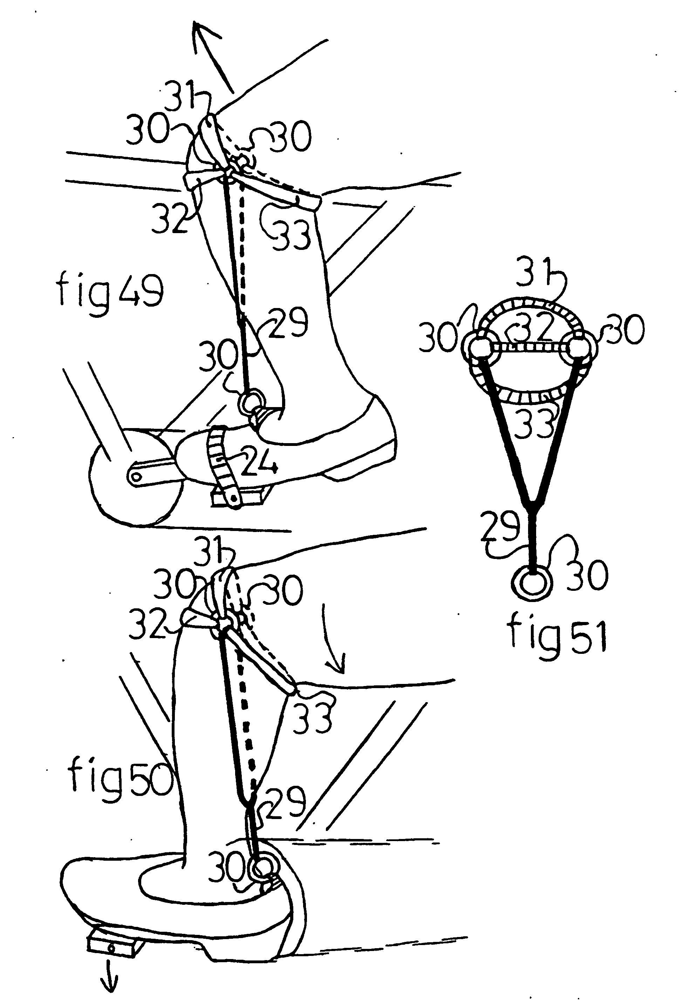

Il nous faut commencer par faire une mise au point: nous allons expliquer que nos mécanismes vont IGNORER quelque chose. En effet, nous allons IGNORER la composante HORIZONTALE de la force sur la pédale, et tenir compte SEULEMENT de la composante VERTICALE. Voir les fig 47 et 48. Dans les 2 cas, le mollet et le jambier anterieur ne sont PAS illustrés, puisque la TOTALITÉ de la pression sur la pédale ne peut provenir que DE LA CUISSE.

La fig 47 illustre la première partie (angle ω1) de la phase DEScendante, quand la pédale va DU point mort du haut À la position de manivelle à l'horizontale. La force résultante F1 sur la pédale provient des forces f1 et f2: la force HORIZONTALE f1 provient de la contraction du quadriceps(QA), et la force VERTICALE f2 provient de la contraction du fessier (5). Idéalement, SI le cycliste utilise ses muscles à la perfection,
- la composante VERTICALE f2 devrait être de ZERO au point mort du haut, et augmenter graduellement jusqu'à atteindre une valeur MAXIMUM quand la manivelle est à l'horizontale,
- la composante HORIZONTALE f1 devrait être MAXIMUM au point mort du haut et diminuer graduellement jusqu'à ZÉRO quand la manivelle est dans la position horizontale.
De même, dans la deuxième portion de la phase descendante (l'angle ω2, fig 48), le fessier (5) joue le même rôle que dans la première portion, soit de créer la force VERTICALE f2. Par contre, la pédale est poussée VERS L'ARRIÈRE(f3)par la contraction du jarret (JA) qui est composé de 4 muscles, soit le demi-membraneux, le demi-tendineux, le biceps crural et le couturier; l'effet combiné de f3 et f2 produit la force résultante F2 sur la pédale. Idéalement, SI le cycliste utilise ses muscles à la perfection pendant cette deuxième portion du cycle, alors
- la force VERTICALE f2 devrait être à sa valeur MAXIMUM quand la manivelle est à l'horizontale et devrait diminuer graduellement d'intensité jusqu'à être à ZÉRO quand la manivelle est au point mort du bas,
- la force HORIZONTALE f3 devrait être de ZÉRO quand la manivelle est à l'horizontale et augmenter graduellement d'intensité jusqu'à une valeur MAXIMUM quand la manivelle est au point mort du bas.

Remarquez que TOUTES ces forces (f1, f2 et f3 qui produisent les résultantes F1 et F2) proviennent SEULEMENT de la CUISSE. Notre invention NE MODIFIE PAS l'usage des muscles DE LA CUISSE: en conséquence, nous n'avons pas besoin de nous préoccuper de ces forces produites sur la pédale PAR LA CUISSE; la SEULE chose dont nous allons tenir compte dans la description des mécanismes qui va suivre, c'est L'EFFET de L'ÉLIMINATION de l'usage du MOLLET et/ou du JAMBIER ANTÉRIEUR.

Toutefois, dans le cas du mécanisme décrivant un pédalier VERTICAL, nous DEVRONS tenir compte des forces HORIZONTALES f1 et f3, mais ce sera LA SEULE exception: pour tous les autres mécanismes, nous ignorerons les forces HORIZONTALES f1 et f3. De tous nos mecanismes, SEUL le mécanisme à deplacement VERTICAL du pied MODIFIE l'usage des muscles MOTEURS (de la CUISSE), en ÉLIMINANT l'usage du jarret (JA) et du QUADRICEPS (QA)! La fig 44 a deja permis d'expliquer deux façons d'éliminer l'usage du jambier antérieur (23, fig 43) grâce à la pièce (26) et/ou la pièce (25) qui permettent de MAINTENIR le pied EN CONTACT avec la plateforme (21), ce qui fait que SEUL le psoas-iliàque (22, fig 43) est utilisé pour tirer la plateforme vers le haut quand le pied remonte par l'arrière pendant la phase ascendante du cycle.
Nous allons maintenant expliquer d'autres concepts possibles. Veillez notez DEUX points importants. PREMIÈREMENT, les mécanismes illustrés sont LOIN D'ÊTRE PARAITS du point de vue TECHNIQUE; la conception "technique" a été limitée au STRICT MINIMUM de facon à ne pas SURcharger les dessins inutilement de détails inutiles: voyez plutot ces mécanismes comme étant des illustrations de PRINCIPES GÉNÉRAUX (les conceptions TECHNIQUES pour un PRINCIPE donné pouvant varier presque à l'infini). DEUXIÈMEMENT, un point FONDAMENTAL: l'importance de l'actuel document NE PROVIENT PAS de ces mécanismes; la PIERRE ANGULAIRE qui soutient ce document, ce sont LES PREUVES (expérimentales et théoriques) que LA CONTRACTION DU MOLLET NE PEUT PAS AUGMENTER LA PRESSION SUR LA PÉDALE et, inversement, que LA CONTRACTION DU JAMBIER ANTRIEUR NE PEUT PAS AUGMENTER LA TRACTION VERS LE HAUT SUR LA PÉDALE (avec le bout du pied attaché par une courroie à la pédale), pendant les phases DEScendante et Ascendantes du cycle de pédalage. C'EST CELA l'essentiel de l'actuel document, et NON PAS les mécanismes; les mécanismes permettent seulement D'UTILISER EFFICACEMENT cette DÉCOUVERTE SCIENTIFIQUE (L'INUTILITE du MOLLET et du JAMBIER ANTERIEUR quand on emploie des pédales); si quelqu'un NE CONNAÎT PAS cette DÉCOUVERTE SCIENTIFIQUE, alors, à ses yeux, ces mécanismes SEMBLENT INUTILES! C'est cette découverte scientifique qui DONNE UNE VALEUR prouvée scientifiquement AUX mécanismes, ET NON L'INVERSE.

### Voici ces autres concepts généraux possibles.

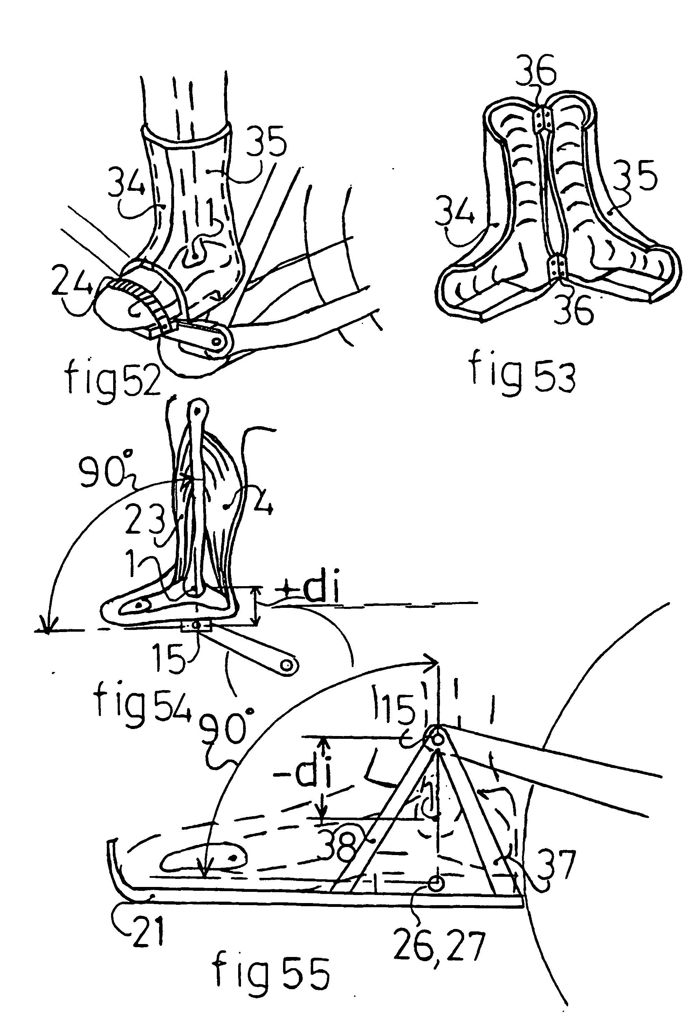

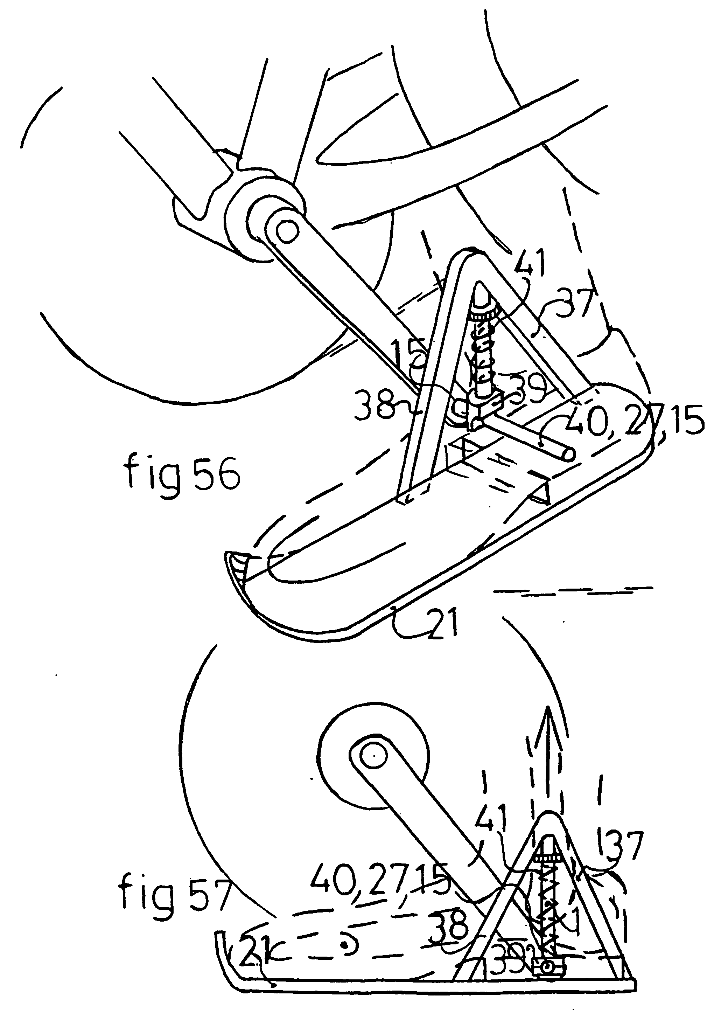

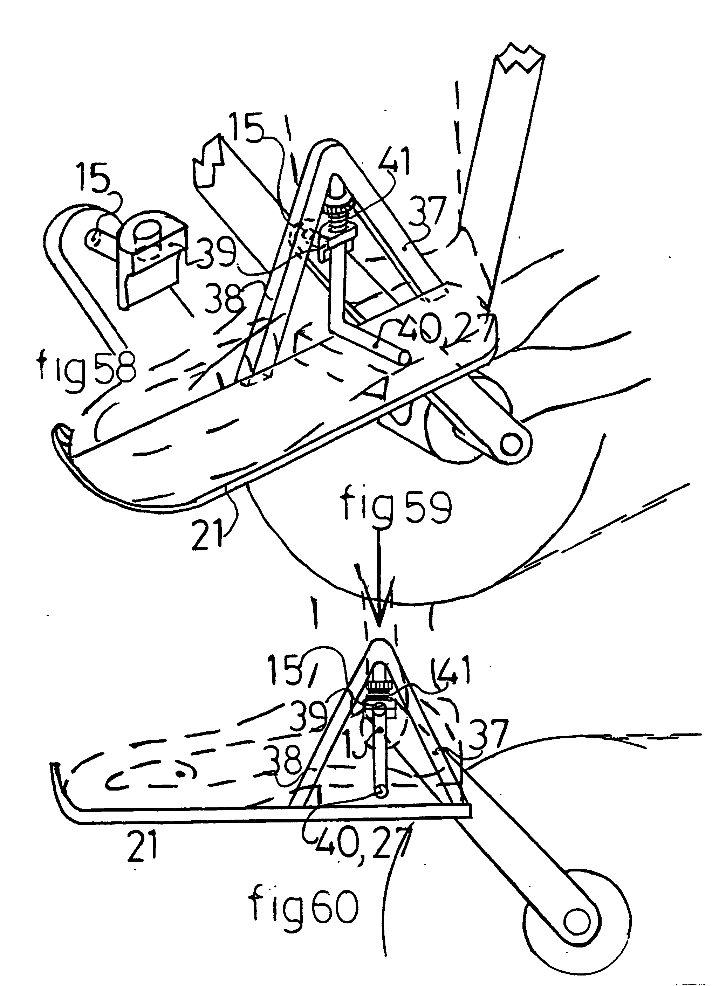

Voir la fig 54; on pourrait penser qu'il est possible d'éviter la contraction du mollet (4) en placant le pied sur la pédale (15) de telle façon que l'articulation de la cheville (1) soit exactement AU DESSUS (à la distance +di) de l'axe de la pédale (15) (l'angle de 90 degrés); le problème ici, c'est que cette position du pied est vite douloureuse (l'arche du pied est très sensible) et, SURTOUT, c'est une position d'équilibre INSTABLE! En effet, si vous n'utilisez PAS DU TOUT votre mollet (4) ni votre jambier antérieur (23), il suffit que la cheville (1) se déplace UN PEU à gauche de l'axe de la pédale (15) pour que le bout du pied se dirige droit vers le sol, l'angle de 90 degrés n'étant plus maintenu, ce qui vous oblige à contracter le jambier antérieur (23) pour redresser le pied; il en va de même si la cheville se déplace UN PEU à droite de l'axe pédale (15): le talon pique vers le sol, ce qui vous oblige à contracter le mollet (4) pour redresser le pied. C'est L'EXISTENCE de la distance(+di) qui CAUSE le problème d'équilibre INSTABLE, cette distance(+di) étant la distance verticale entre l'axe cheville(1) et l'axe pédale (15); le signe + devant le symbole di (+di) signifie simplement que l'axe cheville (1) est AU DESSUS de l'axe pédale (15), et c'est précisément cela qui CAUSE l'équilibre INSTABLE. Est-il possible, pour la phase DEScendante, d'éliminer ces deux problèmes, c'est-à-dire
1-NE PAS utiliser l'arche du pied (comme dans le cas de la fig 54), ce qu'il est DOULOUREUX de faire,
2-obtenir un équilibre STABLE (+di égale à ZÉRO)?
   La réponse est OUI. En ce qui concerne le probleme no 1, il suffit simplement d'utiliser une plateforme(21) qui supporte TOUT le pied, comme le montre la fig 55. Pour le problème no 2, il est possible d'obtenir un équilibre STABLE en positionnant la plateforme (21) de telle façon que:
   a) l'axe de rotation de la cheville (1) se situe exactement EN DESSOUS de l'axe de rotation (15, là où était la pédale, avant qu'on la remplace par la plateforme); ici, la distance di est NÉGATIVE (-di), ce qui permets un équilibre STABLE (mais SEULEMENT pour la phase DEScendante, quand la cuisse pousse VERS LE BAS): c'est le fait que la cheville (1) se situe EN DESSOUS de l'axe de rotation (15) qui DONNE l'équilibre STABLE (comparé à la situation de la fig 54 qui était INSTABLE) car la distance di etait positive (+di)).
   b) LE POIDS de la plateforme situé À GAUCHE du point(15) devrait être le même que LE POIDS de la plateforme situé À DROITE du point (15), de façon à ce que la plateforme puisse SE MAINTENIR à l'horizontale à vide, par gravité.
Évidemment, dans cette conception, la plateforme N'EST PAS guidée dans l'espace: elle peut tourner LIBREMENT autour de l'axe de rotation(15) et est maintenue en place par gravité; la plateforme est retenue par l'arrière par la pièce (37) et par l'avant par la pièce (38); les pièces 37 et 38 sont solidaires de la plateforme (21) et se rejoignent au point de rotation (15). Il est difficile de dire pour l'instant si un tel déplacement LIBRE de la plateforme est avantageux ou non: seule l'expérimentation pourrait répondre à la question. Aussi, avec un tel concept, on serait en droit de se poser certaines questions comme par exemple "y a t-il danger que le bout du pied heurte le sol ?" (on pourrait régler ce problème en concevant une bicyclette avec un pédalier SURélevé, ou en utilisant des manivelles plus courtes) ou encore "ce concept permets-il d'eliminer TOTALEMENT la contraction du mollet, ou seulement PARTIELLEMENT?". Mais une chose est certaine: ce concept, TEL QU'ILLUSTRÉ PAR LA FIG 55, ne PERMETS PAS d'utiliser efficacement la phase Ascendante (quand le pied remonte par l'arrière, en utilisant la pièce 26 de la fig 44 et en utilisant une chaussure spéciale (28) avec un trou (27) dans le talon (fig 45); en effet, un peu de réflexion suffit pour comprendre que, en phase Ascendante, il y a équilibre INSTABLE si la pièce (26) située dans le trou (27) de la chaussure (fig 55) se situe SOUS l'axe de rotation (15) quand le psoas-iliaque tire la cuisse VERS LE HAUT; pour avoir un équilibre STABLE pendant la phase Ascendante, il faudrait que l'axe (26) se situe AU DESSUS de l'axe (15) quand la cuisse tire vers le haut.
Le prochain concept est simplement une AMÉLIORATION du mécanisme que nous venons de décrire (fig 55): cette amélioration permets d'utiliser efficacement la phase AScendante, en éliminant l'usage du jambier antérieur, ce qui permets d'utiliser le psoas-iliaque à son plein potentiel. Les fig 56 à 60 illustrent le même mécanisme, la fig 56 pendant la phase AScendante et la fig 59 pendant la phase DEScendante. Fig 56 : la pièce triangulaire (37,38) est fixée sur le côté de la plateforme (21); au sommet de ce triangle est fixée une tige en forme de L(40), la partie verticale de cette pièce en L coulissant à l'intérieur d'un ressort à faible compression(41) et la partie horizontale de cette pièce en L s'introduisant dans le trou (27) du talon de la chaussure (voir fig 44, 45). La partie verticale de la pièce 40 coulisse à l'intérieur du trou de la pièce (39) qui est fixée au bout de la manivelle, là où était la pédale qu'on a enlevé (15) (la fig 58 montre la pièce 39 isolée). Le fonctionnement est élémentaire:
- pendant la phase ASCENDANTE (fig 56 ), le ressort N'EST PAS comprimé de telle sorte que l'axe de la portion horizontale de la pièce (40) COÌNCIDE EXACTEMENT avec l'axe de rotation du bout de la manivelle (15) dans lequel est inséré l'axe de la pièce(39); il y a donc équilibre STABLE et le psoas-iliaque (qui tire la cuisse vers le haut) peut être utilisé à son plein potentiel puisque l'équilibre STABLE ainsi obtenu permets l'élimination de l'usage du jambier antérieur (si l'axe horizontal de la pièce (40) était situé SOUS l'axe de l'ex-pedale (15); l'équilibre serait INStable, ce qui necessiterait une certaine contraction du jambier antérieur et/ou du mollet pour garder le pied dans la position requise car la traction vers le haut par le psoas-iliaque aurait tendance à DÉPLACER l'axe de 40 à gauche ou à droite de l'axe (15), à cause de l'équilibre INStable);
- pendant la phase DEScendante (fig 59 ), le ressort (41) se comprime totalement (étant de faible résistance) aussitôt que la cuisse commence à pousser vers.le bas. Voir la fig 60: on voit clairement que l'axe de rotation DE LA CHEVILLE (1) se situe SOUS l'axe de rotation du bout de la manivelle (15), ce qui donne un équilibre STABLE pour cette phase DEScendante, ce qui permets D'ÉLIMINER L'USAGE DU MOLLET car l'axe de la cheville (1) est TOUJOURS maintenu exactement SOUS l'axe (15) PAR la pression vers le bas ELLE-MÊME (si l'axe de la cheville (1) était AU-DESSUS de l'axe (15) pendant la phase DEScendante, alors la poussee VERS LE BAS de la cuisse aurait tendance à faire devier l'axe (1) à gauche ou à droite de l'axe (15), ce qui nécessiterait une contraction du jambier antérieur ou du mollet pour ramener le pied à la position requise, comme cela a été clairment expliqué par la fig 54).
Le prochain concept implique un déplacement VERTICAL du pied, c'est-à-dire que le pied descends à la verticale et suit EXACTEMENT LA MÊME trajectoire pour remonter, contrairement au pédalier circulaire habituel où la trajectoire de remontée du pied par l'arrière (la phase AScendante) n'est évidemment PAS LA MÊME que la trajectoire de descente par l'avant (la phase DEScendante). Encore une fois, la TECHNIQUE va être limitée à sa plus simple expression. Dans l'explication qui va suivre, nous allons considérer que
a) l'usage DU MOLLET a été ÉLIMINÉ grâce à l'emploi d'une PLATEFORME au lieu d'une PÉDALE,
b) que l'usage DU JAMBIER ANTÉRIEUR a été ÉLIMINÉ grâce au concept de la fig 44, par l'emploi des pièces 25 et/ou 26, ce qui permets d'utiliser le PSOAS-ILIAQUE (le muscle qui relève la cuisse) à sa pleine puissance.

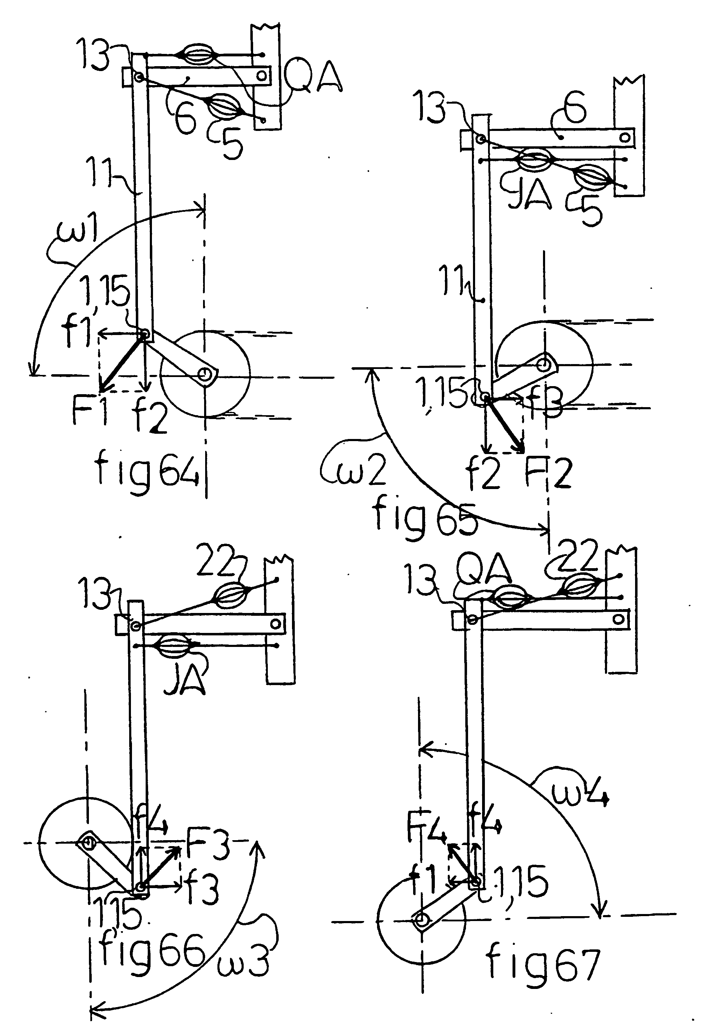

Donc, nous supposerons que les DEUX phases du cycle de pédalage, soit la phase DEScendante et AScendante, sont utilisées efficacement dans l'explication qui va suivre; nous n'aurons plus à nous preoccuper du MOLLET ou du JAMBIER ANTÉRIEUR car notre discussion va porter UNIQUEMENT sur les muscles MOTEURS,soit ceux DE LA CUISSE (il y en a plusieurs, mais nous allons nous préoccuper des 4 principaux, soit le FESSIER, le QUADRICEPS le JARRET et le PSOAS-ILIAQUE).

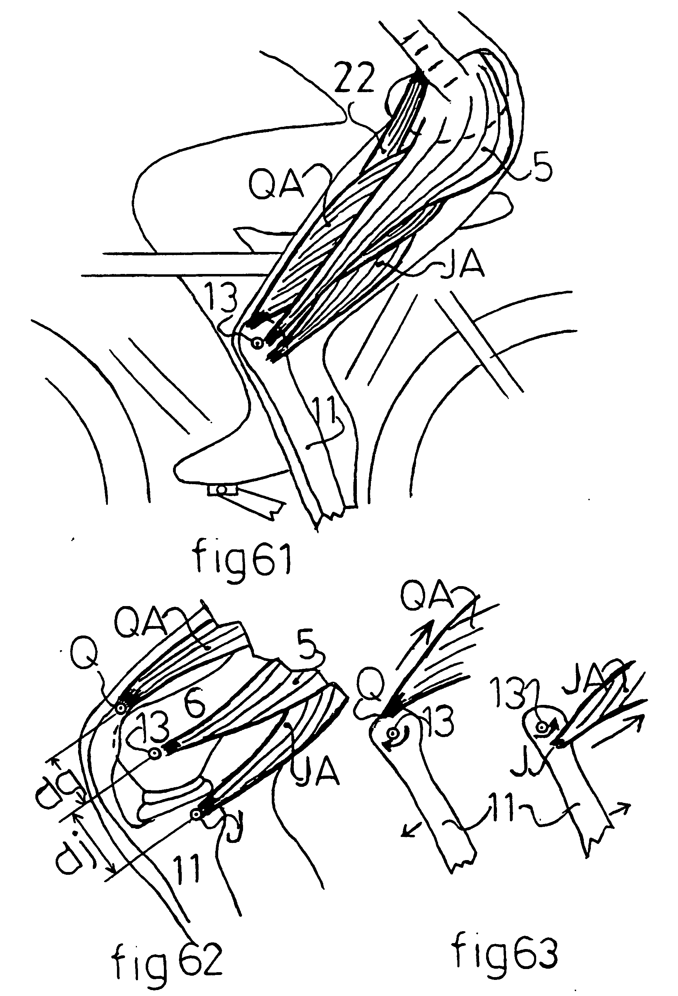

La fig 61 illustre les 4 muscles moteurs de la cuisse que nous allons étudier, soit le FESSIER (5) qui sert à pousser la cuisse VERS LE BAS, le PSOAS-ILIAQUE (22) que l'on voit partiellement seulement et qui sert à RELEVER la cuisse (voir la fig 40) pour une meilleure vision du psoas-iliaque, qui est en deux parties), le QUADRICEPS (QA) qui pousse le pied vers L'AVANT (donc un extenseur de la jambe), et le JARRET (JA) qui pousse le pied vers L'ARRIÈRE (donc un fléchisseur de la jambe). La fig 62 est un agrandissement du genou, et la fig 63 explique visuellement comment le quadriceps, en se contractant, fait TOURNER l'os de la jambe (11) autour de l'articulation du genou (13), ce qui pousse le pied vers l'avant, et comment le jarret fait la même chose mais vers l'arrière.
Pour SIMPLIFIER les choses, comme ON IGNORE le mollet et le jambier antérieur, ces muscles ne sont PAS illustrés; sur le 4 figures 64, 65, 66 et 67, LE PIED n'a plus besoin d'être illustré: sur ces 4 figures, nous considérerons donc que la cheville(1) coincide avec l'axe de rotation de la pédale (15)(là où elle se trouvait avant d'être enlevée).
Ce que l'on va étudier ici, c'est L'EFFET sur L'UTILISATION des muscles MOTEURS de la CUISSE (fessier, quadriceps, jarret, et psoas-iliaque) d'une MODIFICATION de la TRAJECTOIRE suivie par la cheville, en passant d'une trajectoire CIRCULAIRE (le pédalier habituel) à une trajectoire VERTICALE (le nouveau concept technique que nous allons introduire). Pour cela, nous allons tenir compte d'une CARACTÉRISTIQUE IMPORTANTE propres aux muscles, soit de DÉPENSER de l'énergie même si cette dépense d'énergie ne s'accompagne PAS d'un TRAVAIL mécanique effectivement PRODUIT, soit un DÉPLACEMENT dans LA DIRECTION de cette force (un TRAVAIL au sens Newtonnien est le produit d'une FORCE par un DÉPLACEMENT dans la direction de cette force); par exemple, si vous appuyez tres fort sur le dessus d'une table avec votre main, il y a production de CHALEUR (vos muscles s'échauffent ainsi que le dessus de la table), mais il n'y a pas de TRAVAIL mécanique produit car la table ne bouge pas. Ce qui nous intéresse en priorité, c'est que la bicyclette AVANCE, ce qui implique que le pédalier doit TOURNER; donc, POUR NOUS, toute dépense d'énergie musculaire qui n'est pas accompagnée d'un DÉPLACEMENT de la manivelle est une PERTE PURE d'énergie. Donc, si en étudiant les 4 figures 64, 65, 66 et 67 ,on découvre des situations où certains muscles dépensent de l'énergie SANS PRODUIRE DE DÉPLACEMENT, et si on peut ÉLIMINER ces situations en passant d'une trajectoire CIRCULAIRE à une trajectoire VERTICALE, alors on AUGMENTE le RENDEMENT ÉNERGITIQUE du moteur; et cela est parfaitement en accord avec la LOI UNIVERSELLE DES PÉDALIERS qui stipule (entre autres choses) "...qu'une MODIFICATION à un pédalier (ici, c'est le passage DE circulaire À vertical) pour apporter une RÉELLE amélioration, doit MODIFIER L'USAGE des muscles du MOTEUR....en AUGMENTANT le RENDEMENT ÉNERGITIQUE des muscles DÉJÀ utilisés..."

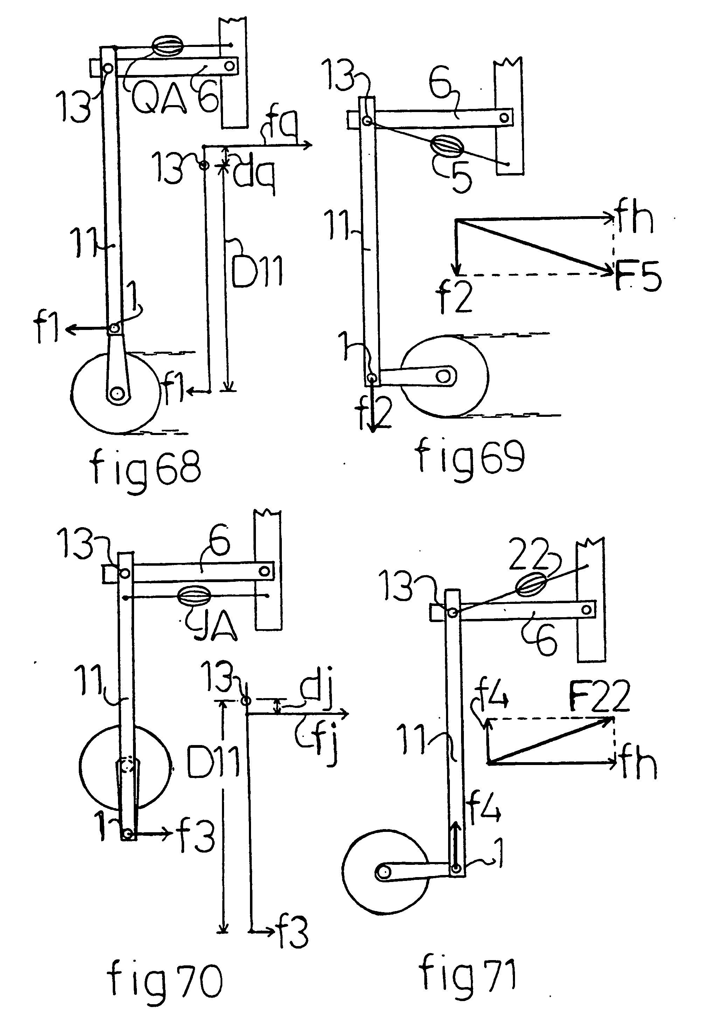

Sur les 4 figures 64,65,66 et 67, SEULS les muscles qui sont EFFECTIVEMENT utilisés sont schématisés, pour CHACUNE des 4 portions (de 90 degrés chacune) du cycle complet (ici, rappelez-vous que nous utilisons des plateformes AVEC les pièces 25 et/ou 26 de la fig 44, ce qui permets d'éliminer l'usage du mollet et du jambier antérieur et rendre efficace le cycle complet, phase Ascendante INCLUSE).
La fig 64 illustre le premier 90 degres du cycle, quand l'axe (15) (là où la pédale était auparavant) passe du point mort du haut jusqu'à la position horizontale de la manivelle. Le QUADRICEPS (QA), en se contractant, fait tourner l'os de la jambe (11) autour de l'articulation du genou (13), ce qui pousse le pied vers l'avant et produit la force HORIZONTALE f1. En même temps, le FESSIER (5), en se contractant, pousse l'os de la cuisse (6) vers le bas, ce qui produit la force VERTICALE f2. La force F1 est la force RÉSULTANTE (des composantes f1 et f2). S.V.P. PORTEZ UNE ATTENTION SPÉCIALE À CE QUI VA SUIVRE:
Étudions attentivement ce premier angle de 90 degres et considérons la position DE DÉPART, soit la manivelle en position VERTICALE au point mort du haut: dans cette position, la force VERTICALE f2, SI ELLE EST PRODUITE, n'est D'AUCUNE UTILITÉ car sa ligne d'action passe par le centre du pédalier: cette force ne peut produire aucun effet de levier; donc, IDÉALEMENT, au POINT MORT DU HAUT, le cycliste NE DEVRAIT PAS tenter d'appuyer vers le bas avec le FESSIER(5) car ce serait de l'énergie dépensee inutilement puisque la force f2 qui en résulterait ne pourrait pas produire de DÉPLACEMENT. Donc, toujours IDÉALEMENT, c'est-à-dire dans le cas d'un cycliste ayant le PARFAIT contrôle de sa musculature, ce cycliste DEVRAIT faire passer la force de contraction du FESSIER (5) d'une valeur ZÉRO au point mort du haut jusqu'à une valeur MAXIMUM quand la manivelle est à l'horizontale: donc, augmentation GRADUELLE de la force de contraction du fessier (5) à mesure que le pied descends, en partant de ZÉRO au point mort du haut. Toujour IDÉALEMENT, le cycliste parfait DEVRAIT contracter le QUADRICEPS (QA) au MAXIMUM quand la manivelle est VERTICALE (au point de départ) car, dans cette position, l'effet de levier du QUADRICEPS est MAXIMUM car la ligne d'action de la force HORIZONTALE f1 (produite par le quadriceps) est PERPENDICULAIRE à la manivelle, ce qui produit un DÉPLACEMENT de cette dernière et, donc, l'énergie de contraction du quadriceps est UTILE. Donc, IDÉALEMENT, la force de contraction du QUADRICEPS devrait être à son MAXIMUM au point mort du haut et DIMINUER GRADUELLEMENT à mesure que le pied descends jusqu'à une valeur de ZÉRO quand la manivelle est à l'horizontale. Pour résumer, IDÉALEMENT:
a) le FESSIER (5) devrait avoir une force de contraction de ZÉRO au point mort du haut (manivelle verticale) et atteindre GRADUELLEMENT une valeur MAXIMUM quand la manivelle est horizontale;
b) le QUADRICEPS(QA), pendant ce temps, devrait faire LE CONTRAIRE de ce que fait le FESSIER, c'est-à-dire avoir une force de contraction MAXIMUM au point mort du haut (manivelle verticale) et diminuer GRADUELLEMENT d'intensité pour atteindre la valeur ZÉRO quand la manivelle est horizontale.
Ces deux situations IDÉALES sont représentées par les fig 68 et 69, ou SEULS les muscles qui DEVRAIENT être utilisés sont schematisés. Cela c'est L'IDÉAL, la PERFECTION, en supposant que le cycliste CONTRÔLE PARFAITEMENT l'usage des muscles de son corps! Pour cela, il faudrait que l'esprit du cycliste soit CAPABLE, au point mort du haut, de commander au fessier de NE PAS se contracter, et, EN MÊME TEMPS, commander au quadriceps de se contracter au maximum; ensuite, l'esprit du cycliste devrait commander au quadriceps de DIMINUER graduellement sa contraction à mesure que le pieds descends et, EN MÊME TEMPS, commander au fessier D'AUGMENTER graduellement sa contraction à mesure que le pied descends. L'ESPRIT HUMAIN EST INCAPABLE D'ACCOMPLIR UN TEL PRODIGE: il faudrait remplacer l'esprit humain par un ordinateur! La conclusion PRATIQUE est la suivante:
i) les gens (même les coureurs, mais dans une moindre mesure) POUSSENT VERS LE BAS avec LE FESSIER quand la manivelle est au point mort du haut (A LA VERTICALE), ce qui représente UNE DÉPENSE INUTILE D'ÉNERGIE car cela ne produit aucun DÉPLACEMENT de la manivelle (aucun TRAVAIL mécanique),
ii)de même, quand la manivelle est À L'HORIZONTALE, les gens (même les coureurs, mais d'une facon moins accentuée) CONTINUENT de pousser le pied VERS L'AVANT en contractant le QUADRICEPS: cela est aussi une PURE PERTE D'ÉNERGIE car cela ne produit aucun DÉPLACEMENT de la manivelle. VOILA LA RÉALITÉ.
Or, la bonne nouvelle, c'est que le concept simple de pédalier à déplacement VERTICAL, qui va être expliqué bientôt, ÉLIMINE ces pertes d'énergie! La fig 65 illustre les muscles utilisés pendant le 2ieme angle de 90 degrés ( ω2) quand la manivelle passe DE la position horizontale À la verticale, au point mort du bas. Le fessier (5), en se contractant, produit la force VERTICALE f2, et le jarret (JA), en se contractant produit la force HORIZONTALE f3 dirigée vers l'arrière. IDÉALEMENT, si notre cycliste a le contrôle parfait de ses muscles:
a) f2 (produite par le fessier 5) devrait être MAXIMUM quand la manivelle est horizontale, et devrait diminuer graduellement d'intensité jusqu'à ZÉRO au point mort du bas,
b) inversement, f3 (produite par le jarret JA) devrait être de ZÉRO quand la manivelle est horizontale et augmenter graduellement d'intensité jusqu'à un MAXIMUM au point mort du bas.
Cet IDÉAL est représenté par les fig 69 et 70. Ca, c'est L'IDÉAL; en réalité, les cyclistes continuent de contracter le jarret quand la manivelle est horizontale et continuent de pousser vers le bas avec le fessier quand la manivelle est au point mort du bas: cela, c'est une dépense INUTILE d'énergie car cela ne produit PAS de DÉPLACEMENT de la manivelle! Le pédalier VERTICAL élimine cette perte d'énergie!
La fig 66 illustre le 3ième angle de 90 degrés (ω3). Ici, c'est le PSOAS-ILIAQUE(22) qui produit la force VERTICALE f4 dirigée VERS LE HAUT, et le jarret (JA) produit la force HORIZONTALE f3 dirigée vers l'arrière, la force F3 étant la RÉSULTANTE des deux composantes f3 et f4. IDÉALEMENT,
a) f4 DEVRAIT passer de ZÉRO au point mort du bas à une valeur MAXIMUM quand la manivelle est horizontale, et
b) f3 DEVRAIT, idéalement, passer d'une valeur MAXIMUM au point du bas à une valeur de ZÉRO quand la manivelle est horizontale.
Cet IDÉAL est représenté par les fig 70 et 71. Ca, c'est L'IDÉAL, et vous savez, bien sûr, que ce n'est PAS de cette façon que les cyclistes utilisent leurs muscles dans la réalité, ce qui occasionne une dépense INUTILE d'énergie.

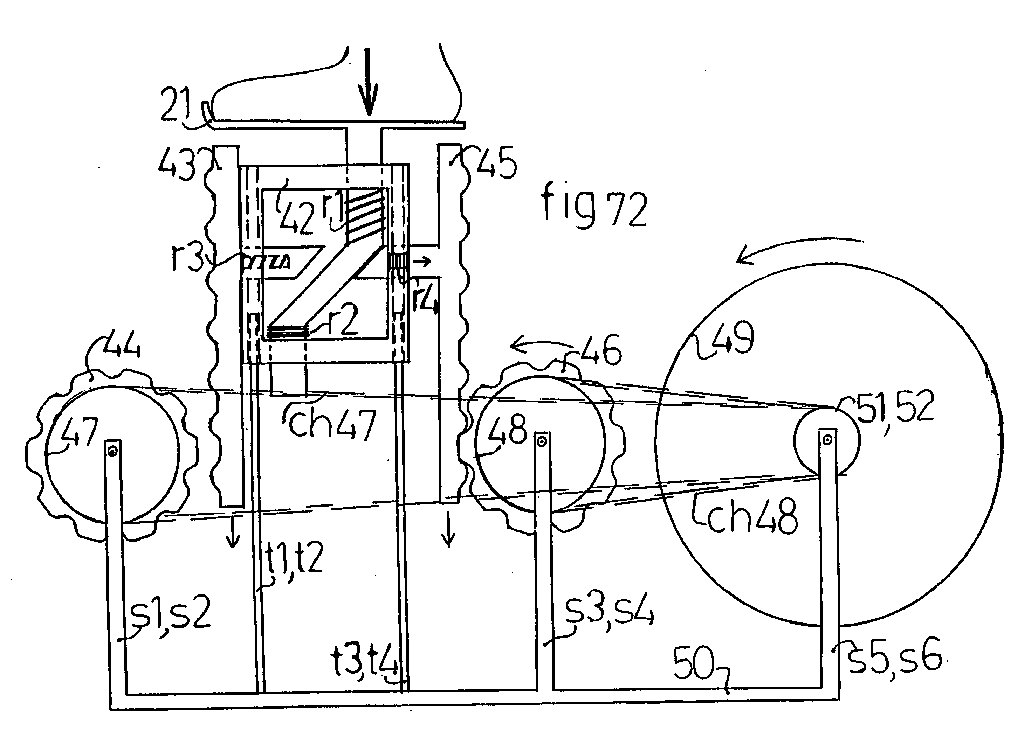

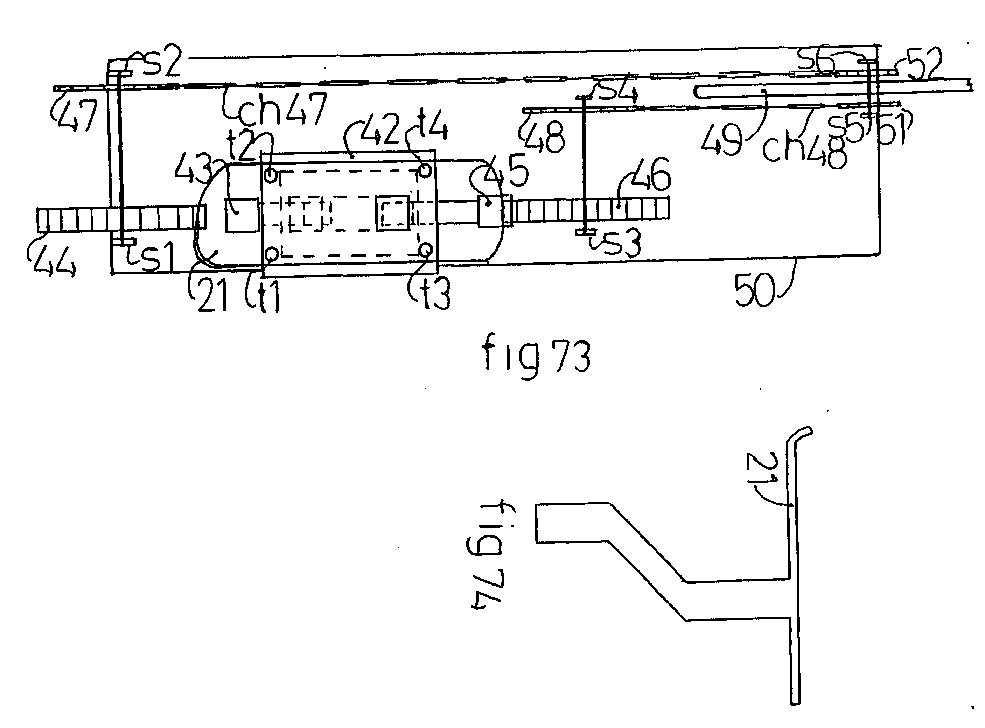

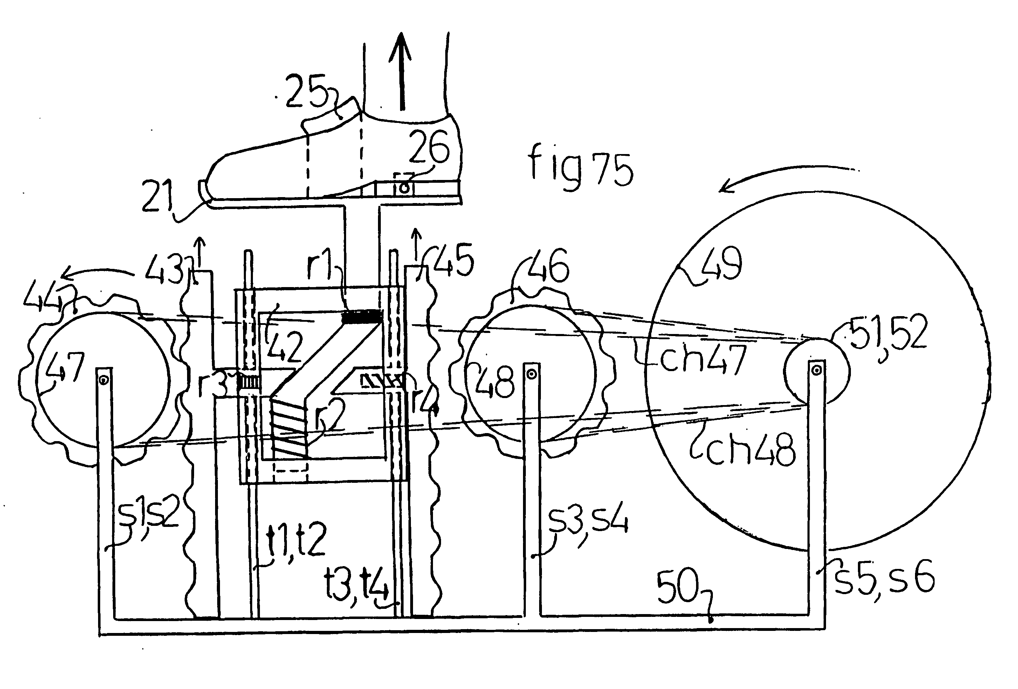

Enfin,la fig 67 iluustre le 4ième angle de 90 degrés (ω4). La force f4 dirigée vers le haut est produite par le psoas-iliaque(22) et la force horizontale f1, dirigée vers l'avant, est produite par le quadriceps (QA). IDÉALEMENT toujours,
a) f4 devrait être MAXIMUM quand la manivelle est horizontale, et devrait diminuer graduellement jusqu'à ZÉRO au point mort du haut, et
b) f1 devrait être de ZÉRO quand la manivelle est horizontale et atteindre une valeur MAXIMUM au point mort du haut. Les fig 71 et 68 représentent cet IDÉAL dans l'usage des muscles, cet idéal étant évidemment IMPOSSIBLE à atteindre (du moins pour un pédalier CIRCULAIRE)! Cet IDÉAL, pour un pédalier circulaire, se résume ainsi:
   - fig 68 (point mort du haut): seul le quadriceps (QA) est utilisé (en ajoutant les autres muscles qui POUSSENT LE PIED VERS L'AVANT, s'il y en a ) pour produire la force f1; dans un tel cas, il faudrait que le pied soit ATTACHÉ à la pédale par une courroie ou autre chose, ce que le cycliste de tous les jours n'aime pas car ca peut être encombrant et dangereux: il faut en effet pouvoir poser le pied par terre RAPIDEMENT en cas d'arrêt brusque et le REpositionnement du pied pour repartir (sans regarder) est difficile.
   - fig 69 (manivelle à l'horizontale vers l'avant): seul le fessier (5) est utilisé (en ajoutant les autres muscles qui poussent la cuisse VERS LE BAS, s'il y en a) pour produire la force f2;
   - fig 70 (point mort du bas): seul le jarret (JA) est utilisé (en ajoutant les autres muscles qui poussent le pied VERS L'ARRIÈRE, s'il y en a) pour produire la force f3; cela implique que le pied doit être attaché à la pédale d'une quelconque façon, avec les inconvénients que cela comporte.
   - fig 71 (manivelle à l'horizontale vers l'arrière): seul le muscle psoas-iliaque (22) est utilisé (en ajoutant les autres muscles servant À RELEVER LA CUISSE, s'il y en a) pour produire la force f4. Il faut évidemment que le pied soit attaché à la pédale.
Voici ce en quoi consiste ce pédalier à déplacement VERTICAL. Les fig 72, 73, 74 et 75 illustrent un mécanisme rudimentaire, actionné par un seul pied, et qui permets de faire tourner une roue(49) TOUJOURS DANS LE MÊME SENS, peu importe que le pied monte ou descende; la fig 72 illustre la phase descendante (quand le pied descends), la fig 73 illustre la fig 72 mais vue par en haut, la fig 75 illustre la phase ascendante (quand le pied monte): la phase ascendante est active grâce aux pièces 25 et/ou 26 ajoutées à la plateforme, comme l'a déjà expliqué la fig 44. La fig 74 illustre la plateforme spéciale (21) qui est utilisée: la pièce illustrée en forme de z sous la plateforme elle-même est faites d'un seul morceau et est solidaire de la plateforme, cette pièce en z s'insérant dans la pièce 42, fig 72. Fig 72: la pièce en z porte 2 ressorts (r1 et r2), le ressort r2 se comprimant quand le pied pousse vers le bas; quand le pied tire vers le haut (fig 75), le ressort r2 se détends et le ressort r1 se comprime. La pièce 42 va de haut en bas quand le pied descends (fig 72) et de bas en haut quand le pied remonte (fig 75): quand le pied descends, la pièce en forme de T (45) est poussée vers la droite par la portion inclinée de la pièce en forme de S; les dents de la pièce 45 embrayent avec les dents de la roue 46, ce qui fait tourner la roue 46 dans le sens indiqué; une roue 48 portant une chaîne (ch 48) est solidaire de la roue 46 et tourne avec elle, ce qui entraine la roue 49. La pièce 42 coulisse en descendant et en remontant le long de 4 tiges (t1, t2, t3 et t4) qui sont fixées à la base 50 (voir fig 73). La fig 75 illustre ce qui se passe quand le pied tire vers le haut grâce aux pièces 25 et/ou 26 ajoutées à la plateforme (21) selon le concept de la fig 44: le ressort r1 se comprime, le ressort r2 se détends, se qui entraine vers le haut la pièce en forme de S fixée sous la plateforme, cela poussant la pièce en forme de T (43) VERS LA GAUCHE, l'embrayage se faisant alors avec la roue dentée 44; comme la pièce 42 se déplace VERS LE HAUT le long des 4 tiges (t1 à t4), cela fait tourner la roue 44 dans le sens indiqué, ce qui fait tourner la roue 47 (qui est solidaire de la roue 44), la chaîne (ch 47) faisant alors tourner la roue 52 (voir fig 75), ce qui entraine la roue 49 dans le sens indiqué. Les ressorts 43 et r4 servent à garder les pièces 43 et 45 en contact avec la pièce 42 quand elles ne sont pas embrayées avec la roue (44 ou 46) correspondante.

Remarquez ceci:
- que le pied POUSSE VERS LE BAS (fig 72) ou TIRE VERS LE HAUT (fig 75 ), la roue arrière 49 (qui symbolise la roue arrière d'une bicyclette) tourne TOUJOURS DANS LE MÊME SENS,
- dans le cas d'un pédalier CIRCULAIRE, il y a 2 POINTS MORTS, celui du haut et celui du bas; au point mort du haut, la contraction du fessier est une dépense d'énergie INUTILE car la ligne d'action de la force passe par le centre du pédalier, ce qui ne produit AUCUN effet de levier sur la manivelle. Similairement, au point mort du bas, la contraction du psoas-iliaque (qui tire le pied vers le haut) n'a AUCUN effet de levier sur la manivelle.

Le pédalier VERTICAL décrit ici n'a AUCUN POINT MORT! En effet, L'EFFET DE LEVIER est TOUJOURS MAXIMUM car la force dirigée VERS LE BAS (fig 72) ou VERS LE HAUT(fig 75) est TOUJOURS PERPENDICULAIRE (tangente) aux roues 44 et 46. Donc, le FESSIER (pour la poussée vers le bas et LE PSOAS-ILIAQUE (pour la traction vers le haut) ont tous deux un RENDEMENT ÉNERGITIQUE parfait: il N'Y A PLUS de contraction musculaire SANS déplacement mécanique, comme c'est le cas avec un pédalier circulaire! Voilà pour le mécanisme à déplacement VERTICAL du pied. Le but qui était visé ici n'était pas de décrire LE concept PARFAIT de MÉCANISME à déplacement vertical,
c'est-à-dire celui avec la TECHNIQUE parfaite; on pourrait en effet décrire presque une infinité de concepts TECHNIQUES qui accompliraient le même résultat que celui que nous venons de décrire. Nous voulions ici simplement expliquer un PRINCIPE, à l'effet qu'il est (techniquement) POSSIBLE d'obtenir un mouvement de rotation CONTINU de la roue (49) toujours DANS LE MÊME SENS, peu importe que le pied monte ou descende,et SANS POINTS MORTS.

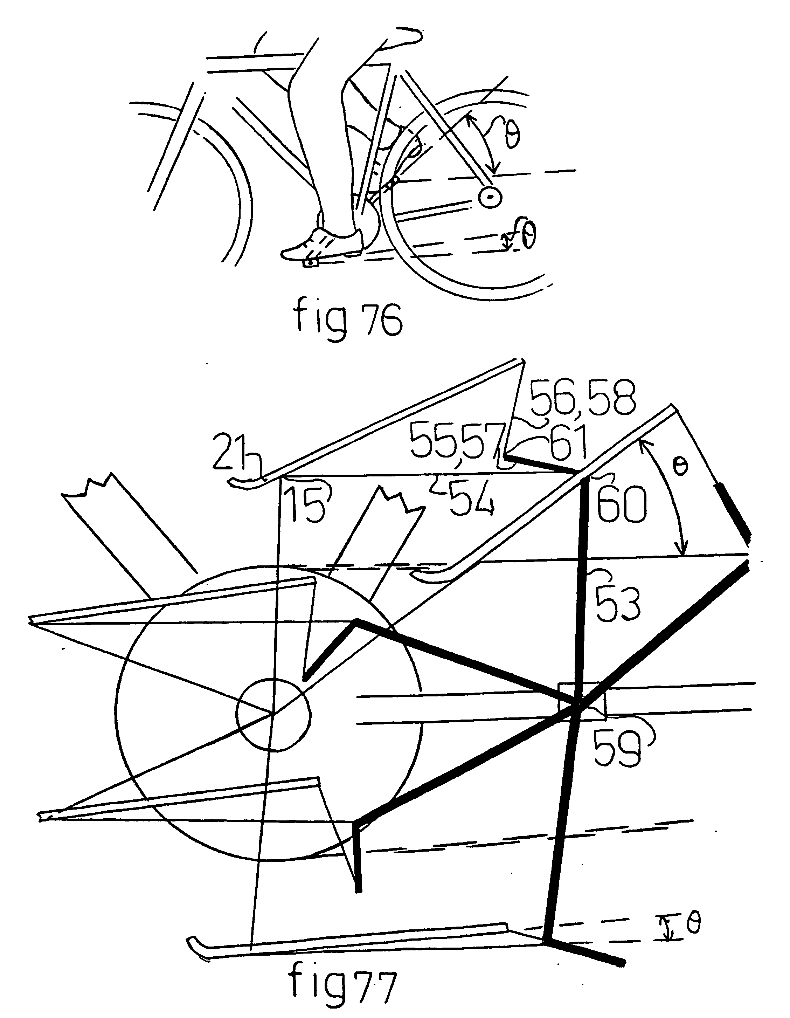

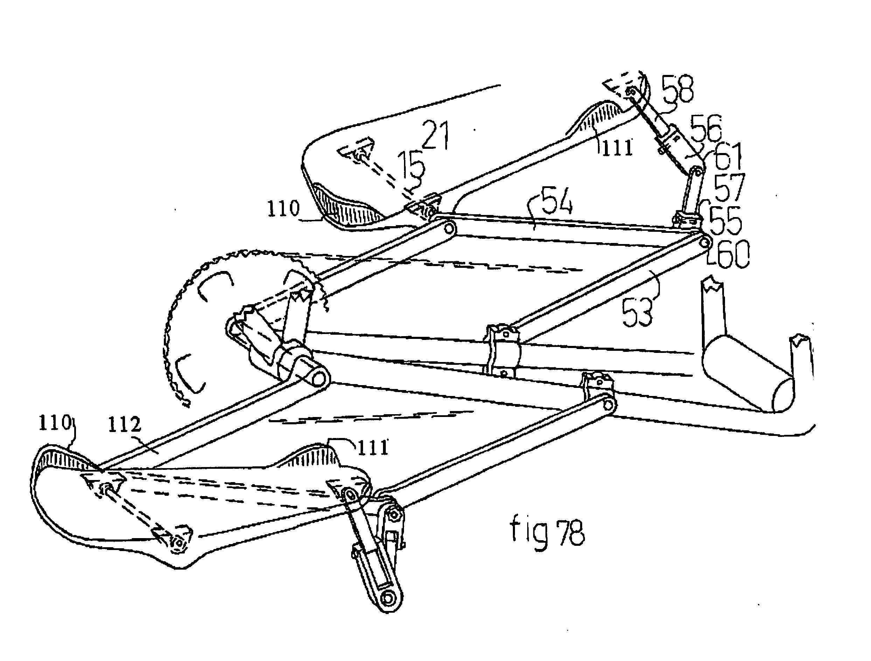

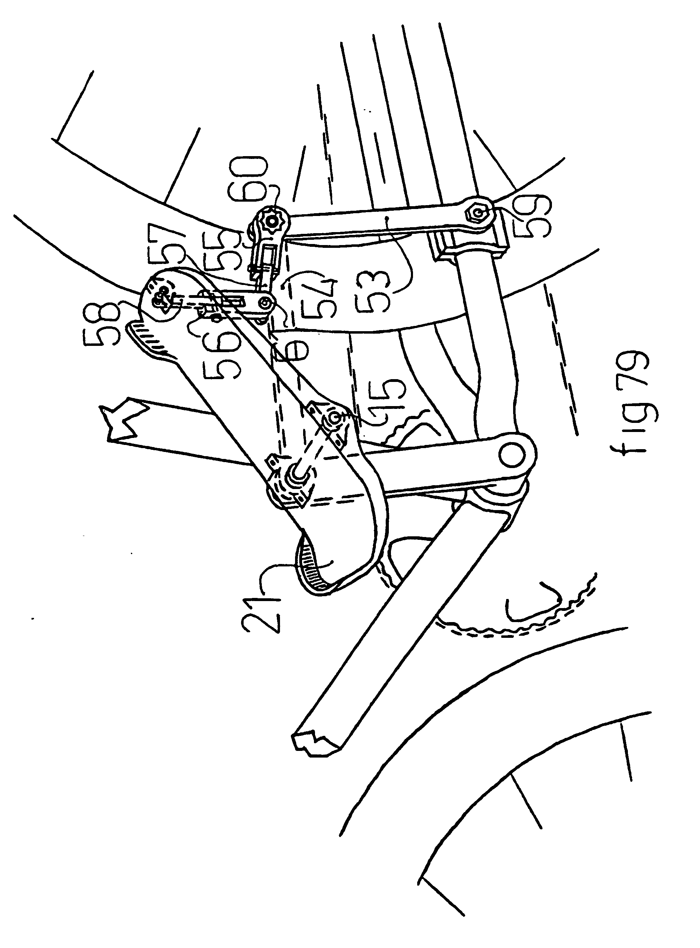

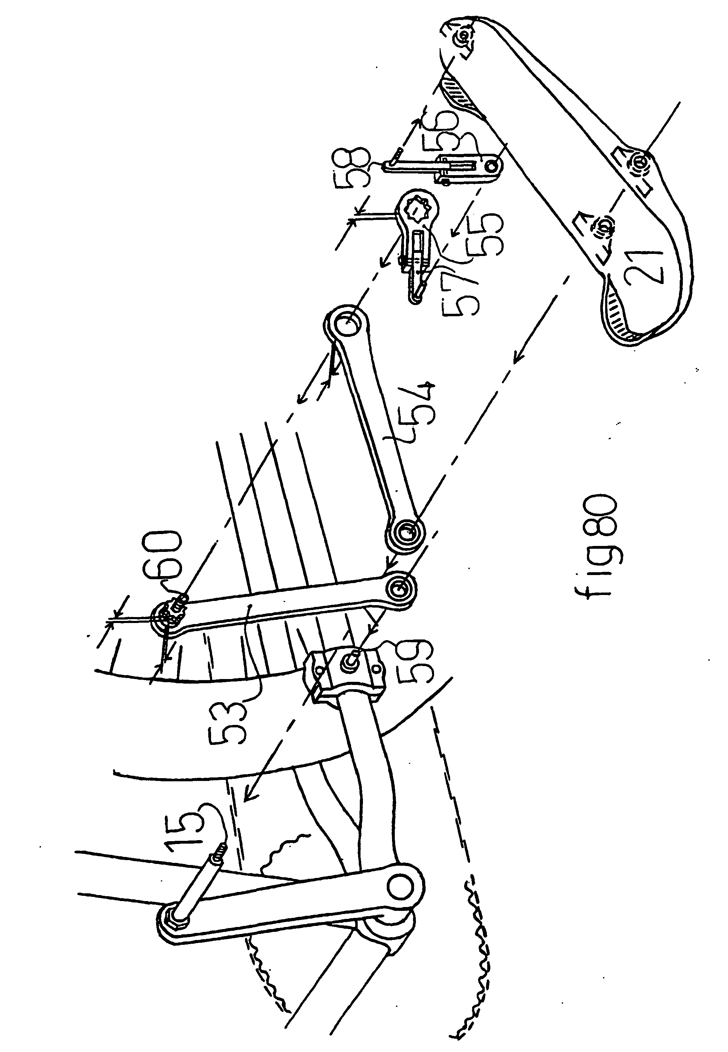

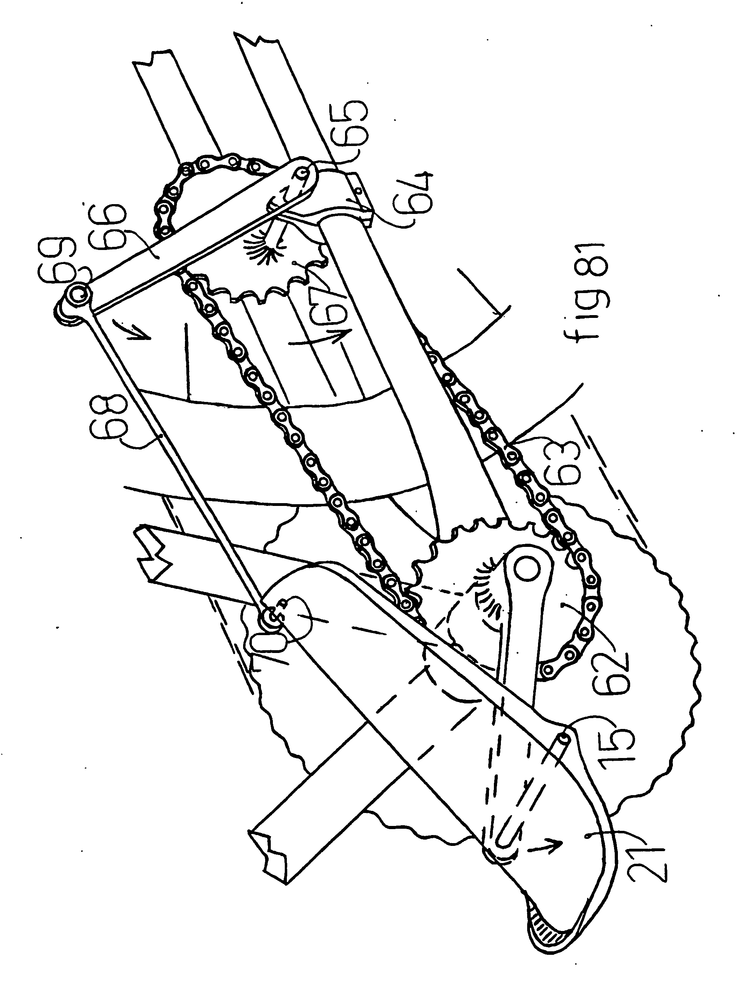

La fig 76 illustre le pédalier circulaire habituel, le cycliste pédalant selon la façon recommandée par les experts, c'est-à-dire avec l'articulation des orteils posée sur l'axe de la pédale. L'angle θ est l'angle d'inclinaison du dessous du pied par rapport au sol; on remarque que cet angle AUGMENTE CONSIDERABLEMENT quand le pied remonte par l'arrière. Les mécanismes que nous allons maintenant décrire supportent la plateforme et guident celle-ci de façon à ce que cet angle θ AUGMENTE quand le pied remonte par l'arrière, exactement comme pour le pédalier circulaire habituel; ainsi, l'utilisateur de cette invention ne remarquera AUCUNE DIFFÉRENCE par rapport au pédalier circulaire. La fig 78 illustre l'ensemble du mécanisme (les 2 pieds); la fig 79 illustre seulement le pied gauche; la fig 80 illustre le mécanisme de la fig 79 DÉCOMPOSÉ, et la fig 77 illustre LE DÉPLACEMENT des différentes pièces pour un tour complet de 360 degrés: on voit très nettement que l'angle θ AUGMENTE quand le pied remonte par l'arrière.
Fig 80: la pièce 57 peut se placer à la position désirée à l'intérieur de la fente de la pièce 55, ce qui fait que la pièce combinée 57 ET 55 est de longueur ajustable; il en va de même des pièces 58 et 56. Fig 79: les pièces 55+57 et 58+56 sont réunis par l'axe de rotation libre 61; mais l'axe de rotation 60 est FIXE : en effet, l'axe en forme de trou étoilé de la pièce 55 (fig 80) s'insère À LA POSITION DÉSIRÉE dans l'étoile de l'axe 60, ce qui permets de contrôler l'angle entre la pièce 53 et la pièce 55+57, et cet angle RESTE CONSTANT une fois choisi. Le but visé par la longueur AJUSTABLE des pièces 56+58 et 55+57, ainsi que par le contrôle de l'angle entre les pièces 53 et 55+57 est de permettre de CHOISIR l'angle d'inclinaison du dessous du pied par rapport au sol que le cycliste DÉSIRE AVOIR (pour le confort) selon la taille de la personne. A remarquer que la longueur de la pièce horizontale 54 est choisie de façon à ce que la pièce 53 soit toujours PARALLÈLE à la manivelle du pédalier; l'axe de rotation du bas de la pièce 53, soit 59, se fait grâce à un support fixe au tube du bas du cadre (fig 79).

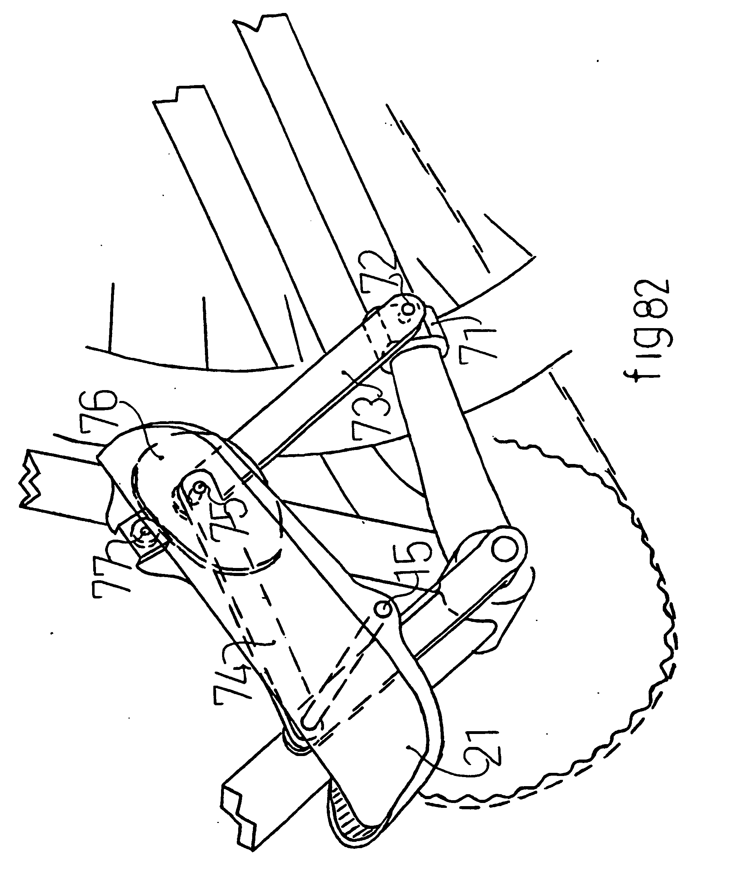

Fig 81: dans ce concept, la plateforme 21 est fixée par l'avant à l'axe de rotation 15, où était la pédale auparavant. Une pièce 64 est fixée au tube du bas du cadre et constitue un axe de rotation libre pour l'essieu 65 qui relie ensemble la manivelle 66 et la came dentée 67: cette came 67 tourne AVEC la manivelle 66; cette came 67 est DE MÊME CIRCONFÉRENCE que la roue 62 qui est SOLIDAIRE de la manivelle avant :
la roue 62 et la came 67 ont le même nombre de dents et sont reliées par la chaîne 63; le haut de la manivelle 66 est reliée à la tige 68 par un point de rotation libre 69, et l'avant de tige 68 est relié à l'arrière de la plateforme par un point de rotation libre 70. La TENSION DE TRACTION est TOUJOURS dans LE BAS de la chaîne: la tension de traction dans la portion DU HAUT de la chaîne est toujours de ZÉRO; dans la position de manivelle illustrée, la portion du haut de la chaîne n'est pas pendante à cause de la position de la came 67, mais pour les autres positions de manivelle, la portion du haut de la chaîne devient pendante. La forme de la came, sa position (par rapport à la pièce 66), et la longueur de la tige 68 sont choisies de façon à obtenir un angle d'inclinaison du pied par rapport au sol (l'angle θ, fig 76) qui AUGMENTE quand le pied remonte par l'arrière.

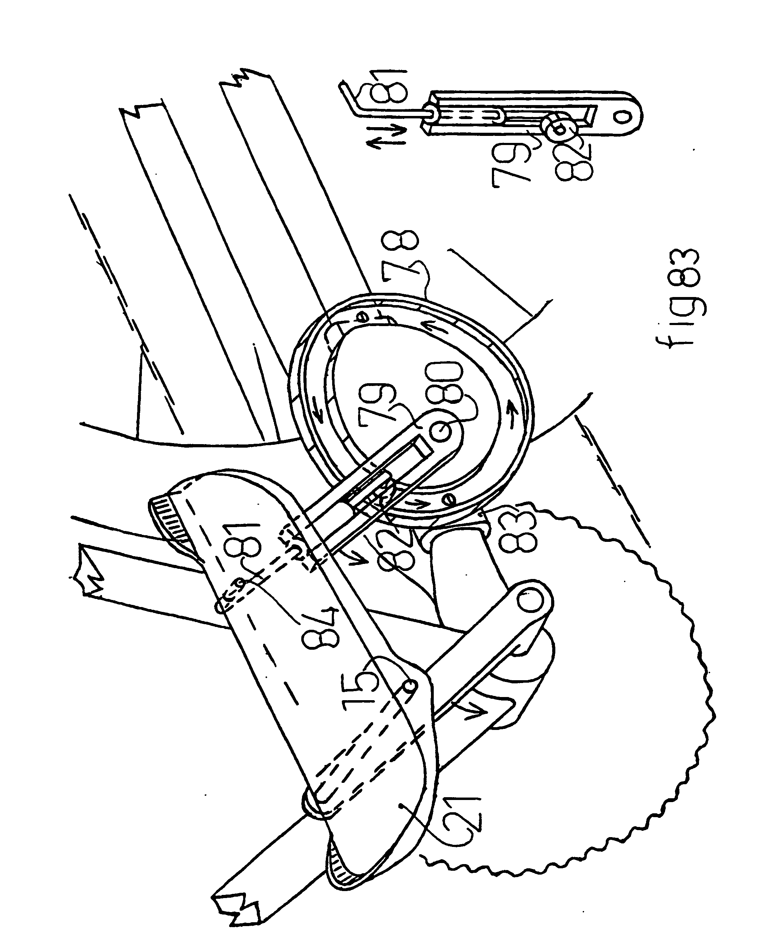

Fig 83: la came 78 est fixée au tube du bas du cadre par le support 83: cette came NE BOUGE PAS et contient une rainure incrustrée sur sa circonférence dans laquelle se promène la petite roue 82 quand le pédalier tourne. La pièce 79 se déplace toujours PARALLÈLEMENT à la manivelle du pédalier, son axe de rotation libre étant 80; une petite tige coudée aux deux bouts (en sens inverse) 81 fait du va et vient à l'intérieur du tube qui est fixe au haut de la pièce 79: la pièce 81 porte la petite roue 82 sur le coude du bas, le coude du haut s'insérant dans l'arrière de la plateforme par l'axe de rotation libre 84. La forme de la rainure de la came 78 et sa position sur le tube du bas du cadre sont choisies de façon à obtenir un angle d'inclinaison du pied par rapport au sol (l'angle θ, fig 76) qui AUGMENTE quand le pied remonte par l'arrière.

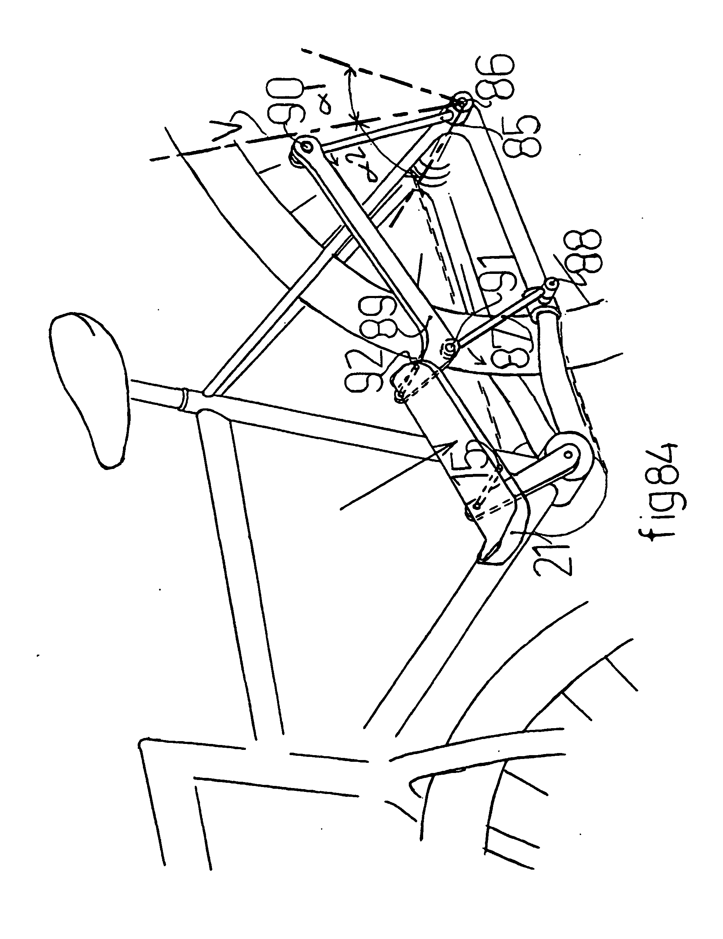

Fig 84: une tige 85 possède un axe de rotation LIBRE 86 situé sur l'axe de rotation de la roue arrière. IMPORTANT: cette tige 85 ne fait JAMAIS de rotation complète (360 degres) car elle fait du va et vient selon les angles α1 et α2 par rapport à la verticale V: son déplacement MAXIMUM est donc (α1 + α2). La tige 87 est fixée au tube du bas du cadre par le point de rotation libre 88: cette tige 87 fait une rotation complète de 360 degrés pour un tour complet de pédalier. La tige 87 est toujours PARALLÈLE à la manivelle du pédalier, mais pas la tige 85. Le haut des tiges 85 et 87 sont reliées à la pièce coudee 89 par les points de rotation libres 90 et 91. Le troisième point de rotation 92 de la pièce coudée 89 est fixé à l'arrière de la plateforme 21. La longueur des tiges 85 et 87 ainsi que la forme de la pièce coudée 89 sont choisies de façon à ce que l'angle d'inclinaison du pied par rapport au sol (angle θ, fig 76) AUGMENTE quand le pied remonte par l'arrière.

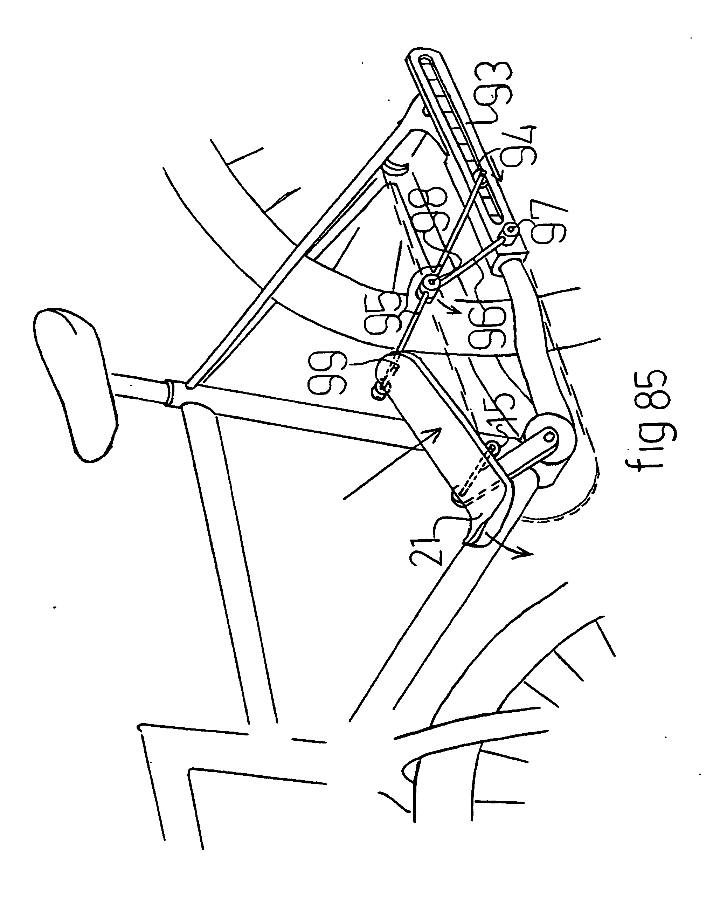

Fig 85: une pièce 93 comportant une rainure est fixée au tube du bas du cadre; à l'intérieur de cette rainure, une roue 94 fait du va et vient; à cette roue 94 est fixée une tige 95 dont l'autre bout est fixé à l'arrière de la plateforme 21 par le point de rotation libre 99; à peu pres au centre de cette tige 95 est fixé le point de rotation du haut 98 de la tige 96, le bas de cette tige 96 étant fixé à l'avant de la pièce 93 par le point de rotation libre 97. La tige 96, étant toujours parallèle à la manivelle du pédalier, décrit un tour complet de 360 degrés par tour de pédalier. La longueur de la tige 95 ainsi que l'emplacement (sur la tige 95) du point de rotation 98 sont choisis de telle façon que l'angle d'inclinaison du pied par rapport au sol (l'angle θ, fig 76) AUGMENTE quand le pied remonte par l'arrière.

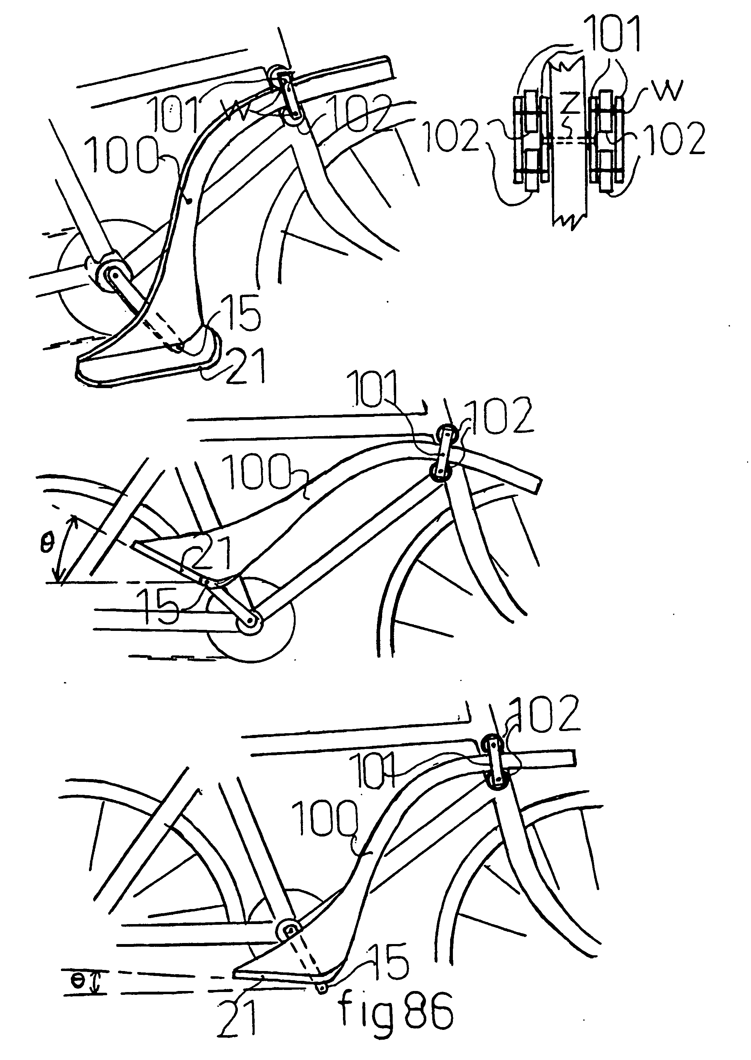

Fig 86: la pièce courbée rigide 100 est fixée à la plateforme 21, 21 et 100 faisant comme une seule pièce, l'avant de la plateforme étant fixée à l'axe de la manivelle, là où était la pédale auparavant (15). La portion courbée du haut de la pièce 100 s'insère ENTRE deux roues 102 qui viennent s'appuyer sur les côtés de la pièce 100, ces deux roues 102 tournant autour de deux axes W qui retiennent ensemble les 2 pièces parallèles et rectangulaires 101; la pièce 101, située entre le tube du cadre du vélo et les deux roues 102, tourne librement (par son centre) autour de l'axe Z qui traverse le tube du cadre;sur le dessin en haut à gauche, seul le côté droit est illustré, tandis que sur le dessin à droite, les deux côtés sont illustrés, l'axe Z reliant en même temps les deux côtés). Sur les deux autres dessins, il est évident que l'angle d'inclinaison du pied par rapport au sol (l'angle θ) AUGMENTE quand le pied remonte par l'arrière, ce qui est le but visé, selon la fig 76.

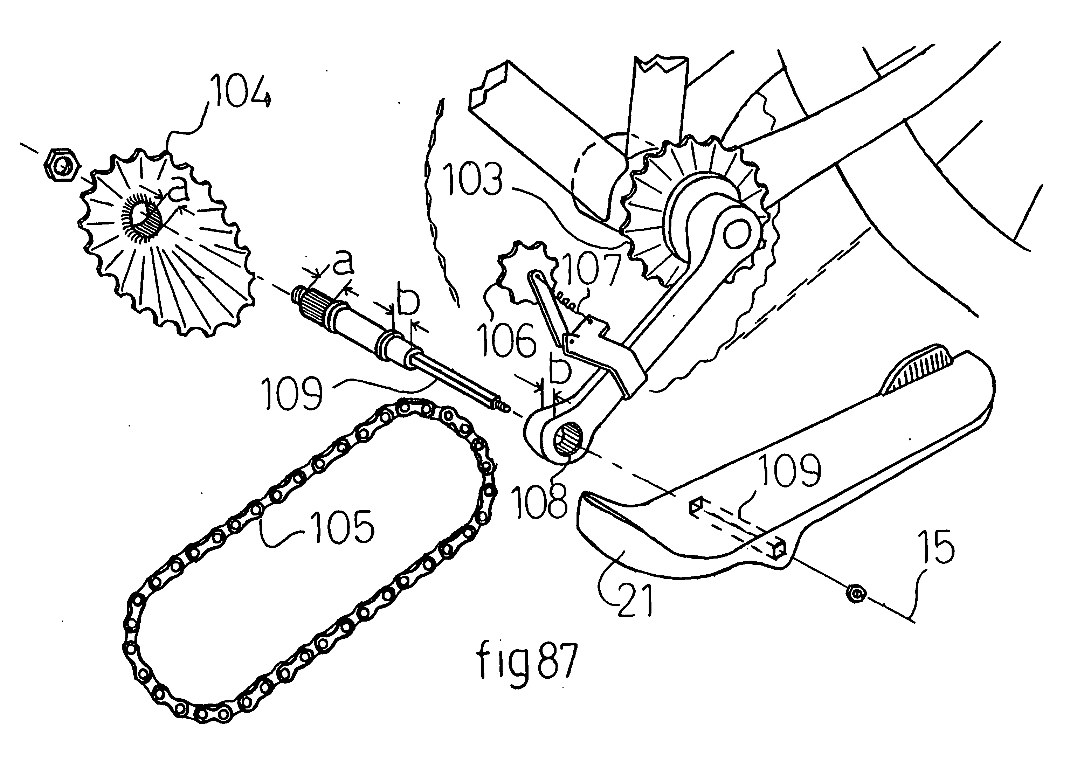

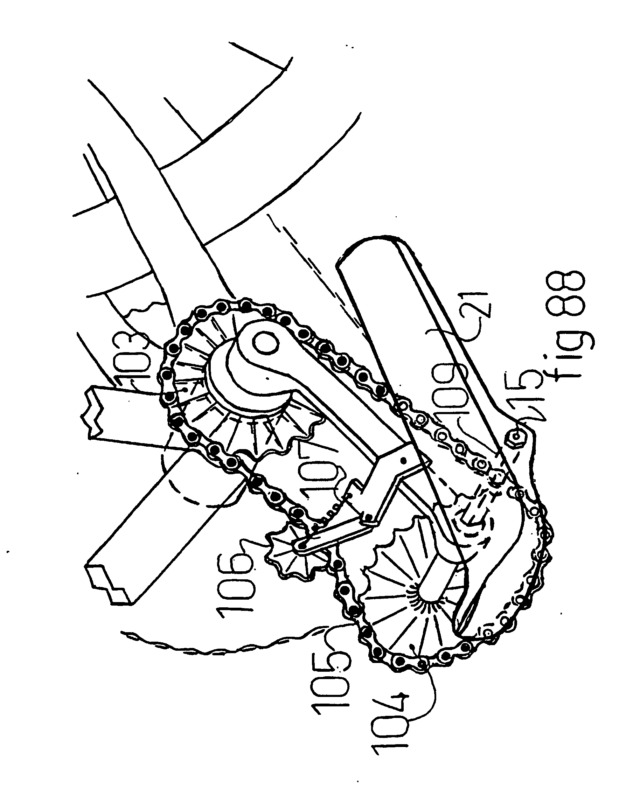

Fig 87-88: le côté gauche seul est illustré. Une roue 103 est installée de facon FIXE, stationnaire (soudée) sur le boitier de l'axe du pédalier: cette roue NE TOURNE PAS, car c'est la chaine 105 qui fait le tour de cette roue quand le pédalier tourne. La portion CARRÉE de l'essieu 109 s'insère dans le trou CARRÉ 109 situé à l'avant de la plateforme 21, la portion (b) de ce même essieu s'insérant dans la portion (b) du bout de la manivelle (qui contient des roulements cyclindriques); la portion (a) de ce même essieu s'insère dans la portion (a) de la came 104 et, grâce aux RAINURES de la portion (a), cet essieu est SOLIDAIRE de la came 104; donc, la came 104, l'essieu et la plateforme 21 SONT TOUS SOLIDAIRES et forment COMME UNE SEULE PIECE, les rainures de la portion (a) de l'essieu permettant DE CHOISIR la position RELATIVE de la plateforme 21 par rapport à la came 104, ce qui permets DE CHOISIR la valeur numérique de l'angle θ quand le pied remonte par l'arrière (selon la fig 76); il est évident que la circonférence de la came 104 doit être la même que la circonférence de la roue FIXE 103, les deux ayant le même nombre de dents. La pression sur la plateforme se faisant À L'ARRIÈRE par le talon, il est évident que LA TENSION (de traction) sur la chaîne 105 se fait TOUJOURS dans la portion DU BAS de la chaîne, la tension dans la portion du haut de la chaîne 105 étant toujours NULLE:
c'est la raison de l'existence du tenseur de chaîne 106 à ressort 107. La FORME de la came 104 ainsi que sa position RELATIVE par rapport à la plateforme 21 (contrôlée par les rainures de la portion (a) de l'essieu) permettent d'obtenir une augmentation de l'angle θ quand le pied remonte par l'arrière (selon l'explication de la fig 76).

Nous avons utilisé le CAS PARTICULIER du CYCLISME pour expliquer L'INUTILITÉ du MOLLET et du JAMBIER ANTÉRIEUR quand on utilise DES PÉDALES; il est évident qu'on peut appliquer ces résultats d'une facon UNIVERSELLE à TOUT ce qui utilise des PÉDALES (pédalo, exerciseur stationnaire, avion à pédales! etc...), en remplacant ces pédales par un mécanisme approprié à chaque cas particulier.

Les mécanismes qui ne font pas usage d'une plateformer (ou une pédale supportamt la totalité du pied) ne font PAS partie de l'invention revendiquée. Les mécanismes impliqués sont:
- les mécanismes à cordes (fig 49, 50 et 51),
- la bottine rigide (fig 52 et 53).

## Revendications

1. Un **DISPOSITIF POUR PÉDALIER** comprenant:
**A****)** une **pédale** formant une plateforme et ayant une longueur permettant de supporter substantiellement le dessous du pied du cycliste, de l'articulation des orteils au talon;
**B****)** une **chaussure**
**C****)** un **mécanisme** permettant le contrôle de l'angle d'inclinaison de ladite pédale **(****A****)** par rapport au sol durant un cycle complet de pédalage,
ladite **pédale (****A****)** et ladite **chaussure (****B****) étant CARACTÉRISÉES** en ceci:
- ladite **pédale (****A****)** inclus une pièce rigide (25), épousant le contour de la chaussure (28), montée sur le côté intérieur de la plateforme en position fixe, la courbure de cette pièce rigide (25) étant substantiellement la même que la courbure de la chaussure de façon à ce que la chaussure, une fois en place sur la pédale (21), est maintenue en position fixe, le talon de la chaussure touchant la pédale (21), l'extrémité supérieure de la pièce rigide (25) étant courbée vers le haut, la pièce rigide (25) ne recouvrant pas le côté extérieur de la chaussure par rapport à la bicyclette;
- ladite **pédale (****A****)** inclus un essieu (26), monté en position fixe sur le côté intérieur de la pédale (21) parallèlement à la surface de la pédale, ladite position fixe permettant l'insertion de l'essieu (26) approximativement dans le milieu du talon de la chaussure;
- ladite **chaussure (****B****)** inclus un trou (27), l'ouverture du trou étant élargie en forme d'entonnoir, ledit trou (27) étant positionné de telle façon que, quand la chaussure (28) est dans sa position finale, c'est à dire quand l'essieu (26) est complètement inséré dans le trou (27) de la chaussure (28), le talon de la chaussure est en contact avec la pédale.

2. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu (15);
- un **mécanisme (****C****)** qui permets au mouvement de la pédale (21) d'être substantiellement identique au mouvement du dessous d'une chaussure quand une pédale supportant seulement l'articulation des orteils est utilisée, la totalité du dessous de la chaussure étant continuellement en contact avec la pédale (21) durant un cycle complet de rotation du pédalier,
ledit **mécanisme (****C****)** de ce **dispositif pour pédalier** étant **CARACTÉRISÉ** en ceci:
- l'essieu (15) comprends une portion circulaire (b) tournant librement dans un trou circulaire situé à l'extrémité de la manivelle, ledit trou contenant des cyclindres de roulement (108 b), la partie carrée de l'essieu (109) s'insérant dans le trou carré (109) à l'avant et sous la pédale (21), ledit trou carré ayant les mêmes dimensions que la partie carrée de l'essieu (109), ce trou carré dans la pédale étant percé parallèlement à la surface de la pédale et étant solidaire de la pédale (21); la partie rainurée de l'essieu (109a) s'introduit dans le trou rainuré de la came dentée (104a), la partie rainurée de l'essieu et le trou rainuré étant de mêmes dimensions, les rainures permettant de choisir le degré d'inclinaison de la pédale (21) par rapport à la came dentée (104) et de rendre solidaires la came dentée (104), l'essieu (109, a, b) et la pédale (21), comme s'il s'agissait d'une seule pièce rigide; une roue circulaire dentée (103) montée en position fixe sur le boîtier du pédalier, cette roue ne pouvant pas tourner : c'est la chaîne (105) qui tourne autour de cette roue fixe dentée (103) quand le pédalier tourne; une came dentée (104) ayant le même nombre de dents que la roue circulaire dentée(103), la came dentée (104) et la roue circulaire dentée (103) étant reliées entre elles par une chaîne de traction (105) équippée d' un tenseur de chaîne à ressort (106, 107), la position relative de la came (104) par rapport à l'essieu (109) étant choisie de façon à obtenir le degré d'inclinaison de la pédale (21) par rapport au sol que l'on désire obtenir, durant un cycle complet de rotation du pédalier.

3. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu;
- un **mécanisme (****C****)** qui permets au mouvement de la pédale (21) d'être substantiellement identique au mouvement du dessous d'une chaussure quand une pédale supportant seulement l'articulation des orteils est utilisée, la totalité du dessous de la chaussure étant continuellement en contact avec la pédale (21) durant un cycle complet de rotation du pédalier,
ledit **mécanisme (****C****)** de ce **dispositif pour pédalier** (fig 86) étant **CARACTÉRISÉ** en ceci :
- il comprends une pièce rigide de forme irrégulière (100), la partie du bas de cette pièce rigide (100) étant montée en position fixe sur le côté intérieur de la pédale (21); la partie du haut de cette pièce rigide (100) possédant une courbure telle que:
i) quand la partie du haut fait du va et vient entre les roues (102) pendant une rotation complète du pédalier, on obtiens le degré désiré d'inclinaison de la pédale (21);
ii) la partie du haut de cette pièce rigide (100) qui fait du va et vient entre les roues (102) est de largeur uniforme de façon à toucher continuellement à chacune des 2 roues (102) qui viennent s'appuyer en tournant sur les deux bordures de la pièce rigide irrégulière courbée( 100);
- il comprends deux roues (102) montées de chaque côté du cadre du vélo dans un plan parallèle au cadre , les deux roues étant reliées ensemble par deux pièces rectangulaires (101) situées de chaque côté des deux roues grâce à deux axes de rotation (W), la pièce rectangulaire (101) située entre le cadre du vélo et les deux roues (102) étant montée par son centre au cadre du vélo grâce à un axe de rotation (Z), ce qui permets à la pièce combinée (101 et 102) de tourner autour de l'axe (Z) quand le pédalier tourne, cela permettant de garder le contact de façon tangente entre les deux roues et les deux bordures de la pièce rigide (100) sur lesquelles tournent les roues (102).

4. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu;
- un **mécanisme (****C****)** qui permets au mouvement de la pédale (21) d'être substantiellement identique au mouvement du dessous d'une chaussure quand une pédale supportant seulement l'articulation des orteils est utilisée , la totalité du dessous de la chaussure étant continuellement en contact avec la pédale (21) durant un cycle complet de rotation du pédalier,
- un axe de rotation (59) monté sur un collet installé en position fixe autour du tube horizontal du bas du cadre soutenant la roue arrière du vélo;
- une manivelle (53) de même longueur que la manivelle du pédalier se déplaçant toujours parallèlement avec la manivelle du pédalier, cette manivelle (53) tournant librement sur l'axe de rotation (59),
ledit **mécanisme (****C****)** de ce **dispositif pour pédalier** étant **CARACTÉRISÉ** en ceci:
- une pièce horizontale (54) reliant les extrémités du haut de la manivelle (53) et de la manivelle du pédalier; une pièce (55) comportant un trou avec des dents s'insérant dans l'axe (60) avec des dents similaires à l'extrémité tournante de la manivelle (53), cette pièce (55) étant donc solidaire de la manivelle (53), le trou comportant des dents (55) permettant de choisir l'angle entre les pièces (55 et 53), cet angle demeurant constant pendant la rotation de 360 degrés du mécanisme;une pièce droite (57) pouvant s'ajuster à la position désirée dans la fente de la pièce (55) au moyen d'un petit écrou qui traverse l'élément coulissant (57) et la pièce (55), ce qui permets de choisir la longueur de la pièce combinée (55 plus 57); un axe de rotation fixe au bout de la pièce (57) qui s'insère dans le trou de la pièce (56); une pièce (58) pouvant s'ajuster à longueur désirée d'une façon similaire à la pièce (55) dans la fente de la pièce (56), ce qui permets de choisir la longueur de la pièce combinée (56 plus 58); un axe de rotation fixe au bout de la pièce (58) qui s'insère dans un trou de rotation fixe situé à l'arrière de la plateforme (21).

5. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu;
- un **mécanisme (****C****)** qui permets au mouvement de la pédale (21) d'être substantiellement identique au mouvement du dessous d'une chaussure quand une pédale supportant seulement l'articulation des orteils est utilisée, la totalité du dessous de la chaussure étant continuellement en contact avec la pédale (21) durant un cycle complet de rotation du pédalier,
- un axe de rotation (65) monté sur un collet (64) installé en position fixe autour du tube horizontal du bas du cadre soutenant la roue arrière du vélo;
- une manivelle (66) de même longueur que la manivelle du pédalier se déplaçant toujours parallèlement avec la manivelle du pédalier, cette manivelle (66) tournant librement sur l'axe de rotation (65),
ledit **mécanisme (****C****) de ce dispositif pour pédalier** étant **CARACTÉRISÉ** en ceci:
- il comprends une came dentée (67), donc non circulaire, qui est de même circonférence que la roue dentée circulaire (62), les deux ayant le même nombre de dents, ladite came (67) étant soudée sur l'extrémité intérieure de l'essieu (65), l'extrémité fixe de la manivelle (66) étant soudée à l'extrémité extérieure de l'essieu (65) de telle façon que la came dentée (67), l'essieu (65) et la manivelle (66) sont solidaires: quand la manivelle (66) tourne, la came (67) tourne avec la manivelle (66), l'essieu (65) qui les relie tournant librement dans le haut du collet (64); une roue dentée (62) dont le centre coïncide avec l'axe de rotation du pédalier, et qui est solidaire la manivelle du pédalier, la roue (62) tournant avec la manivelle du pédalier; la came dentée (67) et la roue dentée (62) sont activées en rotation par une chaîne de traction (63) qui les relie; une tige rigide (68) dont une extrémité comporte un joint de rotation (70) situé à l'arrière de la pédale (21) et du côté intérieur et dont l'autre extrémité comporte un autre joint de rotation (69) situe à l'extrémité mobile de la manivelle (66).

6. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu;
- un **mécanisme (****C****)** qui permets au mouvement de la pédale (21) d'être substantiellement identique au mouvement du dessous d'une chaussure quand une pédale supportant seulement l'articulation des orteils est utilisée, la totalité du dessous de la chaussure étant continuellement en contact avec la pédale (21) durant un cycle complet de rotation du pédalier,
- un axe de rotation (88) monté sur un collet installé en position fixe autour du tube horizontal du bas du cadre soutenant la roue arrière du vélo;
- une manivelle (87) de même longueur que la manivelle du pédalier se déplaçant toujours parallèlement avec la manivelle du pédalier, cette manivelle (87) tournant librement sur l'axe de rotation (88),
ledit **mécanisme (****C****)** de ce **dispositif pour pédalier** étant **CARACTÉRISÉ** en ceci:
- il comprends une pièce rigide (89) comportant un coude en forme de **L** inversé, ladite pièce (89) comportant 3 joints de rotation (90, 91 et 92); une manivelle (85) dont une extrémité tourne librement autour d'un joint de rotation (86) coïncidant avec l'axe de la roue arrière du vélo, mais indépendamment de cet axe de rotation de la roue arrière du vélo, la rotation de la roue arrière du vélo n'ayant aucune influence sur le déplacement libre de la manivelle (85), le joint de rotation (90) situé à l'extrémité de la pièce rigide (89) étant monté sur un axe de rotation situé à l'extrémité mobile de la manivelle (85), le joint de rotation (92) situé à l'autre extrémité de la pièce rigide (89) étant monté sur un axe de rotation situé à l'arrière de la pédale (21) sur le côté intérieur de la pédale (21), le joint de rotation (91) situé sur le coude de la pièce (89) étant monté sur un axe de rotation situé sur l'extémité mobile de la manivelle (87), la position triangulaire exacte des 3 joints de rotation (90, 91 et 92) sur la pièce rigide (89) et la longueur de la manivelle (85) étant choisies de telle sorte que, quand la manivelle (87) fait une rotation complète de 360 degrés, la manivelle (85) ne fais pas un tour complet mais fait plutôt du va et vient par rapport à la droit verticale imaginaire.

7. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu;
- un **mécanisme (****C****)** qui permets au mouvement de la pédale (21) d'être substantiellement identique au mouvement du dessous d'une chaussure quand une pédale supportant seulement l'articulation des orteils est utilisée, la totalité du dessous de la chaussure étant continuellement en contact avec la pédale (21) durant un cycle complet de rotation du pédalier,
ledit **mécanisme (****C****)** de ce **dispositif pour pédalier** étant **CARACTÉRISÉ** en ceci:
- il comprends une pièce (93) montée en position fixe le long du tube du bas du cadre supportant la roue arrière, cette pièce (93) comportant une rainure à l'intérieur de laquelle une roue (94) peut tourner en faisant du va et vient le long de la rainure, ladite rainure étant droite; une tige rigide (95), une extrémité de cette tige rigide (95) portant un joint de rotation monté sur l'axe de rotation de la roue (94), l'autre extrémité de la tige rigide(95) portant un joint de rotation monté sur un axe de rotation (99) situé à l'arrière de la pédale (21) du côté intérieur; une autre tige rigide (96) dont une extrémité porte un joint de rotation (97) monté sur un axe de rotation fixe situé à l'avant de la pièce(93) juste avant le début de la rainure, l'autre extrémité mobile de la tige rigide (96) portant aussi un joint de rotation (98) monté sur un axe de rotation situé en position fixe sur la tige rigide (95) approximativement au centre de la tige rigide (95).

8. Un **DISPOSITIF POUR PÉDALIER** *selon la revendication 1,* comprenant:
- un essieu (15) étant fixé à une manivelle de pédalier et étant activé par le pied du cycliste dans la direction de la rotation de ladite manivelle, la portion de la pédale (21) qui supporte l'articulation des orteils du pied étant située substantiellement directement au dessus dudit essieu;
- un **mécanisme (****C****)** qui permets au mouvement de la pédale (21) d'être substantiellement identique au mouvement du dessous d'une chaussure quand une pédale supportant seulement l'articulation des orteils est utilisée, la totalité du dessous de la chaussure étant continuellement en contact avec la pédale (21) durant un cycle complet de rotation du pédalier, ledit **mécanisme (****C****)** de ce **dispositif pour pédalier** (fig 83) étant **CARACTÉRISÉ** en ceci:
- il comprends un collet (83) entourant le tube du bas du cadre en position fixe, ce collet (83) servant de support pour la came (78), ladite came (78) portant une rainure sur sa circonférence à l'intérieur de laquelle tourne une roue (82), ladite came (78) étant montée en position fixe sur le collet (83), une manivelle (79) comportant un axe de rotation au bas (80) monté sur la partie centrale de la came (78), cette manivelle comportant une ouverture en haut de laquelle est soudé un cyclindre creux; à l'intérieur de ce cylindre creux coulisse librement une tige rigide (81), la dite tige rigide (81) étant coudée aux deux extrémités en sens inverse, le coude du bas de la tige rigide (81) portant une roue (82) qui tourne dans la rainure sur la circonférence de la came (78), le coude du haut de la tige rigide (81) s'insérant dans un axe de rotation (84) situé à l'arrière de la pédale (21) sur le côté intérieur de cette dernière.

9. Un **DISPOSITIF POUR PÉDALIER** *selon la revendication 1*, ledit **mécanisme (****C****)** du **DISPOSITIF POUR PÉDALIER** étant **CARACTÉRISÉ** en ceci:
- il comprends une pièce (39) comportant un trou, ladite pièce (39) tournant librement dans l'axe (15) du bout de manivelle du pédalier, la partie verticale de l'essieu rigide (40) en forme de L s'insérant dans le trou de la dite pièce (39) et pouvant coulisser en mouvement de va et vient dans le trou de la pièce (39), selon que le ressort (41) se compresse pendant l'extension de la jambe ou se détends pendant la flexion de la jambe du cycle de 360 degrés du pédalage, ledit ressort à compression (41) étant inséré le long de la portion verticale de l'essieu rigide (40) en forme de L entre l'intersection des côtés (37 et 38) et de la pièce (39).

10. Un **DISPOSITIF POUR PÉDALIER** *selon la revendication 1,* ledit **mécanisme (****C****)** du **DISPOSITIF POUR PÉDALIER** étant **CARACTÉRISÉ** en ceci:
- il comprends une pièce rigide en forme de Z déformé qui est montée en position fixe sous la pédale (21); une base rectangulaire (50), ladite base rectangulaire comportant 2 tiges rigides verticales (s1 et s2) montées en position fixe à l'avant de la base rectangulaire (50), deux autres tiges rigides verticales (s3 et s4) étant montées de façon similaire approximativement au centre de la base rectangulaire (50), et encore deux autres (s5 et s6) étant montées encore de façon similaire à l'arrière de la base rectangulaire (50), chacune de ces paires de tiges verticales (s1 + s2, s3 + s4, s5 + s6) portant à leur extrémité du haut un axe de rotation horizontal sur lequel sont montées 2 roues d'engrenage en position fixes (44 et 47 pour s1 + s2, 46 et 48 pour s3 + s4, 51 et 52 pour s5 +s6), chacune de ces paires de roues d'engrenages étant solidaires l'une de l'autre, une chaine de traction (ch47) reliant ensemble les roues d'engrenage (47 et 52), une autre chaine de traction (ch48) reliant ensemble les roues d'engrenage (48 et 51), la roue arrière du vélo (49) tournant *toujours dans le même sens* quand une ou l'autre des deux roues d'engrenages(51 ou 52) tourne, les roues d'engrenages (51 et 52) *tournant toujours dans le même sens* ; quatres tiges rigides (t1, t2, t3 et t4) montées verticalement sur la base (50) en position fixe; une forme cubique rigide (42), ladite formecubique comportant 4 trous rectangulaires ainsi que 4 trous verticaux sur les 4 coins allant de haut en bas verticalement, dans ces 4 trous s'insérant les 4 tiges rigides (t1, t2, t3 et t4), la forme cubique rigide (42) pouvant coulisser librement de haut en bas et de bas en haut le long des quatres tiges rigides (t1, t2, t3 et t4), la pièce en forme de Z déformé fixée sous la pédale faisant du va et vient de haut en bas et de bas en haut à l'intérieur de la forme cubique rigide (42) grâce aux 2 trous rectangulaires percés en haut et en bas de la forme cubique rigide (42), deux ressorts (r1 et r2) étant insérés dans les deux parties verticales de la pièce en forme de Z déformé fixé sous la pédale, ces deux ressorts (r1 et r2) se comprimant et se détendant en alternance pendant que la pièce en forme de Z déformé fixé sous la pédale fait du va et vient de bas en haut et de haut en bas à l'intérieur de la forme cubique rigide (42); une pièce rigide en forme de T (43) dont la partie verticale porte des dents d'embrayage pouvant s'insérer dans celles de la roue (44), la portion horizontale de la pièce (43) pouvant coulisser en un mouvement de va et vient dans le trou sur le côté avant de la forme cubique rigide (42) et porte un ressort à compression (r3) qui maintient la partie verticale de la pièce rigide en forme de T (43) appuyée sur le côté de la forme cubique (42) quand le bout incliné de cette pièce (43) n'est pas en contact avec la portion inclinée de la pièce déformée en forme de Z fixé sous la pédale; une autre pièce en forme de T (45) dont la partie verticale porte des dents d'embrayage pouvant s'insérer dans celles de la roue (46), la portion horizontale de la pièce (45) pouvant coulisser en un mouvement de va et vient dans le trou sur le côté arrière de la forme cubique rigide (42) et porte un ressort à compression (r4) qui maintient la partie verticale de la pièce rigide en forme de T (45) appuyée sur le côté de la forme cubique(42) quand le bout incliné de cette pièce (45) n'est pas en contact avec la portion inclinée de la pièce déformée en forme de Z fixé sous la pédale.

## Patentansprüche

1. Eine **Tretlagermontage** mit:
**A****)** einem **Pedal** in Form einer Plattform deren Größe der Unterseite des Fußes des Radfahrers, von dem Zehengelenk bis der Ferse, eine substanzielle Stütze sichert;
**B****)** einem **Schuh;**
**C****)** einer **Anlage,** die die Kontrolle des Inklinationswinkels des erwähnten Pedals **(****A****)** im Verhältnis zum Boden während eines vollständigen Tretzyklus ermöglicht,
Das erwähnte **Pedal (****A****)** und der erwähnte **Schuh (****B****)** werden davon geprägt, daß :
- das erwähnte **Pedal (****A****)** ein steifes Bauteil (25) enthaltet, das mit dem Verlauf des Schuhs (28) übereinstimmt; Dieses Bauteil wird an der inneren Seite der Plattform feststehend befestigt; Die Krümmung dieses steifen Bauteils (25) ist wesentlich dieselbe wie die Krümmung des Schuhs; Auf diese Weise verbleibt der Schuh in situ, wenn er in Position auf dem Pedal (21) liegt; Der Fersenbereich des Schuhs berührt das Pedal (21), die obere Spitze des steifen Bauteils (25) ist nach oben gekräuselt und das steife Bauteil (25) bedeckt nicht die äußere Seite des Schuhs beziehungsweise zum Fahrrad;
- das erwähnte **Pedal (****A****)** eine Achse (26) enthaltet, die an der inneren Seite des Pedals (21) feststehend befestigt wird; Diese Achse wird parallel zur Pedalfläche befestigt und ihre festgelegte Position erlaubt, die Achse (26) ungefähr in der Mitte des Fersenbereichs des Schuhs anzubringen;
- der erwähnte **Schuh (****B****)** ein Loch (27) enthaltet, dessen Öffnung sich trichterförmig erweitert; Das erwähnte Loch (27) ist so positioniert, daß der Fersenbereich des Schuhs das Pedal berührt, wenn der Schuh (28) seine Endposition erreicht, d.h. wenn die ganze Achse (26) in das Loch (27) des Schuhs (28) inseriert wird.

2. Eine **Tretlagermontage** *(nach dem Patentanspruch 1*) mit :
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse (15);
- einer **Anlage (****C****)**, die die Bewegung des Pedals (21) wesentlich dieselbe macht wie die einer Schuhunterseite wenn ein Pedal benutzt wird, das nur das Zehengelenk trägt; Die ganze Schuhunterseite berührt immer das Pedal (21) während eines vollständigen Tretzyklus,
Die erwähnte **Anlage (****C****)** der **Tretlagermontage** wird davon geprägt, daß :
- die **Achse** (15) ein kreisförmiges Teil (b) enthaltet, das frei in einem kreisförmigen Loch an der Spitze der Kurbel rotiert; Das erwähnte Loch enthaltet Zylinderrollenlager (108 b); Das viereckige Teil der Achse (109) wird in das viereckige Loch (109) vorne am Pedal (21) und unter diesem Pedal (21) inseriert; Das erwähnte viereckige Loch ist so groß und breit wie das viereckige Teil der Achse (109); Dieses viereckige Loch wird parallel zur Pedalfläche gebohrt und wird in dem Pedal (21) eingesetzt; Das einkerbte Teil der Achse (109a) wird in das einkerbte Loch der Zahnnocke (104a) inseriert; Das einkerbte Teil der Achse ist so groß und breit wie das Loch; Die Einschnitte erlauben, den Inklinationswinkel des Pedals (21) beziehungsweise zur Zahnnocke (104) zu wählen und die Zahnnocke (104), die Achse (109, a, b) und das Pedal (21) zu binden, als ob sie ein einziges steifes Teil wären; ein kreisförmiges Zahnrad (103), das auf dem Pedalkasten feststehend befestigt wird; Dieses Zahnrad kann nicht rotieren; Stattdessen rotiert die Kette (105) um dieses befestigte Zahnräder (103) wenn das Tretlager rotiert; jede Zahnnocke (104) hat so viele Zähne wie das kreisförmige Zahnrad (103); Die Zahnnocke (104) und das kreisförmige Zahnrad (103) sind durch eine Zugkette (105) verbunden, die mit einem Elastikseil für die Kette (106, 107) ausgerüstet wird; Die relative Position der Nocke (104) beziehungsweise zur Achse (109) wird so gewählt, daß man den Inklinationswinkel des Pedals (21) bzw; zum Boden während eines vollständigen Tretzyklus einstellen kann.

3. Eine **Tretlagermontage** *(nach dem Patentanspruch* 1) mit :
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse;
- einer **Anlage (****C****)**, die die Bewegung des Pedals (21) wesentlich dieselbe macht wie die einer Schuhunterseite wenn ein Pedal benutzt wird, das nur das Zehengelenk trägt; Die ganze Schuhunterseite berührt immer das Pedal (21) während eines vollständigen Tretzyklus,
Die erwähnte **Anlage (****C****)** der **Tretlagermontage** wird davon geprägt, daß :
- sie ein steifes unregelmäßiges Teil (100) enthaltet, dessen Unterteil an der inneren Seite des Pedals (21) feststehend befestigt wird; Die Krümmung des Oberteils dieses steifen Teils (100) ist so, daß :
i) wenn das Oberteil während eines vollständigen Tretzyklus zwischen den Rädern (102) hin und her geht, kann man den Inklinationswinkel des Pedals (21) einstellen;
ii) beide Seiten des Oberteils dieses steifen Teils (100), das zwischen den Rädern (102) hin und her geht sind von gleicher Breite, sodaß das Teil immer die beide Räder (102) berührt; Während ihrer Rotation tragen sie die Räder (102) an den beiden Seiten des unregelmäßigen gekrümmten Teils (100);
- sie zwei Räder (102) enthaltet, die an jeder Seite des Rahmens des Fahrrads, parallel zu diesem Rahmen befestigt werden; Diese zwei Räder (102) sind durch zwei rechteckige Teile (101) verbunden, die auf jeder Seite der beiden Räder mit zwei Scheibenachsen (W) befestigt werden; Das zwischen dem Rahmen des Fahrrads und den zwei Rädern (102) liegende rechteckige Teil (101) wird mit einer Scheibenachse (Z) durch seinen Mittelpunkt auf dem Rahmen des Fahrrads befestigt; So kann das kombinierte Teil (101 und 102) um die Achse (Z) rotieren, wenn das Tretlager rotiert; Es erlaubt den zwei Rädern (102) immer die beiden Seiten des steifen Teils (100) tangential zu berühren, auf denen sie rotieren.

4. Eine **Tretlagermontage** *(nach dem Patentanspruch 1)* mit:
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse;
- einer **Anlage (****C****),** die die Bewegung des Pedals (21) wesentlich dieselbe macht wie die einer Schuhunterseite wenn ein Pedal benutzt wird, das nur das Zehengelenk trägt; Die ganze Schuhunterseite berührt immer das Pedal (21) während eines vollständigen Tretzyklus;
- einer Scheibenachse (59), die auf einem Wellenbund befestigt wird; Dieser Wellenbund wird um das Oberrohr des Rahmens feststehend befestigt, das das Hinterrad des Fahrrads trägt;
- einer Kurbel (53), die so lang wie die Tretlagerkurbel ist und die immer parallel zur Tretlagerkurbel bewegt; Diese Kurbel (53) rotiert frei um die Scheibenachse (59);
die erwähnte **Anlage (****C****)** der **Tretlagermontage** wird davon geprägt, daß :
- sie ein Horizontalteil (54) enthaltet, das die oberen Spitzen der Kurbel (53) und die Tretlagerkurbel verbindet; ein Teil (55) mit einem bezahnten Loch, das in die Achse (60) inseriert wird, und dessen Zähne ähnlich sind wie die der rotierenden Spitze der Kurbel (53); dieses Teil (55) ist also mit der Kurbel (53) verbunden; die Zähne des Loches (55) erlauben, den Winkel zwischen den Teilen (55 und 53) zu wählen; dieser Winkel bleibt derselbe während der 360 Grade Drehung der Anlage; ein rechtes Teil (57), das an irgendeine Position des Schlitzes des Teils (55) mit einer kleinen Mutter angepasst werden kann; diese Mutter wird durch das gleitende Teil (57) und das Teil (55) befestigt; deswegen kann man die Länge des kombinierten Teils (55 plus 57) wählen; eine Scheibenachse, die feststehend an der Spitze des Teils (57) gefestigt wird, die in das Loch des Teils (56) inseriert wird; ein Teil (58), dessen Länge einstellen werden kann, wie beim Teil (55) in dem Schlitz des Teils (56); damit kann man die Länge des kombinierten Teils (56 plus 58) wählen; eine Scheibenachse, die feststehend an der Spitze des Teils (58) gefestigt wird, die in einem Scheibenloch an der Rückseite der Plattform (21) liegt.

5. Eine **Tretlagermontage** *(nach dem Patentanspruch* 1) mit :
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse;
- einer **Anlage (****C****)**, die die Bewegung des Pedals (21) wesentlich dieselbe macht wie die einer Schuhunterseite wenn ein Pedal benutzt wird, das nur das Zehengelenk trägt; Die ganze Schuhunterseite berührt immer das Pedal (21) während eines vollständigen Tretzyklus;
- einer Scheibenachse (65), die auf einem Wellenbund (64) befestigt wird; Dieser Wellenbund wird um das Oberrohr des Rahmens feststehend befestigt, das das Hinterrad des Fahrrads trägt;
- einer Kurbel (66), die so lang wie die Tretlagerkurbel ist und die immer parallel zur Tretlagerkurbel bewegt; Diese Kurbel (66) rotiert frei um die Scheibenachse (65);
die erwähnte **Anlage (****C****)** der **Tretlagermontage** wird davon geprägt, daß :
- sie eine Zahnnocke (67), also nicht kreisförmig, enthaltet, deren Umfang so lang ist wie der des kreisförmigen Zahnrads (62); beide haben die gleiche Anzahl von Zähne; die erwähnte Nocke wird auf der äußeren Spitze der Achse (65) gelötet; die befestigte Spitze der Kurbel (66) wird auf der äußeren Spitze der Achse (65) gelötet, sodaß die Zahnnocke (67), die Achse (65) und die Kurbel (66) zusammen verbunden sind : wenn die Kurbel (66) rotiert, rotiert auch die Nocke (67) und die Achse (65), die sie verbindet, rotiert frei in dem Oberteil des Wellenbunds (64); ein Zahnrad (62) dessen Mittepunkt derselbe ist, wie der der Scheibenachse; dieses Zahnrad (62) ist zu der Tretlagerkurbel verbunden : das Zahnrad (62) rotiert mit der Tretlagerkurbel; die Zahnnocke (67) und das Zahnrad (62) rotieren dank einer Zugkette (63), die sie verbindet; ein steifer Stift (68), dessen Spitze ein Scheibengelenk (70) enthaltet; dieses Scheibengelenk liegt an der Rückseite des Pedals (21), in der inneren Seite des Pedals; die andere Spitze des steifen Stifts enthaltet ein anderes Scheibengelenk (69), das auf der Spitze der Kurbel (66) liegt.

6. Eine **Tretlagermontage** *(nach dem Patentanspruch 1)* mit :
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse;
- einer **Anlage (****C****)**, die die Bewegung des Pedals (21) wesentlich dieselbe macht wie die einer Schuhunterseite wenn ein Pedal benutzt wird, das nur das Zehengelenk trägt; Die ganze Schuhunterseite berührt immer das Pedal (21) während eines vollständigen Tretzyklus;
- einer Scheibenachse (88), die auf einem Wellenbund befestigt wird; Dieser Wellenbund wird um das Oberrohr des Rahmens feststehend befestigt, das das Hinterrad des Fahrrads trägt;
- einer Kurbel (87), die so lang wie die Tretlagerkurbel ist und die immer parallel zur Tretlagerkurbel bewegt; Diese Kurbel (87) rotiert frei um die Scheibenachse (88);
die erwähnte **Anlage (****C****)** der **Tretlagermontage** wird davon geprägt, daß :
- sie ein steifes Teil (89) enthaltet, das eine Kröpfung in der Form eines verkehrtes **L** enthaltet; Dieses Teil (89) enthaltet 3 Scheibengelenke (90, 91 und 92); eine Kurbel (85) deren Spitze frei um ein Scheibengelenk (86) rotiert; dieses Scheibengelenk (86) berührt die Scheibenachse des Hinterrads des Fahrrads aber es ist nicht mit dieser Scheibenachse verbunden : die Rotation des Hinterrads des Fahrrads hat keinen Einfluss auf die freie Bewegung der Kurbel (85); das Scheibengelenk (90), das an der Spitze des steifen Teils (89) liegt, wird auf einer Scheibenachse gefestigt, die an der bewegenden Spitze der Kurbel (85) liegt; das Scheibengelenk (92), das an der anderen Spitze des steifen Teils (89) liegt wird auf einer Scheibenachse gefestigt, die an der Rückseite des Pedals (21), in der inneren Seite des Pedals (21) liegt; das auf der Kröpfung des Teils (89) liegende Scheibengelenk (91) wird auf einer Scheibenachse gefestigt, die an der bewegenden Spitze der Kurbel (87) liegt; die akkurate dreieckige Position der 3 Scheibengelenke (90, 91 und 92) auf dem steifen Teil (89) und die Länge der Kurbel (85) sind so eingestellt, daß die Kurbel (85) keine vollständige Drehung macht, wenn die Kurbel (87) eine vollständige 360-Grade Drehung macht. Stattdessen geht sie hin und her beziehungsweise zur imaginären Vertikale.

7. **Eine Tretlagermontage** *(nach dem Patentanspruch 1)* mit:
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse;
- einer **Anlage (****C****)**, die die Bewegung des Pedals (21) wesentlich dieselbe macht wie die einer Schuhunterseite wenn ein Pedal benutzt wird, das nur das Zehengelenk trägt; Die ganze Schuhunterseite berührt immer das Pedal (21) während eines vollständigen Tretzyklus;
die erwähnte **Anlage (****C****)** der **Tretlagermontage** wird davon geprägt, daß :
- sie ein Teil (93) enthaltet, das entlang des Oberrohrs des Rahmens feststehend befestigt wird, der das Hinterrad trägt; Dieses Teil (93) enthaltet einen Einschnitt, in dem ein Rad (94) rotieren kann; dieses Rad (94) geht hin und her entlang des Einschnitts, der senkrecht ist; ein steifer Stift (95), dessen Spitze ein Scheibengelenk enthaltet, das auf der Scheibenachse des Rads (94) gefestigt wird; die andere Spitze des steifen Stifts (95) enthaltet ein Scheibengelenk, das auf einer Scheibenachse (99) gefestigt wird; diese Scheibenachse (99) liegt an der Rückseite des Pedals (21), in der inneren Seite des Pedals; anderer steifer Stift (96), dessen Spitze ein Scheibengelenk (97) enthaltet, das auf einer festgelegten Scheibenachse gefestigt wird; diese Scheibenachse liegt vorne am Teil (93), gerade vor dem Einschnitt; die andere mobile Spitze des steifen Stifts (96) enthaltet auch ein Scheibengelenk (98), das auf einer festgelegten Scheibenachse gefestigt wird; diese Scheibenachse liegt gegen den Mittepunkt des steifen Stifts (95).

8. Eine **Tretlagermontage** *(nach dem Patentanspruch 1)* mit:
- einer **Achse** (15), die an einer Pedalkurbel getragen werden muß, und die mit einem Druck des Fußes des Radfahrers in die Bewegungsrichtung der erwähnten Pedalkurbel aktiviert wird; Das Teil des Pedals (21), das das Zehengelenk trägt, liegt wesentlich direkt über der erwähnten Achse;
- einer **Anlage (****C****)**, die die Bewegung des Pedals (21) wesentlich dieselbe macht wie die einer Schuhunterseite wenn ein Pedal benutzt wird, das nur das Zehengelenk trägt Die ganze Schuhunterseite berührt immer das Pedal (21) während eines vollständigen Tretzyklus;
die erwähnte **Anlage (****C****)** der **Tretlagermontage** wird davon geprägt, daß :
- sie einen Wellebund (83) enthaltet, der um das Rohr des Rahmenunterteils feststehend befestigt wird; dieser Wellebund (83) trägt die Nocke (78), und die Fläche der erwährten Nocke (78) enthaltet einen Einschnitt, in dem ein Rad (82) rotiert; die erwährte Nocke (78) wird auf dem Wellebund (83) feststehend befestigt; eine Kurbel (79) enthaltet eine Scheibenachse deren Unterteil (80) am Mittelteil der Nocke (78) befestigt wird; diese Kurbel enthaltet eine Mündung, über der ein Hohlzylinder gelötet wird; in diesem Hohlzylinder schiebt ein steifer Stift (81) frei; der erwährte steife Stift (81) ist an beiden Spitzen in umgekehrten Richtungen gebogen; die Kröpfung des Unterteils des steifen Stifts (81) enthaltet ein Rad (82), das in dem Einschnitt der Fläche der Nocke (78) rotiert; die Kröpfung des Oberteils des steifen Stifts (81) wird in eine Scheibenachse (84) inseriert, die an der Rückseite des Pedals (21), in der inneren Seite des Pedals (21) liegt.

9. Eine **Tretlagermontage** *(nach dem Patentanspruch* 1), die erwähnte **Anlage (****C****)** der **Tretlagermontage** wird davon geprägt, daß :
- sie ein durchbohrtes Teil (39) enthaltet; das erwährte Teil (36) rotiert frei in der Achse (15) der Tretlagerkurbel; das Vertikalteil der steifen Achse (40) in der Form eines L wird in das Loch des erwährten Teils (39) inseriert und kann in diesem Loch hin und her schieben, wenn die Feder (41) während der Extension des Beines komprimiert oder während der Flexion des Beines (360-Grade Tretzyklus) entspannt wird; die erwährte Druckfeder (41) wird entlang der vertikalen Position der steifen Achse (40) in der Form eines L, zwischen dem Verbindungspunkt der Ränder (37 und 38) und des Teils (39) inseriert.

10. Eine **Tretlagermontage** *(nach dem Patentanspruch* 1), die erwähnte **Anlage (****C****)** der **Tretlagermontage** wird davon geprägt, daß :
- sie ein steifes Teil in Form eines verzerrten Z enthaltet, das unter dem Pedal (21) feststehend gefestigt wird; eine rechteckige Grundlage (50), die 2 steifen vertikalen Stifte (s1 und s2) enthaltet, die vorne an der rechteckigen Grundlage (50) feststehend gefestigt werden; zwei andere steife vertikale Stifte (s3 und s4) werden ebenso gegen den Mittepunkt der rechteckigen Grundlage (50) feststehend gefestigt; zwei andere (s5 und s6) werden ebenso an der Rückseite der rechteckigen Grundlage (50) feststehend gefestigt; alle diese steife vertikale Stiftpaare (s1 + s2, s3 + s4, s5 + s6) tragen in ihren Oberspitzen eine horizontale Scheibenachse, auf der 2 Zahnräder (44 und 47 für s1 + s2, 46 und 48 für s3 + s4, 51 und 52 für s5 + s6) feststehend gefestigt werden; alle diese Zahnradpaare sind miteinander verbunden; eine Zugkette (ch47) verbindet die Zahnräder 47 und 52 miteinander, andere Zugkette (ch48) verbindet die Zahnräder 48 und 51 miteinander; das Hinterrad des Fahrrads (49) rotiert *immer in die selbe Richtung* wenn eine der beiden Zahnräder (51 oder 52) rotiert; diese Zahnräder (51 und 52) *rotieren immer in die selbe Richtung;* vier steifen Stifte (t1, t2, t3 und t4) werden vertikal auf der Grundlage (50) feststehend gefestigt; eine steife kubische Form (42), die 4 rechteckigen Löcher und 4 vertikalen Löcher enthaltet; diese Löcher werden in den 4 Ecken vertikal von oben nach unten gebohrt; in diese Löcher werden die 4 steifen Stifte (t1, t2, t3 und t4) inseriert; die steife kubische Form (42) kann entlang den 4 steifen Stiften (t1, t2, t3 und t4) von oben nach unten frei schieben; das Teil in Form eines verzerrten Z, das unter dem Pedal gefestigt wird, geht hin und her (von oben nach unten und vor unten nach oben) in der steifen kubischen Form (42) dank den 2 rechteckigen Löchern, die im oberen und unteren Teil der kubischen Form (42) gebohrt werden; zwei Feder (r1 und r2) werden in die beiden vertikalen Teile des Teils in Form eines verzerrten Z inseriert, das unter dem Pedal gefestigt wird; diese beiden Feder (r1 und r2) werden komprimiert und entspannt wenn das unter dem Pedal gefestigte Teil in Form eines verzerrten Z im oberen Teil der kubischen Form (42) von oben nach unten hin und her geht; ein steifes Teil in Form eines T (43) dessen vertikales Stück Zähne enthaltet, die in die Zähne des Rads (44) inseriert werden können; das horizontale Stück des Teils (43) kann in dem Loch hin und her schieben, das an dem vorderen Rand der kubischen Form (42) liegt; dieses horizontale Stück enthaltet eine Druckfeder (r3), die das vertikale Stück des steifen Teils in Form eines T (43) trägt; dieses vertikale Stück liegt auf dem Rand der kubischen Form (42) wenn die abgeschrägte Spitze des Teils (43) das abgeschrägte Stück des Teils in Form eines verzerrten Z nicht berührt, das unter dem Pedal gefestigt wird; anderes Teil in Form eines T (45), dessen vertikales Teil Zähne enthaltet, in denen die Zähne des Rads (46) inseriert werden können; das horizontale Stücks des Teils (45) kann in dem Loch hin und her schieben, das an dem vorderen Rand der kubischen Form (42) liegt; dieses horizontale Stück enthaltet eine Druckfeder (r4), die das vertikale Stück des steifen Teils in Form eines T (45) trägt; dieses vertikale Stück liegt auf dem Rand der kubischen Form (42) wenn die abgeschrägte Spitze des Teils (45) das abgeschrägte Stück des Teils in Form eines verzerrten Z nicht berührt, das unter dem Pedal gefestigt wird.

## Claims

1. A **bicycle pedal assembly** comprising:
**A)** a **pedal** in the form of a platform having a length to substantially extend beneath the entire foot of the cyclist, thus supporting the ball and the heel of the foot;
**B)** a **shoe;**
**C)** a **mechanism** allowing the control of the angle of inclination of the said **pedal (****A****)** with respect to the ground during a complete pedalling cycle,
the said **pedal (A)** and **shoe (****B****)** being **CHARACTERIZED** as follows :
- the said **pedal (****A****)** includes a rigid part (25), matching the shape of the shoe (28), mounted in a fixed position on the inside of the pedal, the curvature of this rigid part (25) being substantially the same as that of the shoe such that the shoe, once positioned on the pedal (21), is maintained in a fixed position, the heel of the shoe touching the pedal (21), the rigid part (25) being curved upwards at its top extremity , the rigid part (25) not covering the outside of the shoe relative to the bicycle;
- the said **pedal (****A****)** includes an axle (26), being mounted in a fixed position on the inside of the pedal (21) parallel to the pedal surface, said fixed position allowing the insertion of the axle (26) approximately in the middle of the heel of the shoe;
- the said **shoe** (**B**) includes a hole (27), the hole opening being enlarged in the shape of a funnel, the hole (27) being positioned in a manner that, when the shoe (28) is in its final position, that is when the axle (26) is fully inserted in the hole (27) of the shoe (28), the shoe's heel is in contact with the pedal.

2. A **bicycle pedal assembly** *according to claim* 1, comprising:
- a **pedal axle** (15) to be fixed to a bicycle crank arm and to be rotated by the foot of a cyclist in a direction of the crank's rotation; the portion of the pedal (21) which supports the ball of the foot being positioned substantially directly above said pedal axle (15);
- a **mechanism (****C****)** which allows the movement of the pedal (21) to be identical to the movement of the underside of a shoe when a pedal which supports only the ball of the foot is used, the whole of the shoe's underside being continuously in contact with the pedal (21) during a complete pedalling cycle,
the said **mechanism (****C****)** of the **bicycle pedal assembly** being **CHARACTERIZED** as follows:
- the **pedal axle** (15) includes a circular part (b) rotating freely in a circular hole at the extremity of the crank arm which contains roller cylinders (108 b), the square part of the axle (109) being inserted in the square hole (109) at the front and under the pedal (21), the said square hole having the same dimensions than the square part (109) of the axle, this square hole in the pedal being drilled parallel to the surface of the pedal and is integral with the pedal (21); the grooved part of the axle (109 a) is inserted in the grooved hole of the toothed cam (104 a), the grooved part of the axle and the grooved hole being of the same dimensions, the grooves allowing to choose the angle of inclination of the pedal (21) with respect to the toothed cam (104) and to make the toothed cam(104), the axle (109, a, b) and the pedal (21) being integral with each other as if a single rigid part; a toothed circular wheel (103) is mounted in a fixed position to the crankset casing, this wheel cannot rotate: it is the chain (105) which goes around this wheel (103) when the crankset rotates; a cam (104) having the same number of teeth as the toothed circular wheel (103), the cam and the toothed circular wheel being tied together by a traction chain (105) equipped with a spring driven chain tensor (106, 107), the position of the cam (104) relative to the axle (109) is chosen to obtain the desired inclination of the pedal (21) with respect to the ground during a complete rotation of the crankset.

3. A **bicycle pedal assembly** *according to claim 1*, comprising:
- a pedal axle (15) to be fixed to a bicycle crank arm and to be rotated by the foot of a cyclist in a direction of the crank's rotation; la portion of the pedal (21) which supports the ball of the foot being positioned substantially directly above said pedal axle;
- a **mechanism (****C****)** which allows the movement of the pedal (21) to be identical to the movement of the underside of a shoe when a pedal which supports only the ball of the foot is used, the whole of the shoe's underside being continuously in contact with the pedal (21) during a complete pedalling cycle,
the said **mechanism (****C****)** of the **bicycle pedal assembly** being **CHARACTERIZED** as follows:
- it includes a rigid part of irregular shape (100), the lower portion of this rigid part (100) being mounted on the inside of the pedal (21) in a fixed position; the upper portion of the rigid part (100) being curved in a manner that:
i)when the upper portion goes back and forth between wheels (102) during a complete rotation of the crankset, we obtain the desired angle of inclination of the pedal (21);
ii)the upper portion of this part (100) which goes back and forth between the wheels (102) has a uniform width in order to continuously touch each of the 2 wheels (102) which press against the two borders of the irregular curved rigid upper part (100);
- it includes two wheels (102) mounted on each side of the bike's frame in a plane parallel to the frame, the two wheels being tied together by two rectangular parts (101) located on each side of the two wheels thanks to two axis of rotation (W), the rectangular part (101) located between the bike's frame tube and the two wheels (102), being mounted by its centre to the bike's frame tube thanks to an axis of rotation (Z), thus allowing the combined part (101 and 102) to rotate around the axis (Z) when the crankset rotates, permitting to keep the contact in a tangent between the two wheels and the two rims of rigid part (100) on which wheels (102) rotate.

4. A **bicycle pedal assembly** *according to claim 1*, comprising:
- a pedal axle (15) to be fixed to a bicycle crank arm and to be rotated by a foot of a cyclist in a direction of the crank's rotation; la portion of the pedal (21) which supports the ball of the foot being positioned substantially directly above said pedal axle;
- a **mechanism (****C****)** that allows the movement of the pedal (21) to be identical to the movement of the underside of a shoe when a pedal which supports only the ball of the foot is used, the whole of the shoe's underside being continuously in contact with the pedal (21) during a complete pedalling cycle,
- an axis of rotation (59) mounted on a collar installed in a fixed position around the lower horizontal tube of the of the frame supporting the rear wheel of the bicycle;
- a crank (53) of the same length as the crankset's crank always moving parallel to the pedal crank , this crank (53) rotating freely on the axis of rotation (59);
the said **mechanism (****C****)** of the **bicycle pedal assembly** being **CHARACTERIZED** as follows:
- it includes an horizontal part (54) tying together the top extremities of the crank (53) and the crankset's crank; a part (55) having a hole with teeth which are inserted in the axis (60) having similar teeth at the rotating extremity of the crank (53); this part (55) is therefore integral with the crank (53) and the toothed hole (55) allows the choice of the angle between parts (55 and 53), this angle remaining constant during the mechanism's 360 degree rotation; a straight part (57) which can be adjusted to the desired position in the slot of part (55) using a small screw which traverses the sliding element (57) and part (55), thus allowing to choose the length of the combined part (55 plus 57); a fixed axis of rotation at the extremity of part (57) which is inserted in the hole of part (56); a part (58) which can adjusted to the desired length, in a fashion similar to part (55), in the slot of part (56), thus allowing to choose the length of the combined part (56 plus 58); a fixed axis of rotation at the extremity of part (58) which is inserted in a fixed rotation hole located at the rear of the pedal (21).

5. A **bicycle pedal assembly** *according to claim 1,* comprising:
- a pedal axle (15) to be fixed to a bicycle crank arm and to be rotated by a foot of a cyclist in a direction of the crank's rotation; the portion of the pedal (21) which supports the ball of the foot being positioned substantially directly above said pedal axle;
- a **mechanism (****C****)** that allows the movement of the pedal (21) to be identical to the movement of the underside of a shoe when a pedal which supports only the ball of the foot is used, the whole of the shoe's underside being continuously in contact with the pedal (21) during a complete pedalling cycle;
- an axis of rotation (65) mounted on a collar (64) installed in a fixed position around the lower horizontal tube of the of the frame supporting the rear wheel of the bicycle;
- a crank (66) of the same length as the crankset's crank always moving parallel to the pedal crank , this crank (66) rotating freely on the axis of rotation (65);
the said **mechanism (****C****)** of the **bicycle pedal assembly** being **CHARACTERIZED** as follows:
- it includes a toothed cam (67), therefore non-circular, which is of the same circumference as that of the circular toothed wheel (62), both having the same number of teeth, the said cam (67) being soldered on the inside extremity of the axle (65), the fixed extremity of the crank (66) being soldered to the outside extremity of axle (65) in such a way that the cam (67), the axle (65) and the crank (66) are integral with each other: when the crank (66) rotates, the cam (67) rotates with the crank (66), the axle (65) which ties them rotating freely at the top of the collar (64); a toothed wheel (62) with its centre coinciding with the axis of rotation of the crankset, and which is integral with the crankset's crank, the wheel (62) rotating with the crankset's crank ; the toothed cam (67) and the toothed wheel (62) are put into rotation by a traction chain (63) which ties them together; a rigid rod (68) one extremity of which has a rotation joint (70) located at the rear and on the inside of the pedal(21) and the other extremity having another rotation joint (69) located at the moving extremity of the crank (66).

6. A **bicycle pedal assembly** *according to claim* 1, comprising:
- a pedal axle (15) to be fixed to a bicycle crank arm and to be rotated by a foot of a cyclist in a direction of the crank's rotation; the portion of the pedal (21) which supports the ball of the foot being positioned substantially directly above said pedal axle;
- a **mechanism** (**C**)that allows the movement of the pedal (21) to be identical to the movement of the underside of a shoe when a pedal which supports only the ball of the foot is used, the whole of the shoe's underside being continuously in contact with the pedal (21) during a complete pedalling cycle;
- an axis of rotation (88) mounted on a collar installed in a fixed position around the lower horizontal tube of the frame supporting the rear wheel of the bicycle;
- a crank (87) of the same length as the crankset's crank always moving parallel to the pedal crank, this crank (87) rotating freely on the axis of rotation (88);
the said **mechanism (****C****)** of the **bicycle pedal assembly** being **CHARACTERIZED** as follows:
- it includes a rigid part (89) having an elbow in the shape of an inverted L, the said rigid part (89) comprised of 3 rotation joints (90, 91 and 92); a crank (85), one extremity of which rotates freely around one rotation joint (86) coinciding with the axis of the bike's rear wheel, but independently of this axis of rotation of the bike's rear wheel, the rotation of the bike's rear wheel having no influence on the crank's (85) free movement, the rotation joint (90) located at the extremity of rigid part (89) is mounted on an axis of rotation located at the moving extremity of the crank (85), the rotation joint (92) located at the other extremity of rigid part (89) is mounted on an axis of rotation located at the rear of the pedal (21) on the inside of the pedal (21), the rotation joint (91) located on the elbow of part (89) is mounted on an axis of rotation located on the moving extremity of the crank (87), the exact triangular position of these 3 rotation joints (90, 91 and 92) on rigid part (89) and the crank's length (85) are chosen in a manner that, when the crank (87) makes a complete 360 degree rotation, the crank (85) does not make a complete rotation but rather goes back and forth with respect to the imaginary vertical line.

7. A **bicycle pedal assembly** *according to claim* 1, comprising:
- a pedal axle (15) to be fixed to a bicycle crank arm and to be rotated by a foot of a cyclist in a direction of the crank's rotation; the portion of the pedal (21) which supports the ball of the foot being positioned substantially directly above said pedal axle;
- a **mechanism (****C****)** that allows the movement of the pedal (21) to be identical to the movement of the underside of a shoe when a pedal which supports only the ball of the foot is used, the whole of the shoe's underside being continuously in contact with the pedal (21) during a complete pedalling cycle;
the said **mechanism (****C****)** of the **bicycle pedal assembly** being **CHARACTERIZED** as follows:
- it includes a part (93) mounted in a fixed position along the lower frame tube supporting the rear wheel, this part (93) having a groove inside which a wheel (94) can rotate while going back and forth along the groove, the said groove being straight; a rigid rod (95), one extremity of this rigid rod (95) bearing a rotation joint mounted on the axis of rotation of the wheel (94), the other extremity of the rigid rod (95) bearing a rotation joint mounted on an axis of rotation (99) located at the rear of the pedal (21) on the inside; another rigid rod (96) one extremity of which bears a rotation joint (97) mounted on an axis of rotation located at the front of part (93) just before the beginning of the groove, the other mobile extremity of the rigid rod (96) also bearing a rotation joint (98) mounted on an axis of rotation located in a fixed position on the rigid rod (95) approximately at the centre of the rigid rod (95).

8. A **bicycle pedal assembly** *according to claim 1*, comprising:
- a pedal axle (15) to be fixed to a bicycle crank arm and to be rotated by a foot of a cyclist in a direction of the crank's rotation; the portion of the pedal (21) which supports the ball of the foot being positioned substantially directly above said pedal axle;
- a **mechanism (****C****)** that allows the movement of the pedal (21) to be identical to the movement of the underside of a shoe when a pedal which supports only the ball of the foot is used, the whole of the shoe's underside being continuously in contact with the pedal (21) during a complete pedalling cycle;
the said **mechanism (****C****)** of the **bicycle pedal assembly** being **CHARACTERIZED** as follows:
- it includes a collar (83) wrapped around the lower frame tube in a fixed position, this collar (83) supporting the cam (78), said cam (78) bearing a groove along its circumference inside which rotates a wheel (82), said cam (78) being mounted in a fixed position on the collar (83), a crank (79) having an axis of rotation at the bottom (80) mounted on the middle part of the cam (78) , this crank having an opening at the top of which a hollow cylinder is soldered; in the inside of this hollow cylinder slides freely a rigid rod (81), the said rigid rod (81) being elbowed at both extremities in opposite direction, the lower elbow of the rigid rod (81) bearing a wheel (82) which rotates in the groove along the cam's circumference (78), the upper elbow of the rigid rod (81) being inserted in an axis of rotation (84) located at the rear and on the inside of the pedal (21).

9. A **bicycle pedal assembly** *according to claim 1*, the said **mechanism (****C****)** of the **bicycle pedal assembly** being **CHARACTERIZED** as follows:
- a part (39) with a hole, the said part (39) rotating freely in the axis (15) of the extremity of the crankset's crank, the vertical portion of the L-shaped rigid axle (40) being inserted in the hole of the said part (39), and being able to slide back and forth in the hole of the part (39), according to whether the spring (41) is compressed during the extension of the leg or it releases during the flexion of the leg of the 360 degree pedalling cycle; a compression spring (41) inserted along the vertical portion of the L-shaped rigid axle (40), between the intersection of the sides (37, 38) and the part (39).

10. **A bicycle pedal assembly** *according to claim 1*, the said **mechanism (****C****)** of the **bicycle pedal assembly** being **CHARACTERIZED** as follows:
- It includes an uneven Z-shaped rigid part mounted in a fixed position under the pedal(21); a rectangular base (50), the said rectangular base having 2 vertical rigid rods (s1 and s2) mounted in a fixed position at the front of the rectangular base (50), two other rigid vertical rods (s3 and s4) being mounted in a similar fashion approximately in the middle of the base (50) , and also two more (s5 and s6) again being mounted in a similar fashion at the rear of the rectangular base (50), each of these pairs of rods (s1 + s2, s3 + s4, s5 + s6) bearing at their top extremity a horizontal axis of rotation on which are mounted 2 gear wheels in fixed positions (44 and 47 for s1 + s2, 46 and 48 for s3 + s4, 51 and 52 for s5 + s6), each of these pairs of gear wheels being integral with each other, a traction chain (ch47) tying the gear wheels (47 and 52) together, another traction chain (ch48) tying together the gear wheels (48 and 51), the rear wheel of the bike (49) rotating *always in the same direction* when one or the other of the two gear wheels (51 or 52) rotates, the gear wheels (51 and 52) always rotating *in the same direction;* four steel rods (t1, t2, t3 and t4) mounted vertically on the base (50) in a fixed position; a rigid cubic form (42), the said cubic form having 4 rectangular holes together with 4 vertical holes on the 4 corners from top to bottom vertically, in these 4 holes are inserted the 4 steel rods (t1, t2, t3 and t4), the rigid cubic form (42) being able to slide freely up and down along the four steel rods (t1, t2, t3 and t4), the uneven Z-shaped rigid part going back and forth up and down inside the rigid cubic form (42) thanks to the 2 rectangular holes drilled at the top and bottom of the rigid cubic form (42), two springs (r1 and r2) being inserted in the two vertical portions of the uneven Z-shaped part attached under the platform, these two springs (r1 and r2) being alternatively compressed and released as the uneven Z-shaped part fixed under the platform goes back and forth up and down inside the rigid cubic form (42); a T-shaped part (43) with its vertical portion bearing gear teeth which can be inserted in those of the wheel (44), the horizontal portion of the part (43) being able to slide back and forth in the hole on the front side of the cubic form (42) and bears a compression spring (r3) which maintains the vertical portion of rigid T-shaped part (43) pressing against the side of the cubic form (42) when the inclined portion of this part (43) is not in contact with the inclined portion of the uneven Z-shaped part attached under the platform; another T-shaped part (45) with its vertical portion bearing gear teeth which can be inserted in those of the wheel (46), the horizontal portion of the part (45) being able to slide back and forth in the hole on the rear side of the rigid cubic form (42) and bears a compression spring (r4) which maintains the vertical portion of the rigid T-shaped part (45) pressing against the side of the cubic form (42) when the inclined portion of this part (45) is not in contact with the inclined portion of the uneven Z-shaped part attached under the platform.
